(19) Europäisches Patentamt
European Patent Office
Office européen des brevets

(11) **EP 4 546 850 A1**

(12) **EUROPEAN PATENT APPLICATION**
published in accordance with Art. 153(4) EPC

(43) Date of publication:
**30.04.2025 Bulletin 2025/18**

(21) Application number: **23838820.1**

(22) Date of filing: **05.07.2023**

(51) International Patent Classification (IPC):
*H04W 24/02* (2009.01)

(52) Cooperative Patent Classification (CPC):
**H04L 5/00; H04W 24/02; H04W 24/08**

(86) International application number:
**PCT/CN2023/105906**

(87) International publication number:
**WO 2024/012328 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 CN 202210836784**
**28.10.2022 CN 202211340675**

(71) Applicant: **Huawei Technologies Co., Ltd.**
**Shenzhen, Guangdong 518129 (CN)**

(72) Inventors:
- **HE, Hongli**
  **Shenzhen, Guangdong 518129 (CN)**
- **JIAO, Ruicheng**
  **Shenzhen, Guangdong 518129 (CN)**
- **LI, Xueru**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **SIGNAL SENDING METHOD AND APPARATUS**

(57) This application provides a signal sending method and an apparatus, to resolve a problem that whether a beam fails cannot be accurately determined, thereby improving accuracy of beam failure detection. The signal sending method and the apparatus may be used in a 5G communication system, a 6G communication system, and a future communication system. The method includes: A first device determines N reference signal resources. The first device sends N reference signals to a second device on the N reference signal resources. A first sidelink resource pool is configured for the first device. The first sidelink resource pool includes K reference signal resources. The K reference signal resources are K periodic reference signal resources. The K reference signal resources include the N reference signal resources, where N is an integer greater than 0, and K is an integer greater than or equal to N.

First device    Second device

S301: Determine N reference signal resources in K reference signal resources

S307: Third indication information

S308: Send N reference signals on the N reference signal resources

FIG. 3a

**Description**

This application claims priorities to Chinese Patent Application No. 202210836784.6, filed with the China National Intellectual Property Administration on July 15, 2022 and entitled "SIGNAL SENDING METHOD AND APPARATUS", and to Chinese Patent Application No. 202211340675.1, filed with the China National Intellectual Property Administration on October 28, 2022 and entitled "SIGNAL SENDING METHOD AND APPARATUS", both of which are incorporated herein by reference in their entireties.

**TECHNICAL FIELD**

This application relates to the communication field, and in particular, to a signal sending method and an apparatus.

**BACKGROUND**

In a wireless sidelink (sidelink, SL) system, terminal devices (for example, a sending device and a receiving device) may communicate with each other through a sidelink. In highfrequency communication (for example, millimeter-wave communication), a terminal device needs to mitigate channel fading at a high frequency through beam-based sending and/or receiving. The sending device and the receiving device usually need to continuously detect beams by sending and receiving reference signals, to determine whether a beam fails, for example, whether a transmit beam and a receive beam are blocked. In a sidelink mode 2 (sidelink mode 2), the terminal device determines, based on a random selection mechanism or a sensing-based resource selection mechanism, a time-frequency resource corresponding to data transmission and a time-frequency resource corresponding to a reference signal. In addition, the terminal device sends control information on the determined time-frequency resource to indicate the reference signal, so that the receiving device receives the reference signal based on the indication of the control information.

However, it cannot be ensured that the sending device can send the reference signal and the control information on the originally determined time-frequency resource used to send the reference signal. For example, the time-frequency resource is preempted by transmission of another service with a higher priority. In this case, if the receiving device still detects the control information and the reference signal on the corresponding time-frequency resource by using a receive beam, and the receiving device does not detect the control information on the corresponding time-frequency resource by using the receive beam, the receiving device cannot detect the reference signal based on the indication of the control information, and therefore cannot determine whether this is because the beam fails or because the sending device does not send the control information and the reference signal after the resource is preempted. Consequently, the receiving device cannot accurately determine whether the beam fails, resulting in inaccurate beam failure detection.

**SUMMARY**

Embodiments of this application provide a signal sending method and an apparatus, to resolve a problem that whether a beam fails cannot be accurately determined, thereby improving accuracy of beam failure detection.

To achieve the foregoing objective, the following technical solutions are used in this application.

According to a first aspect, a signal sending method is provided. The method includes: A first device determines N reference signal resources. The first device sends N reference signals to a second device on the N reference signal resources. A first sidelink resource pool is configured for the first device. The first sidelink resource pool includes K reference signal resources. The K reference signal resources are K periodic reference signal resources. The K reference signal resources include the N reference signal resources, where N is an integer greater than 0, and K is an integer greater than or equal to N.

According to the method provided in the first aspect, the first device determines the N reference signal resources. The K reference signal resources are the K periodic reference signal resources. The N reference signal resources are N of the K reference signal resources in the first sidelink resource pool. Because the K reference signal resources are the K periodic reference signal resources, and the K reference signal resources include the N reference signal resources, the N reference signal resources are N periodic reference signal resources. The first device sends N periodic reference signals to the second device on the N reference signal resources. In this way, the first device sends the N periodic reference signals to the second device on the N reference signal resources, and the second device receives, on the N reference signal resources, the N reference signals sent by the first device. The N reference signal resources are determined. Therefore, the second device can determine a state of a channel between the second device and the first device based on detection results on the N reference signal resources, for example, determine whether a beam fails.

In addition, because the N reference signal resources are determined reference signal resources in the first sidelink resource pool, when sending the N periodic reference signals to the second device on the N reference signal resources, the first device does not need to send additional control information to indicate the reference signals, to reduce resource overheads.

Optionally, the N reference signal resources are N reference signal resources that are not occupied (or can be used).

In a possible design manner, the N reference signal resources are used for beam failure detection, the N reference signal resources are in one-to-one correspondence with N first spatial domain parameters, and the N first spatial domain parameters are spatial domain parameters on which the first device is to perform beam failure detection. In this case, the first device sends a reference signal on a reference signal resource by using a first spatial domain parameter corresponding to the reference signal resource, to perform beam failure detection.

In a possible design manner, that a first device determines N reference signal resources includes: The first device determines the N reference signal resources based on first sensing information, first indication information, and/or second indication information. The first sensing information is obtained by the first device in a first manner, and the first manner includes receiving and measuring a reference signal on a part or all of the K reference signal resources. The first indication information indicates at least one reference signal resource recommended by the second device in the K reference signal resources, or the first indication information indicates at least one reference signal resource not recommended by the second device in the K reference signal resources. The second indication information indicates at least one reference signal resource occupied by a third device in the K reference signal resources.

For example, the first device may sense the K reference signal resources, to determine whether the K reference signal resources are occupied. Alternatively, the first device may receive the first indication information sent by the second device, to determine the resource recommended or not recommended by the second device. The second device may sense the K reference signal resources to determine the first indication information. Alternatively, the first device may receive the second indication information sent by another device, for example, the third device, for which the first sidelink resource pool is configured, to exclude a reference signal resource that is occupied by the another device and that is indicated in the second indication information. The first device may comprehensively determine, based on one or more types of the foregoing information, whether the K reference signal resources are occupied, to finally determine N unoccupied reference signal resources as the foregoing N reference signal resources.

For another example, the second device senses the K reference signal resources to determine whether the K reference signal resources are occupied, to determine N unoccupied reference signal resources in the K reference signal resources; and sends the first indication information to the first device to indicate the N reference signal resources determined by the second device. In other words, the N reference signal resources recommended by the second device are N reference signal resources finally used by the first device. Finally, the first device determines the N reference signal resources based on the first indication information sent by the second device.

Optionally, the first sensing information includes a received power corresponding to a part or all of the K reference signal resources, and the part or all of the K reference signal resources include a second reference signal resource. If the received power on the second reference signal resource is greater than or equal to a preset threshold, it is determined that the second reference signal resource is occupied. In other words, the N reference signal resources do not include the second reference signal resource.

Optionally, if the received power on the second reference signal resource is equal to the preset threshold, it is determined that the second reference signal resource is occupied, or it is determined that the second reference signal resource is not occupied. This is not limited.

In a possible design manner, that the first device determines the N reference signal resources based on first sensing information, first indication information, and/or second indication information includes: The first device determines N reference signal resource sets based on the first sensing information, the first indication information, and/or the second indication information. The first device selects one reference signal resource from each of the N reference signal resource sets. The N reference signal resource sets are in one-to-one correspondence with the N first spatial domain parameters, and each of the N reference signal resource sets includes at least one of the K reference signal resources. Optionally, each reference signal resource in each reference signal resource set is not occupied when a first spatial domain parameter corresponding to the reference signal resource set is used, and is included in the K reference signal resources.

Optionally, because transmit beams and receive beams between a sending device and a receiving device are usually in one-to-one correspondence, the N first spatial domain parameters of the first device may respectively correspond to N second spatial domain parameters of the second device, to form N beam pair links (beam pair links, BPLs). Therefore, that the N reference signal resource sets correspond to the N first spatial domain parameters may also be understood as that the N reference signal resource sets correspond to the N second spatial domain parameters, or the N reference signal resource sets correspond to the N BPLs.

In this application, a corresponding unoccupied reference signal resource is determined for a beam direction corresponding to each first spatial domain parameter and/or second spatial domain parameter. Then, N different reference signal resources are selected from all the unoccupied reference signal resources (N reference signal resource sets). The unoccupied reference signal resource may be determined for each beam direction, to improve accuracy of determining the unoccupied reference signal resource and space division utilization efficiency of the reference signal resource, and ensure that reference signal resources selected by devices do not interfere with each other.

Optionally, that the first device determines N reference signal resource sets based on first sensing information includes: The first device receives and measures a reference signal on a part or all of the K reference signal resources by using one of the N first spatial domain parameters, to obtain the received power corresponding to the part or all of the K reference signal resources. If the received power on the second reference signal resource is greater than or equal to the preset threshold, it is determined that the second reference signal resource is occupied. In other words, a first reference signal resource set does not include the second reference signal resource.

The part or all of the K reference signal resources include the second reference signal resource, and the received power corresponding to the part or all of the K reference signal resources includes the received power on the second reference signal resource. The first reference signal resource set is a reference signal resource set corresponding to one of the N first spatial domain parameters. The first reference signal resource set is one of the N reference signal resource sets.

In a possible design manner, the first indication information further indicates a first spatial domain parameter associated with each of the at least one reference signal resource recommended by the second device, or the first indication information further indicates a first spatial domain parameter associated with each of the at least one reference signal resource not recommended by the second device.

Optionally, the N first spatial domain parameters of the first device may respectively correspond to the N second spatial domain parameters of the second device, to form the N beam pair links BPLs. The first indication information further indicates the first spatial domain parameter, a second spatial domain parameter, or a BPL associated with each of the at least one reference signal resource recommended by the second device, or the first indication information further indicates the first spatial domain parameter, a second spatial domain parameter, or a BPL associated with each of the at least one reference signal resource not recommended by the second device.

Optionally, the first indication information includes a correspondence between the at least one reference signal resource recommended by the second device and the first spatial domain parameter, the second spatial domain parameter, or the BPL, and an identifier of the at least one reference signal resource recommended by the second device. Alternatively, the first indication information includes a correspondence between the at least one reference signal resource not recommended by the second device and the first spatial domain parameter, the second spatial domain parameter, or the BPL, and an identifier of the at least one reference signal resource not recommended by the second device. The first device determines, based on the at least one reference signal resource recommended by the second device and the first spatial domain parameter corresponding to each of the at least one reference signal resource recommended by the second device, that the reference signal resource set corresponding to the first spatial domain parameter includes the at least one reference signal resource recommended by the second device. The first device determines, based on the at least one reference signal resource not recommended by the second device and the first spatial domain parameter corresponding to each of the at least one reference signal resource not recommended by the second device, to remove, from the reference signal resource set corresponding to the first spatial domain parameter, the at least one reference signal resource not recommended by the second device.

In a possible design manner, the method provided in the first aspect may further include: The first device receives the second indication information by using one of the N first spatial domain parameters. The second indication information is used to determine a reference signal resource set corresponding to the first spatial domain parameter used to receive the second indication information.

In a possible design manner, the receiving and measuring a reference signal on a part or all of the K reference signal resources includes: receiving and measuring the reference signal on the part or all of the K reference signal resources by using the N first spatial domain parameters. The N first spatial domain receive parameters are in one-to-one correspondence with the N first spatial domain parameters. In a receiving scenario of the first device, the first spatial domain parameters may be replaced with the first spatial domain receive parameters. The reference signal may be received and measured on the part or all of the K reference signal resources by using the N first spatial domain receive parameters.

In a possible design manner, the receiving and measuring the reference signal on the part or all of the K reference signal resources by using the N first spatial domain parameters includes: receiving and measuring the reference signal on the part or all of the K reference signal resources in a first resource window by using the N first spatial domain parameters. The first resource window includes M reference signal resource periodicities, where M is an integer greater than or equal to 1. Each of the M reference signal resource periodicities includes at least one first time unit. One of the at least one first time unit is a time unit in which the K reference signal resources are located. Each of the M reference signal resource periodicities corresponds to at least one of the N first spatial domain parameters.

In this case, in each reference signal resource periodicity, the first device may sense the part or all of the K reference signal resources by using different first spatial domain parameters, to finally determine whether the K reference signal resources are occupied when the N first spatial domain parameters are used.

In a possible design manner, a correspondence between each of the M reference signal resource periodicities and the at least one first spatial domain parameter is determined based on a quantity of spatial domain parameters that are capable of being simultaneously used when the first device receives a signal.

In a possible design manner, an $X^{th}$ reference signal resource periodicity in the M reference signal resource periodicities corresponds to $( Mod ( X - 1 + C, \lceil \frac{N}{V_1} \rceil ) \times V_1 + 1 )^{th}$ to $( \min ( ( Mod ( X - 1 + C, \lceil \frac{N}{V_1} \rceil ) + 1 ) \times V_1, N ) )^{th}$ first spatial domain parameters in the N first spatial domain parameters. Alternatively, an $X^{th}$ reference signal resource periodicity in the M reference signal resource periodicities corresponds to $( Mod((X - 1) \times V_1 + 1 + C, N) )^{th}$ to $(Mod((X - 1) \times V_1 + V_1 + C, N))^{th}$ first spatial domain parameters in the N first spatial domain parameters. The $X^{th}$ reference signal resource periodicity is an $X^{th}$ reference signal resource periodicity after a start moment of a frame 0 closest to a current reference signal periodicity, the mathematical symbol mod represents a modulo operation, the mathematical symbol $\lceil \rceil$ represents rounding up, $V_1$ is the quantity of spatial domain parameters that are capable of being simultaneously used when the first device receives the signal, and C is a configured or pre-configured integer.

In this case, in the $X^{th}$ reference signal resource periodicity, the reference signal may be received and measured on the part or all of the K reference signal resources by using the $( Mod ( X - 1 + C, \lceil \frac{N}{V_1} \rceil ) \times V_1 + 1 )^{th}$ to $( \min ( ( Mod ( X - 1 + C, \lceil \frac{N}{V_1} \rceil ) + 1 ) \times V_1, N ) )^{th}$ first spatial domain parameters. Alternatively, in the $X^{th}$ reference signal resource periodicity, the reference signal may be received and measured on the part or all of the K reference signal resources by using the $(Mod((X - 1) \times V_1 + 1 + C, N))^{th}$ to $(Mod((X - 1) \times V_1 + V_1 + C, N))^{th}$ first spatial domain parameters in the N first spatial domain parameters. Specific first spatial domain parameters used to receive and measure reference signals in specific reference signal resource periodicities are specified, so that whether corresponding reference signal resources are occupied can be measured when the N first spatial domain parameters are used.

In a possible design manner, before the first device sends the N reference signals to the second device on the N reference signal resources, the method provided in the first aspect further includes: The first device sends third indication information to the second device. The third indication information indicates the N reference signal resources.

To be specific, the first device may notify the second device of the N unoccupied reference signal resources determined by the first device.

In a possible design manner, the third indication information further indicates the N first spatial domain parameters corresponding to the N reference signal resources.

In this case, after receiving the third indication information, the second device may perform beam failure detection on a second spatial domain parameter by using a reference signal resource corresponding to the second spatial domain parameter.

Optionally, the N first spatial domain parameters of the first device may respectively correspond to the N second spatial domain parameters of the second device, to form the N beam pair links BPLs. The third indication information may further indicate the N second spatial domain parameters or the N BPLs corresponding to the N reference signal resources.

In a possible design manner, the third indication information includes identifiers of the N reference signal resources and identifiers of N first reference signal resources, and each of the N reference signal resources and one of the N first reference signal resources have a type-D quasi co-location relationship. Alternatively, the third indication information includes identifiers of the N reference signal resources and the N first spatial domain parameters, the N second spatial domain parameters, or identifiers of the N BPLs. The N reference signal resources are in one-to-one correspondence with the N first spatial domain parameters. The N reference signal resources are in one-to-one correspondence with the N second spatial domain parameters. The N reference signal resources are in one-to-one correspondence with the N BPLs.

In a possible design manner, the K reference signal resources are determined based on first configuration information, and the first configuration information includes time-domain position information of the K reference signal resources and frequency-domain position information of the K reference signal resources.

In a possible design manner, the time-domain position information of the K reference signal resources includes a first offset and a periodicity length, the first offset and the periodicity length are used to determine a first time unit in each reference signal resource periodicity, and the first time unit is a time unit in which the K reference signal resources are located.

In a possible design manner, the K reference signal resources in the first time unit occupy all frequency-domain units in the first sidelink resource pool.

In a possible design manner, the frequency-domain position information of the K reference signal resources includes first frequency-domain density information or first quantity information, the first frequency-domain density information indicates density of the K reference signal resources in frequency domain, and the first quantity information indicates a quantity of reference signals corresponding to each time subunit in the first sidelink resource pool.

In a possible design manner, the frequency-domain position information of the K reference signal resources includes first port information or second quantity information, the first port information indicates a quantity of contiguous frequency-domain subunits occupied by any one of the K reference signal resources in one time-domain subunit, and the second quantity information indicates a quantity of reference signals corresponding to one frequency-domain unit in one time subunit. For example, the frequency-domain unit includes a resource block (resource block, RB).

In a possible design manner, the time-domain position information of the K reference signal resources includes second port information or third quantity information, the second port information indicates a quantity of contiguous time-domain subunits occupied by any one of the K reference signal resources in one frequency-domain subunit, and the third quantity information indicates a quantity of reference signals corresponding to one frequency-domain subunit in one time unit. For example, the frequency-domain subunit includes a subcarrier.

In a possible design manner, a maximum of U reference signal resources in the N reference signal resources occupy a same symbol, and U is determined based on the quantity of spatial domain parameters that are capable of being simultaneously used when the first device receives the signal and a quantity of spatial domain parameters that are capable of being simultaneously used when the second device receives a signal.

In a possible design manner, the method provided in the first aspect further includes: The first device determines, based on the first configuration information, identifiers respectively corresponding to the K reference signal resources.

In a possible design manner, the first configuration information is pre-configured, or is received by the first device from a network device.

According to a second aspect, a signal receiving method is provided. The method includes: A second device determines N reference signal resources. The second device receives N reference signals from a first device on the N reference signal resources. A first sidelink resource pool is configured for the second device. The first sidelink resource pool includes K reference signal resources. The K reference signal resources are K periodic reference signal resources. The K reference signal resources include the N reference signal resources, where N is an integer greater than 0, and K is an integer greater than or equal to N.

In a possible design manner, the N reference signal resources are used for beam failure detection, the N reference signal resources are in one-to-one correspondence with N second spatial domain parameters, and the N second spatial domain parameters are spatial domain parameters on which the second device is to perform beam failure detection.

In a possible design manner, that a second device determines N reference signal resources includes: The second device receives third indication information from the first device. The third indication information indicates the N reference signal resources.

In a possible design manner, the third indication information further indicates N first spatial domain parameters corresponding to the N reference signal resources, and the N first spatial domain parameters are in one-to-one correspondence with the N second spatial domain parameters.

Optionally, the N first spatial domain parameters of the first device may respectively correspond to the N second spatial domain parameters of the second device, to form N beam pair links. The third indication information may further indicate the N second spatial domain parameters or the N BPLs corresponding to the N reference signal resources.

In a possible design manner, the third indication information includes identifiers of the N reference signal resources and identifiers of N first reference signal resources, and each of the N reference signal resources and one of the N first reference signal resources have a type-D quasi co-location relationship. Alternatively, the third indication information includes identifiers of the N reference signal resources and identifiers of the N first spatial domain parameters, the N second spatial domain parameters, or the N BPLs. The N reference signal resources are in one-to-one correspondence with the N first spatial domain parameters. The N reference signal resources are in one-to-one correspondence with the N second spatial domain parameters. The N reference signal resources are in one-to-one correspondence with the N BPLs.

In a possible design manner, before the second device receives the N reference signals from the first device on the N reference signal resources, the method provided in the second aspect further includes: The second device sends first indication information to the first device. The first indication information indicates at least one reference signal resource recommended by the second device in the K reference signal resources, or the first indication information indicates at least one reference signal resource not recommended by the second device in the K reference signal resources.

Optionally, after the second device sends the first indication information to the first device, and after receiving the first indication information, the first device does not necessarily use the reference signal resource recommended by the second device.

In a possible design manner, the first indication information includes indication information of the N reference signal resources, and the first indication information indicates the first device to send a reference signal on the N reference signal resources. In this case, the second device may first determine the N reference signal resources, and notify the first device through the first indication information. The first device determines the N reference signal resources based on the first indication information.

In a possible design manner, the first indication information further indicates a first spatial domain parameter associated with each of the at least one reference signal resource recommended by the second device, or the first indication information further indicates a first spatial domain parameter associated with each of the at least one reference signal resource not recommended by the second device.

Optionally, the N first spatial domain parameters of the first device may respectively correspond to the N second spatial domain parameters of the second device, to form the N beam pair links BPLs. The first indication information further indicates the first spatial domain parameter, a second spatial domain parameter, or a BPL associated with each of the at least one reference signal resource recommended by the second device, or the first indication information further indicates the first spatial domain parameter, a second spatial domain parameter, or a BPL associated with each of the at least one reference signal resource not recommended by the second device.

In a possible design manner, before the second device sends the first indication information to the first device, the method provided in the second aspect further includes: The second device receives and measures a reference signal on a part or all of the K reference signal resources, to determine the first indication information.

In a possible design manner, that the second device receives and measures a reference signal on a part or all of the K reference signal resources, to determine the first indication information includes: The second device receives and measures the reference signal on the part or all of the K reference signal resources, to obtain a received power corresponding to the part or all of the K reference signal resources. The part or all of the K reference signal resources include a second reference signal resource. If the received power on the second reference signal resource is greater than or equal to a preset threshold, it is determined that the second reference signal resource is occupied. To be specific, the N reference signal resources do not include the second reference signal resource, and the second reference signal resource is one of the at least one reference signal resource not recommended by the second device. The reference signal resource recommended in the first indication information does not include the second reference signal resource, or the reference signal resource not recommended in the first indication information includes the second reference signal resource.

In a possible design manner, that the second device receives and measures a reference signal on a part or all of the K reference signal resources, to determine the first indication information includes: The second device receives and measures the reference signal on the part or all of the K reference signal resources, to determine N reference signal resource sets. The second device determines the first indication information based on the N reference signal resource sets.

The N reference signal resource sets are in one-to-one correspondence with the N second spatial domain parameters, and each of the N reference signal resource sets includes at least one of the K reference signal resources. Optionally, each reference signal resource in each reference signal resource set is not occupied when a second spatial domain parameter corresponding to the reference signal resource set is used, and is included in the K reference signal resources.

In a possible design manner, that the second device receives and measures a reference signal on a part or all of the K reference signal resources, to determine the first indication information includes: The second device receives and measures the reference signal on the part or all of the K reference signal resources by using the N second spatial domain parameters, to determine the first indication information.

In a possible design manner, that the second device receives and measures the reference signal on the part or all of the K reference signal resources by using the N second spatial domain parameters, to determine the first indication information includes: The second device receives and measures the reference signal on the part or all of the K reference signal resources in a first resource window by using the N second spatial domain parameters, to determine the first indication information. The first resource window includes M reference signal resource periodicities, where M is an integer greater than or equal to 1. Each of the M reference signal resource periodicities includes at least one first time unit. One of the at least one first time unit is a time unit in which the K reference signal resources are located.

Optionally, each of the M reference signal resource periodicities corresponds to at least one of the N second spatial domain parameters.

In a possible design manner, a correspondence between each of the M reference signal resource periodicities and the at least one second spatial domain parameter is determined based on a quantity of spatial domain parameters that are capable of being simultaneously used when the second device receives a signal.

In a possible design manner, an $X^{th}$ reference signal resource periodicity in the M reference signal resource periodicities corresponds to $\left(Mod\left(X-1+C,\left\lceil\frac{N}{V_2}\right\rceil\right)\times V_2+1\right)^{th}$ to

$$\left( \min \left( \left( Mod \left( X - 1 + C, \left\lceil \frac{N}{V_2} \right\rceil \right) + 1 \right) \times V_2, N \right) \right)^{\text{th}}$$

second spatial domain parameters in the N second spatial domain parameters, or an $X^{\text{th}}$ reference signal resource periodicity in the M reference signal resource periodicities corresponds to ($Mod((X-1) \times V_2 + 1 + C, N)$)$^{\text{th}}$ to ($Mod((X-1) \times V_2 + V_{21} + C, N)$)$^{\text{th}}$ second spatial domain parameters in the N second spatial domain parameters. The $X^{\text{th}}$ reference signal resource periodicity is an $X^{\text{th}}$ reference signal resource periodicity after a start moment of a frame 0 closest to a current reference signal periodicity, the mathematical symbol mod represents a modulo operation, the mathematical symbol ⌈ ⌉ represents rounding up, $V_2$ is the quantity of spatial domain parameters that are capable of being simultaneously used when the second device receives the signal, and C is a configured or pre-configured integer.

In a possible design manner, the K reference signal resources are determined based on first configuration information, and the first configuration information includes time-domain position information of the K reference signal resources and frequency-domain position information of the K reference signal resources.

In a possible design manner, the time-domain position information of the K reference signal resources includes a first offset and a periodicity length, the first offset and the periodicity length are used to determine a first time unit in each reference signal resource periodicity, and the first time unit is a time unit in which the K reference signal resources are located.

In a possible design manner, the K reference signal resources in the first time unit occupy all frequency-domain units in the first sidelink resource pool.

In a possible design manner, the frequency-domain position information of the K reference signal resources includes first frequency-domain density information or first quantity information, the first frequency-domain density information indicates density of the K reference signal resources in frequency domain, and the first quantity information indicates a quantity of reference signals corresponding to each time subunit in the first sidelink resource pool.

In a possible design manner, the frequency-domain position information of the K reference signal resources includes first port information or second quantity information, the first port information indicates a quantity of contiguous frequency-domain subunits occupied by any one of the K reference signal resources in one time-domain subunit, and the second quantity information indicates a quantity of reference signals corresponding to one frequency-domain unit in one time subunit.

In a possible design manner, the time-domain position information of the K reference signal resources includes second port information or third quantity information, the second port information indicates a quantity of contiguous time-domain subunits occupied by any one of the K reference signal resources in one frequency-domain subunit, and the third quantity information indicates a quantity of reference signals corresponding to one frequency-domain subunit in one time unit.

In a possible design manner, a maximum of U reference signal resources in the N reference signal resources occupy a same symbol, and U is determined based on a quantity of spatial domain parameters that are capable of being simultaneously used when the first device receives a signal and the quantity of spatial domain parameters that are capable of being simultaneously used when the second device receives the signal.

In a possible design manner, the method provided in the second aspect further includes: The second device determines, based on the first configuration information, identifiers respectively corresponding to the K reference signal resources.

In a possible design manner, the first configuration information is pre-configured, or is received by the second device from a network device.

In a possible design manner, the method provided in the second aspect further includes: The second device sends fourth indication information. The fourth indication information indicates at least one reference signal resource occupied by the second device in the N reference signal resources.

In a possible design manner, the at least one reference signal resource occupied by the second device includes a third reference signal resource, and a spatial domain parameter used by the second device to send the fourth indication information corresponds to a spatial domain parameter used by the second device to receive a reference signal on the third reference signal resource. The second device receives the reference signal from the first device on the third reference signal resource.

In addition, for technical effects of the method according to the second aspect, refer to the technical effects of the method according to the first aspect. Details are not described herein again.

According to a third aspect, a signal receiving method is provided. The method includes: A second device detects N reference signals in a first target window or N second target windows, to determine a first measurement result. The second device determines, based on the first measurement result, whether a beam failure instance occurs. The first measurement result includes measurement results of the N reference signals, the N reference signals are in one-to-one correspondence with N second spatial domain parameters, and the N second spatial domain parameters are spatial domain parameters on which the second device is to perform beam failure detection.

According to the method provided in the third aspect, a first device and the second device perform beam failure detection in the first target window or the N second target windows. Compared with an existing technology in which a reference signal is detected at a fixed time point, in this application, the reference signals are detected in the first target window or the second target windows including a plurality of time points, so that a time range for detecting the reference signals is increased. Even if a resource used by the first device to send a reference signal at a time point in the first target window or the N second target windows is preempted, if the first device continues to send the reference signal at a subsequent time point in the first target window or the N second target windows, a receiving device can still normally detect the reference signal, so that impact on the beam failure detection caused by uncertainty of a position of a resource for sending the reference signal can be reduced, thereby improving accuracy of beam failure detection.

In a possible design manner, the first target window includes at least one periodic first window, and each first window included in the first target window corresponds to the N second spatial domain parameters. Alternatively, each of the N second target windows includes at least one periodic second window, and the N second target windows are in one-to-one correspondence with the N second spatial domain parameters.

Optionally, N first spatial domain parameters of the first device may respectively correspond to the N second spatial domain parameters of the second device, to form N beam pair links BPLs. That each first window included in the first target window corresponds to the N second spatial domain parameters may also be understood as that each first window included in the first target window corresponds to the N first spatial domain parameters or the N BPLs, and that the N second target windows are in one-to-one correspondence with the N second spatial domain parameters may also be understood as that the N second target windows are in one-to-one correspondence with the N first spatial domain parameters or the N BPLs.

In a possible design manner, that the second device determines, based on the first measurement result, whether a beam failure instance occurs includes: The second device determines, at a first moment based on the first measurement result, whether all the N reference signals meet a first condition; and if all the N reference signals meet the first condition, determines that the beam failure instance occurs; or if not all the N reference signals meet the first condition, determines that the beam failure instance does not occur.

The first condition includes: a received power of a second reference signal in at least one first window of the first target window is less than or equal to a first threshold before the first moment, or an average received power of a second reference signal in at least one first window included in the first target window is less than or equal to a second threshold before the first moment, where the second reference signal is any one of the N reference signals. Alternatively, the first condition includes: before the first moment, a received power of a second reference signal in at least one second window of a second target window corresponding to the second reference signal is less than or equal to a third threshold, or an average received power of a second reference signal in at least one second window included in the second target window corresponding to the second reference signal is less than or equal to a fourth threshold.

For example, the average received power may be an average value of the received powers, or may be a weighted average value.

Optionally, if the second device does not detect the second reference signal (or does not detect first control information including indication information of the second reference signal) in one first window, the second device determines that the received power of the second reference signal in the first window is 0. Alternatively, if the second device does not detect the second reference signal (or does not detect first control information including indication information of the second reference signal) in one second window, the second device determines that the received power of the second reference signal in the second window is 0.

In a possible design manner, that a second device detects N reference signals in a first target window or N second target windows, to determine a first measurement result includes: If the second device detects first control information in one first window of the first target window, and the first control information includes indication information of a third reference signal, the second device detects, by using a second spatial domain parameter corresponding to the third reference signal, the third reference signal on a time-frequency resource on which the third reference signal is located, to determine a measurement result of the third reference signal. The third reference signal is one of the N reference signals. Alternatively, if the second device detects first control information in one second window of the N second target windows, and the first control information includes indication information of a third reference signal, the second device detects, by using a second spatial domain parameter corresponding to the third reference signal, the third reference signal on a time-frequency resource on which the third reference signal is located, to determine a measurement result of the third reference signal.

The first control information includes the indication information of the third reference signal, indicating the third reference signal included in the first window in which the first control information is located. If detecting the indication information of the third reference signal in the first window, the second device obtains the third reference signal included in the first window in which the first control information is located, to select the second spatial domain parameter corresponding to the third reference signal to detect the third reference signal, so as to determine the measurement result of the third reference signal. If the second device does not detect the indication information of the third reference signal in the first window, the second device does not detect the reference signal, to avoid unnecessary detection, and reduce power consumption.

In a possible design manner, \the first control information, the third reference signal, and first data information are frequency division multiplexed and/or time division multiplexed in a first time unit, and the first control information indicates whether the first data information is dummy data information. In this way, when the first device sends the reference signal, a power can be basically kept constant in an entire slot, to avoid impact on automatic gain control of another device.

In a possible design manner, the first target window or the N second target windows are determined by the second device based on second configuration information, and the second configuration information indicates the first target window or the second configuration information indicates the N second target windows.

In a possible design manner, the second configuration information further indicates reference signal identifiers of the N reference signals and/or a correspondence between the N reference signals and the N second spatial domain parameters, or the second configuration information further indicates reference signal identifiers of the N reference signals, a correspondence between the N reference signals and the N second target windows, and/or a correspondence between the N reference signals and the N second spatial domain parameters.

In a possible design manner, the second configuration information indicates the first target window, and the second configuration information includes a first start position, a first window length, and a first periodicity interval. The first window length is a length of the first window. The first periodicity interval is an interval between start positions of two adjacent first windows in the at least one first window, or the first periodicity interval is an interval between end positions of the two adjacent first windows in the at least one first window. The first start position and the first periodicity interval are used to determine a start position of each of the at least one first window. The first start position, the first window length, and the first periodicity interval are used to determine an end position of each of the at least one first window.

In a possible design manner, the second configuration information indicates the first target window, and the second configuration information includes a first start position, a first end position, and a first periodicity interval. The first periodicity interval is an interval between start positions of two adjacent first windows in the at least one first window, or the first periodicity interval is an interval between end positions of the two adjacent first windows in the at least one first window. The first start position and the first periodicity interval are used to determine a start position of each of the at least one first window. The first end position and the first periodicity interval are used to determine an end position of each of the at least one first window.

In a possible design manner, the second configuration information indicates the N second target windows, and the second configuration information includes N second start positions, N second window lengths, and N second periodicity intervals. The N second window lengths are lengths of the second window in the N second target windows. One of the N second periodicity intervals is an interval between start positions of two adjacent second windows in one second target window, or one of the N second periodicity intervals is an interval between end positions of the two adjacent second windows in the second target window. The N second start positions and the N second periodicity intervals are used to determine start positions of second windows in the N second target windows. The N second start positions, the N second window lengths, and the N second periodicity intervals are used to determine end positions of the second windows in the N second target windows.

In a possible design manner, the second configuration information indicates the N second target windows, and the second configuration information includes N second start positions, N second end positions, and N second periodicity intervals. One of the N second periodicity intervals is an interval between start positions of two adjacent second windows in one second target window, or one of the N second periodicity intervals is an interval between end positions of the two adjacent second windows in the second target window. The N second start positions and the N second periodicity intervals are used to determine start positions of second windows in the N second target windows. The N second end positions and the N second periodicity intervals are used to determine end positions of the second windows in the N second target windows.

In a possible design manner, the method provided in the third aspect further includes: The second device sends the second configuration information to the first device. Alternatively, the second device receives the second configuration information from the first device.

In a possible design manner, the second window lengths respectively corresponding to the N second target windows are the same.

In a possible design manner, the second periodicity intervals respectively corresponding to the N second target windows are the same.

In a possible design manner, each of the at least one first window includes at least two time subunits, or each of the at least one second window includes at least two time subunits. For example, the time subunit includes a symbol. In this case, the first window or the second window may include a period of time.

According to a fourth aspect, a signal sending method is provided. The method includes: A first device determines a first target window or N second target windows. The first device sends N reference signals to a second device by using N first spatial domain parameters. Resources used to send the N reference signals are in the first target window or the N second target windows. The N reference signals are in one-to-one correspondence with the N first spatial domain parameters. The N first spatial domain parameters are spatial domain parameters on which the first device is to perform beam failure detection.

**In** a possible design manner, the first target window includes at least one periodic first window, and each first window included in the first target window corresponds to the N first spatial domain parameters; or each of the N second target windows includes at least one periodic second window, and the N second target windows are in one-to-one correspondence with the N first spatial domain parameters.

In a possible design manner, the method provided in the fourth aspect further includes: The first device determines, in the first target window based on a sensing manner or a random selection manner, reference signal resources respectively corresponding to the N reference signals; or the first device determines, in the N second target windows based on a sensing manner or a random selection manner, reference signal resources respectively corresponding to the N reference signals.

Optionally, that the first device determines, in the first target window based on a sensing manner or a random selection manner, reference signal resources respectively corresponding to the N reference signals includes: The first device uses, at a second moment based on the sensing manner or the random selection manner, a closest first window that is after the second moment in the first target window and whose interval from the second moment is greater than or equal to a preset threshold as a resource selection window of the N reference signals.

Optionally, that the first device determines, in the N second target windows based on a sensing manner or a random selection manner, reference signal resources respectively corresponding to the N reference signals includes: The first device uses, at a second moment based on the sensing manner or the random selection manner, a closest second window that is after the second moment in a second target window 1 and whose interval from the second moment is greater than or equal to a preset threshold as a resource selection window of a reference signal corresponding to the second target window 1.

In a possible design manner, the N reference signals include a third reference signal, that the first device sends N reference signals to a second device by using N first spatial domain parameters includes: The first device sends the third reference signal, first control information, and first data information to the second device by using one of the N first spatial domain parameters. The third reference signal, the first control information, and the first data information are frequency division multiplexed and/or time division multiplexed in a first time unit, and the first control information includes indication information of the third reference signal.

In a possible design manner, the first control information indicates whether the first data information is dummy data information.

In a possible design manner, the first target window or the N second target windows are determined by the first device based on second configuration information, and the second configuration information indicates the first target window or the second configuration information indicates the N second target windows.

In a possible design manner, the second configuration information further indicates reference signal identifiers of the N reference signals and/or a correspondence between the N reference signals and the N first spatial domain parameters, or the second configuration information further indicates reference signal identifiers of the N reference signals, a correspondence between the N reference signals and the N second target windows, and/or a correspondence between the N reference signals and the N first spatial domain parameters.

In a possible design manner, the second configuration information indicates the first target window, and the second configuration information includes a first start position, a first window length, and a first periodicity interval. The first window length is a length of the first window. The first periodicity interval is an interval between start positions of two adjacent first windows in the at least one first window, or the first periodicity interval is an interval between end positions of the two adjacent first windows in the at least one first window. The first start position and the first periodicity interval are used to determine a start position of each of the at least one first window. The first start position, the first window length, and the first periodicity interval are used to determine an end position of each of the at least one first window.

In a possible design manner, the second configuration information indicates the first target window, and the second configuration information includes a first start position, a first end position, and a first periodicity interval. The first periodicity interval is an interval between start positions of two adjacent first windows in the at least one first window, or the first periodicity interval is an interval between end positions of the two adjacent first windows in the at least one first window. The first start position and the first periodicity interval are used to determine a start position of each of the at least one first window. The first end position and the first periodicity interval are used to determine an end position of each of the at least one first window.

In a possible design manner, the second configuration information indicates the N second target windows, and the second configuration information includes N second start positions, N second window lengths, and N second periodicity intervals. The N second window lengths are lengths of the second window in the N second target windows. One of the N second periodicity intervals is an interval between start positions of two adjacent second windows in one second target window, or one of the N second periodicity intervals is an interval between end positions of the two adjacent second windows in the second target window. The N second start positions and the N second periodicity intervals are used to determine start positions of second windows in the N second target windows. The N second start positions, the N second window lengths, and the N second periodicity intervals are used to determine end positions of the second windows in the N second target windows.

In a possible design manner, the second configuration information indicates the N second target windows, and the second configuration information includes N second start positions, N second end positions, and N second periodicity intervals. One of the N second periodicity intervals is an interval between start positions of two adjacent second windows in one second target window, or one of the N second periodicity intervals is an interval between end positions of the two adjacent second windows in the second target window. The N second start positions and the N second periodicity intervals are used to determine start positions of second windows in the N second target windows. The N second end positions and the N second periodicity intervals are used to determine end positions of the second windows in the N second target windows.

In a possible design manner, the method provided in the fourth aspect further includes: The first device sends the second configuration information to the second device. Alternatively, the first device receives the second configuration information from the second device.

In a possible design manner, the second window lengths respectively corresponding to the N second target windows are the same.

In a possible design manner, the second periodicity intervals respectively corresponding to the N second target windows are the same.

In a possible design manner, each of the at least one first window includes at least two time subunits, or each of the at least one second window includes at least two time subunits.

In addition, for technical effects of the method according to the fourth aspect, refer to the technical effects of the method according to the third aspect. Details are not described herein again.

According to a fifth aspect, a communication apparatus is provided. The communication apparatus includes a sending module and a processing module.

The processing module is configured to determine N reference signal resources. The sending module is configured to send N reference signals to a second device on the N reference signal resources. A first sidelink resource pool is configured for the communication apparatus. The first sidelink resource pool includes K reference signal resources. The K reference signal resources are K periodic reference signal resources. The K reference signal resources include the N reference signal resources, where N is an integer greater than 0, and K is an integer greater than or equal to N.

In a possible design manner, the N reference signal resources are used for beam failure detection, the N reference signal resources are in one-to-one correspondence with N first spatial domain parameters, and the N first spatial domain parameters are spatial domain parameters on which the communication apparatus is to perform beam failure detection.

In a possible design manner, the processing module is further configured to determine the N reference signal resources based on first sensing information, first indication information, and/or second indication information. The first sensing information is obtained by the communication apparatus in a first manner, and the first manner includes receiving and measuring a reference signal on a part or all of the K reference signal resources. The first indication information indicates at least one reference signal resource recommended by the second device in the K reference signal resources, or the first indication information indicates at least one reference signal resource not recommended by the second device in the K reference signal resources. The second indication information indicates at least one reference signal resource occupied by a third device in the K reference signal resources.

Optionally, the first sensing information includes a received power on a part or all of the K reference signal resources, and the part or all of the K reference signal resources include a second reference signal resource. If the received power on the second reference signal resource is greater than or equal to a preset threshold, it is determined that the second reference signal resource is occupied. In other words, the N reference signal resources do not include the second reference signal resource.

Optionally, if the received power on the second reference signal resource is equal to the preset threshold, it is determined that the second reference signal resource is occupied, or it is determined that the second reference signal resource is not occupied. This is not limited.

In a possible design manner, the processing module is further configured to determine N reference signal resource sets based on the first sensing information, the first indication information, and/or the second indication information. The processing module is further configured to select one reference signal resource from each of the N reference signal resource sets. The N reference signal resource sets are in one-to-one correspondence with the N first spatial domain parameters, and each of the N reference signal resource sets includes at least one of the K reference signal resources. Optionally, each reference signal resource in each reference signal resource set is not occupied when a first spatial domain parameter corresponding to the reference signal resource set is used, and is included in the K reference signal resources.

Optionally, the processing module is further configured to receive and measure a reference signal on a part or all of the K reference signal resources by using one of the N first spatial domain parameters, to obtain a received power on the part or all of the K reference signal resources. If the received power on the second reference signal resource is greater than or equal to the preset threshold, it is determined that the second reference signal resource is occupied. In other words, a first reference signal resource set does not include the second reference signal resource.

The part or all of the K reference signal resources include the second reference signal resource. The first reference signal resource set is a reference signal resource set corresponding to one of the N first spatial domain parameters. The first reference signal resource set is one of the N reference signal resource sets.

In a possible design manner, the first indication information further indicates a first spatial domain parameter associated with each of the at least one reference signal resource recommended by the second device, or the first indication information further indicates a first spatial domain parameter associated with each of the at least one reference signal resource not recommended by the second device.

Optionally, the first indication information includes a correspondence between the at least one reference signal resource recommended by the second device and the first spatial domain parameter, a second spatial domain parameter, or a BPL, and an identifier of the at least one reference signal resource recommended by the second device. Alternatively, the first indication information includes a correspondence between the at least one reference signal resource not recommended by the second device and the first spatial domain parameter, a second spatial domain parameter, or a BPL, and an identifier of the at least one reference signal resource not recommended by the second device. The processing module is further configured to: determine, based on the at least one reference signal resource recommended by the second device and the first spatial domain parameter corresponding to each of the at least one reference signal resource recommended by the second device, that the reference signal resource set corresponding to the first spatial domain parameter includes the at least one reference signal resource recommended by the second device. The processing module is further configured to: determine, based on the at least one reference signal resource not recommended by the second device and the first spatial domain parameter corresponding to each of the at least one reference signal resource not recommended by the second device, to remove, from the reference signal resource set corresponding to the first spatial domain parameter, the at least one reference signal resource not recommended by the second device.

In a possible design manner, the processing module is further configured to receive the second indication information by using one of the N first spatial domain parameters. The second indication information is used to determine a reference signal resource set corresponding to the first spatial domain parameter used to receive the second indication information.

In a possible design manner, the receiving and measuring a reference signal on a part or all of the K reference signal resources includes: receiving and measuring the reference signal on the part or all of the K reference signal resources by using the N first spatial domain parameters. N first spatial domain receive parameters are in one-to-one correspondence with the N first spatial domain parameters.

In a possible design manner, the receiving and measuring the reference signal on the part or all of the K reference signal resources by using the N first spatial domain parameters includes: receiving and measuring the reference signal on the part or all of the K reference signal resources in a first resource window by using the N first spatial domain parameters. The first resource window includes M reference signal resource periodicities, where M is an integer greater than or equal to 1. Each of the M reference signal resource periodicities includes at least one first time unit. One of the at least one first time unit is a time unit in which the K reference signal resources are located. Each of the M reference signal resource periodicities corresponds to at least one of the N first spatial domain parameters.

In this case, in each reference signal resource periodicity, the communication apparatus receives a reference signal on a part or all of the K reference signal resources by using a first spatial domain parameter corresponding to the reference signal resource periodicity, and determines N unoccupied reference signal resources.

In a possible design manner, a correspondence between each of the M reference signal resource periodicities and the at least one first spatial domain parameter is determined based on a quantity of spatial domain parameters that are capable of being simultaneously used when the communication apparatus receives a signal.

In a possible design manner, an X$^{th}$ reference signal resource periodicity in the M reference signal resource periodicities corresponds to

$$\left(Mod\left(X-1+C,\left\lceil\frac{N}{V_1}\right\rceil\right)\times V_1 + 1\right)^{th}$$

to

$$\left(\min\left(\left(Mod\left(X-1+C,\left\lceil\frac{N}{V_1}\right\rceil\right)+1\right)\times V_1, N\right)\right)^{th}$$

first spatial domain parameters in the N first spatial domain parameters. Alternatively, an X$^{th}$ reference signal resource periodicity in the M reference signal resource periodicities corresponds to $(Mod((X-1)\times V_1 + 1 + C, N))^{th}$ to $(Mod((X-1)\times V_1 + V_1 + C, N))^{th}$ first spatial domain parameters in the N first spatial domain parameters. The X$^{th}$ reference signal resource periodicity is an X$^{th}$ reference signal resource periodicity after a start moment of a frame 0 closest to a current reference signal periodicity, the mathematical symbol mod represents a modulo operation, the mathematical symbol $\lceil \ \rceil$ represents rounding up, $V_1$ is the quantity of spatial domain parameters that are capable of being simultaneously used when the communication apparatus receives the signal, and C is a configured or pre-configured integer. In a possible design manner, the sending module is further configured to send third indication information to the second device. The third indication information indicates the N reference signal resources.

In a possible design manner, the third indication information further indicates the N first spatial domain parameters corresponding to the N reference signal resources.

In a possible design manner, the third indication information includes identifiers of the N reference signal resources and identifiers of N first reference signal resources, and each of the N reference signal resources and one of the N first reference signal resources have a type-D quasi co-location relationship. Alternatively, the third indication information includes identifiers of the N reference signal resources and the N first spatial domain parameters, the N second spatial domain parameters, or identifiers of the N BPLs. The N reference signal resources are in one-to-one correspondence with the N first spatial domain parameters. The N reference signal resources are in one-to-one correspondence with the N second spatial domain parameters. The N reference signal resources are in one-to-one correspondence with the N BPLs.

In a possible design manner, the K reference signal resources are determined based on first configuration information, and the first configuration information includes time-domain position information of the K reference signal resources and frequency-domain position information of the K reference signal resources.

In a possible design manner, the time-domain position information of the K reference signal resources includes a first offset and a periodicity length, the first offset and the periodicity length are used to determine a first time unit in each reference signal resource periodicity, and the first time unit is a time unit in which the K reference signal resources are located.

In a possible design manner, the K reference signal resources in the first time unit occupy all frequency-domain units in the first sidelink resource pool.

In a possible design manner, the frequency-domain position information of the K reference signal resources includes first frequency-domain density information or first quantity information, the first frequency-domain density information indicates density of the K reference signal resources in frequency domain, and the first quantity information indicates a quantity of reference signals corresponding to each time subunit in the first sidelink resource pool.

In a possible design manner, the frequency-domain position information of the K reference signal resources includes first port information or second quantity information, the first port information indicates a quantity of contiguous frequency-domain subunits occupied by any one of the K reference signal resources in one time-domain subunit, and the second quantity information indicates a quantity of reference signals corresponding to one frequency-domain unit in one time subunit.

In a possible design manner, the time-domain position information of the K reference signal resources includes second port information or third quantity information, the second port information indicates a quantity of contiguous time-domain subunits occupied by any one of the K reference signal resources in one frequency-domain subunit, and the third quantity information indicates a quantity of reference signals corresponding to one frequency-domain subunit in one time unit.

In a possible design manner, a maximum of U reference signal resources in the N reference signal resources occupy a same symbol, and U is determined based on the quantity of spatial domain parameters that are capable of being simultaneously used when the communication apparatus receives the signal and a quantity of spatial domain parameters that are capable of being simultaneously used when the second device receives a signal.

In a possible design manner, the processing module is further configured to determine, based on the first configuration information, identifiers respectively corresponding to the K reference signal resources.

In a possible design manner, the first configuration information is pre-configured, or is received by the communication apparatus from a network device.

It should be noted that the communication apparatus according to the fifth aspect may further include a receiving module. The receiving module and the sending module may be separately disposed, or may be integrated into one module, namely, a transceiver module. Specific implementations of the receiving module and the sending module are not specifically limited in this application.

Optionally, the communication apparatus according to the fifth aspect may further include a storage module. The storage module stores a program or instructions. When the processing module executes the program or the instructions, the communication apparatus according to the fifth aspect is enabled to perform the method according to the first aspect.

It should be noted that the communication apparatus according to the fifth aspect may be a first device, or may be a chip (system) or another part or component that may be disposed in the first device. This is not limited in this application.

In addition, for technical effects of the communication apparatus according to the fifth aspect, refer to the technical effects of the method according to any possible implementation of the first aspect. Details are not described herein again.

According to a sixth aspect, a communication apparatus is provided. The communication apparatus includes a processing module and a receiving module.

The processing module is configured to determine N reference signal resources. The receiving module is configured to receive N reference signals from a first device on the N reference signal resources. A first sidelink resource pool is configured for the communication apparatus. The first sidelink resource pool includes K reference signal resources. The K reference signal resources are K periodic reference signal resources. The K reference signal resources include the N reference signal resources, where N is an integer greater than 0, and K is an integer greater than or equal to N.

In a possible design manner, the N reference signal resources are used for beam failure detection, the N reference signal resources are in one-to-one correspondence with N second spatial domain parameters, and the N second spatial domain parameters are spatial domain parameters on which the communication apparatus is to perform beam failure detection.

In a possible design manner, the receiving module is further configured to receive third indication information from the first device. The third indication information indicates the N reference signal resources.

In a possible design manner, the third indication information further indicates N first spatial domain parameters corresponding to the N reference signal resources, and the N first spatial domain parameters are in one-to-one correspondence with the N second spatial domain parameters.

In a possible design manner, the third indication information includes identifiers of the N reference signal resources and identifiers of N first reference signal resources, each of the N reference signal resources and one of the N first reference signal resources have a type-D quasi co-location relationship; or the third indication information includes identifiers of the N reference signal resources and the N first spatial domain parameters, the N second spatial domain parameters, or identifiers of N BPLs, the N reference signal resources are in one-to-one correspondence with the N first spatial domain parameters, the N reference signal resources are in one-to-one correspondence with the N second spatial domain parameters, and the N reference signal resources are in one-to-one correspondence with the N BPLs.

In a possible design manner, the communication apparatus provided in the sixth aspect may further include a sending module. The sending module is configured to send first indication information to the first device. The first indication information indicates at least one reference signal resource recommended by the communication apparatus in the K reference signal resources, or the first indication information indicates at least one reference signal resource not recommended by the communication apparatus in the K reference signal resources.

Optionally, after the communication apparatus sends the first indication information to the first device, and after receiving the first indication information, the first device does not necessarily use the reference signal resource recommended by the communication apparatus.

In a possible design manner, the first indication information includes indication information of the N reference signal resources, and the first indication information indicates the first device to send a reference signal on the N reference signal resources.

In a possible design manner, the first indication information further indicates a first spatial domain parameter associated with each of the at least one reference signal resource recommended by the communication apparatus, or the first indication information indicates a first spatial domain parameter associated with each of the at least one reference signal resource not recommended by the communication apparatus.

In a possible design manner, the processing module is further configured to receive and measure a reference signal on a part or all of the K reference signal resources, to determine the first indication information.

In a possible design manner, the processing module is further configured to receive and measure the reference signal on the part or all of the K reference signal resources, to obtain a received power on the part or all of the K reference signal resources. The part or all of the K reference signal resources include a second reference signal resource. The processing module is further configured to: if the received power on the second reference signal resource is greater than or equal to a preset threshold, determine that the second reference signal resource is occupied. To be specific, the N reference signal resources do not include the second reference signal resource, and the second reference signal resource is one of the at least one reference signal resource not recommended by the communication apparatus. The reference signal resource recommended in the first indication information does not include the second reference signal resource, or the reference signal resource not recommended in the first indication information includes the second reference signal resource.

In a possible design manner, the processing module is further configured to receive and measure a reference signal on a part or all of the K reference signal resources, to determine the first indication information. The processing module is further configured to determine the first indication information based on N reference signal resource sets.

The N reference signal resource sets are in one-to-one correspondence with the N second spatial domain parameters, and each of the N reference signal resource sets includes at least one of the K reference signal resources. Optionally, each reference signal resource in each reference signal resource set is not occupied when a second spatial domain parameter corresponding to the reference signal resource set is used, and is included in the K reference signal resources.

In a possible design manner, the processing module is further configured to receive and measure the reference signal on the part or all of the K reference signal resources by using the N second spatial domain parameters, to determine the first indication information.

In a possible design manner, the processing module is further configured to receive and measure the reference signal on the part or all of the K reference signal resources in a first resource window by using the N second spatial domain parameters, to determine the first indication information. The first resource window includes M reference signal resource periodicities, where M is an integer greater than or equal to 1. Each of the M reference signal resource periodicities includes at least one first time unit. One of the at least one first time unit is a time unit in which the K reference signal resources are located.

Optionally, each of the M reference signal resource periodicities corresponds to at least one of the N second spatial domain parameters. In this case, in each reference signal resource periodicity, the communication apparatus receives a reference signal on a part or all of the K reference signal resources by using a second spatial domain parameter corresponding to the reference signal resource periodicity, and determines the first indication information.

In a possible design manner, a correspondence between each of the M reference signal resource periodicities and the at least one second spatial domain parameter is determined based on a quantity of spatial domain parameters that are capable of being simultaneously used when the communication apparatus receives a signal.

In a possible design manner, an $X^{th}$ reference signal resource periodicity in the M reference signal resource periodicities corresponds to $(Mod\left(X - 1 + C, \left\lceil \frac{N}{V_2} \right\rceil\right) \times V_2 + 1)^{th}$ to $(\min\left(\left(Mod\left(X - 1 + C, \left\lceil \frac{N}{V_2} \right\rceil\right) + 1\right) \times V_2, N\right))^{th}$ second spatial domain parameters in the N second spatial domain parameters, or an $X^{th}$ reference signal resource periodicity in the M reference signal resource periodicities corresponds to $(Mod((X\text{-}1) \times V_2 + 1 + C, N))^{th}$ to $(Mod((X\text{-}1) \times V_2 + V_2 + C, N))^{th}$ second spatial domain parameters in the N second spatial domain parameters. The $X^{th}$ reference signal resource periodicity is an $X^{th}$ reference signal resource periodicity after a start moment of a frame 0 closest to a current reference signal periodicity, the mathematical symbol mod represents a modulo operation, the mathematical symbol ⌈ ⌉ represents rounding up, $V_2$ is the quantity of spatial domain parameters that are capable of being simultaneously used when the communication apparatus receives the signal, and C is a configured or pre-configured integer.

In a possible design manner, the K reference signal resources are determined based on first configuration information, and the first configuration information includes time-domain position information of the K reference signal resources and frequency-domain position information of the K reference signal resources.

In a possible design manner, the time-domain position information of the K reference signal resources includes a first offset and a periodicity length, the first offset and the periodicity length are used to determine a first time unit in each reference signal resource periodicity, and the first time unit is a time unit in which the K reference signal resources are located.

In a possible design manner, the K reference signal resources in the first time unit occupy all frequency-domain units in the first sidelink resource pool.

In a possible design manner, the frequency-domain position information of the K reference signal resources includes first frequency-domain density information or first quantity information, the first frequency-domain density information indicates density of the K reference signal resources in frequency domain, and the first quantity information indicates a quantity of reference signals corresponding to each time subunit in the first sidelink resource pool.

In a possible design manner, the frequency-domain position information of the K reference signal resources includes first port information or second quantity information, the first port information indicates a quantity of contiguous frequency-domain subunits occupied by any one of the K reference signal resources in one time-domain subunit, and the second quantity information indicates a quantity of reference signals corresponding to one frequency-domain unit in one time subunit.

In a possible design manner, the time-domain position information of the K reference signal resources includes second port information or third quantity information, the second port information indicates a quantity of contiguous time-domain subunits occupied by any one of the K reference signal resources in one frequency-domain subunit, and the third quantity information indicates a quantity of reference signals corresponding to one frequency-domain subunit in one time unit.

In a possible design manner, a maximum of U reference signal resources in the N reference signal resources occupy a same symbol, and U is determined based on a quantity of spatial domain parameters that are capable of being simultaneously used when the first device receives a signal and the quantity of spatial domain parameters that are capable of being simultaneously used when the communication apparatus receives the signal.

In a possible design manner, the processing module is further configured to determine, based on the first configuration information, identifiers respectively corresponding to the K reference signal resources.

In a possible design manner, the first configuration information is pre-configured, or is received by the communication apparatus from a network device.

In a possible design manner, the sending module is further configured to send fourth indication information. The fourth indication information indicates at least one reference signal resource occupied by the communication apparatus in the N reference signal resources.

In a possible design manner, the at least one reference signal resource occupied by the communication apparatus includes a third reference signal resource, and a spatial domain parameter used by the communication apparatus to send the fourth indication information corresponds to a spatial domain parameter used by the communication apparatus to receive a reference signal on the third reference signal resource. The communication apparatus receives the reference signal from the first device on the third reference signal resource.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the sixth aspect may further include a processing module and a storage module. The storage module stores a program or instructions. When the processing module executes the program or the instructions, the communication apparatus according to the sixth aspect is enabled to perform the method according to the second aspect.

It should be noted that the communication apparatus according to the sixth aspect may be a second device, or may be a chip (system) or another part or component that may be disposed in the second device. This is not limited in this application.

In addition, for technical effects of the communication apparatus according to the sixth aspect, refer to the technical effects of the method according to any possible implementation of the second aspect. Details are not described herein again.

According to a seventh aspect, a communication apparatus is provided. The communication apparatus includes an obtaining module and a processing module.

The obtaining module is configured to detect N reference signals in a first target window or N second target windows, to determine a first measurement result. The processing module is configured to determine, based on the first measurement result, whether a beam failure instance occurs. The first measurement result includes measurement results of the N reference signals, the N reference signals are in one-to-one correspondence with N second spatial domain parameters, and the N second spatial domain parameters are spatial domain parameters on which the communication apparatus is to perform beam failure detection.

In a possible design manner, the first target window includes at least one periodic first window, and each first window included in the first target window corresponds to the N second spatial domain parameters. Alternatively, each of the N second target windows includes at least one periodic second window, and the N second target windows are in one-to-one correspondence with the N second spatial domain parameters.

In a possible design manner, the processing module is further configured to: determine, at a first moment based on the first measurement result, whether all the N reference signals meet a first condition; and if all the N reference signals meet the first condition, determine that the beam failure instance occurs; or if not all the N reference signals meet the first condition, determine that the beam failure instance does not occur. The first condition includes: a received power of a second reference signal in at least one first window of the first target window is less than or equal to a first threshold before the first moment, or an average received power of a second reference signal in at least one first window included in the first target window is less than or equal to a second threshold before the first moment, where the second reference signal is any one of the N reference signals. Alternatively, the first condition includes: before the first moment, a received power of a second reference signal in at least one second window of a second target window corresponding to the second reference signal is less than or equal to a third threshold, or an average received power of a second reference signal in at least one second window included in the second target window corresponding to the second reference signal is less than or equal to a fourth threshold.

Optionally, the processing module is further configured to: if the second reference signal is not detected (or first control information including indication information of the second reference signal is not detected) in one first window, determine that the received power of the second reference signal in the first window is 0. Alternatively, the processing module is further configured to: if the second reference signal is not detected (or first control information including indication information of the second reference signal is not detected) in one second window, determine that the received power of the second reference signal in the second window is 0.

In a possible design manner, the processing module is further configured to: if first control information is detected in one first window of the first target window, and the first control information includes indication information of a third reference signal, detect, by using a second spatial domain parameter corresponding to the third reference signal, the third reference signal on a time-frequency resource on which the third reference signal is located, to determine a measurement result of the third reference signal. The third reference signal is one of the N reference signals. Alternatively, the processing module is further configured to: if first control information is detected in one second window of the N second target windows, and the first control information includes indication information of a third reference signal, detect, by using a second spatial domain parameter corresponding to the third reference signal, the third reference signal on a time-frequency resource on which the third reference signal is located, to determine a measurement result of the third reference signal.

In a possible design manner, the first control information, the third reference signal, and first data information are frequency division multiplexed and/or time division multiplexed in a first time unit, and the first control information indicates whether the first data information is dummy data information.

In a possible design manner, the first target window or the N second target windows are determined based on second configuration information, and the second configuration information indicates the first target window or the second configuration information indicates the N second target windows.

In a possible design manner, the second configuration information further indicates reference signal identifiers of the N reference signals and/or a correspondence between the N reference signals and the N second spatial domain parameters, or the second configuration information further indicates reference signal identifiers of the N reference signals, a correspondence between the N reference signals and the N second target windows, and/or a correspondence between the N reference signals and the N second spatial domain parameters.

In a possible design manner, the second configuration information indicates the first target window, and the second configuration information includes a first start position, a first window length, and a first periodicity interval. The first window length is a length of the first window. The first periodicity interval is an interval between start positions of two adjacent first windows in the at least one first window, or the first periodicity interval is an interval between end positions of the two adjacent first windows in the at least one first window. The first start position and the first periodicity interval are used to determine a start position of each of the at least one first window. The first start position, the first window length, and the first periodicity interval are used to determine an end position of each of the at least one first window.

In a possible design manner, the second configuration information indicates the first target window, and the second configuration information includes a first start position, a first end position, and a first periodicity interval. The first periodicity interval is an interval between start positions of two adjacent first windows in the at least one first window, or the first periodicity interval is an interval between end positions of the two adjacent first windows in the at least one first window. The first start position and the first periodicity interval are used to determine a start position of each of the at least one first window. The first end position and the first periodicity interval are used to determine an end position of each of the at least one first window.

In a possible design manner, the second configuration information indicates the N second target windows, and the second configuration information includes N second start positions, N second window lengths, and N second periodicity intervals. The N second window lengths are lengths of the second window in the N second target windows. One of the N second periodicity intervals is an interval between start positions of two adjacent second windows in one second target window, or one of the N second periodicity intervals is an interval between end positions of the two adjacent second windows in the second target window. The N second start positions and the N second periodicity intervals are used to determine start positions of second windows in the N second target windows. The N second start positions, the N second window lengths, and the N second periodicity intervals are used to determine end positions of the second windows in the N second target windows.

In a possible design manner, the second configuration information indicates the N second target windows, and the second configuration information includes N second start positions, N second end positions, and N second periodicity intervals. One of the N second periodicity intervals is an interval between start positions of two adjacent second windows in one second target window, or one of the N second periodicity intervals is an interval between end positions of the two adjacent second windows in the second target window. The N second start positions and the N second periodicity intervals are used to determine start positions of second windows in the N second target windows. The N second end positions and the N second periodicity intervals are used to determine end positions of the second windows in the N second target windows.

In a possible design manner, the communication apparatus according to the seventh aspect further includes a sending module or a receiving module. The sending module is configured to send the second configuration information to a first device. Alternatively, the receiving module is configured to receive the second configuration information from a first device.

In a possible design manner, the second window lengths respectively corresponding to the N second target windows are the same.

In a possible design manner, the second periodicity intervals respectively corresponding to the N second target windows are the same.

In a possible design manner, each of the at least one first window includes at least two time subunits, or each of the at least one second window includes at least two time subunits.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the seventh aspect may further include a storage module. The storage module stores a program or instructions. When the processing module executes the program or the instructions, the communication apparatus according to the seventh aspect is enabled to perform the method according to the third aspect. The obtaining module and the processing module may be a same module, or may be different modules.

It should be noted that the communication apparatus according to the seventh aspect may be a second device, or may be a chip (system) or another part or component that may be disposed in the second device. This is not limited in this application.

In addition, for technical effects of the communication apparatus according to the seventh aspect, refer to the technical effects of the method according to any possible implementation of the third aspect. Details are not described herein again.

According to an eighth aspect, a communication apparatus is provided. The communication apparatus includes a sending module and a processing module.

The processing module is configured to determine a first target window or N second target windows. The sending module is configured to send N reference signals to a second device by using N first spatial domain parameters. Resources used to send the N reference signals are in the first target window or the N second target windows. The N reference signals are in one-to-one correspondence with the N first spatial domain parameters. The N first spatial domain parameters are spatial domain parameters on which the communication apparatus is to perform beam failure detection.

In a possible design manner, the first target window includes at least one periodic first window, and each first window included in the first target window corresponds to the N first spatial domain parameters; or each of the N second target windows includes at least one periodic second window, and the N second target windows are in one-to-one correspondence with the N first spatial domain parameters.

In a possible design manner, the processing module is further configured to determine, in the first target window based on a sensing manner or a random selection manner, reference signal resources respectively corresponding to the N reference signals; or the processing module is further configured to determine, in the N second target windows based on a sensing manner or a random selection manner, reference signal resources respectively corresponding to the N reference signals.

Optionally, the processing module is further configured to use, at a second moment based on the sensing manner or the random selection manner, a closest first window that is after the second moment in the first target window and whose interval from the second moment is greater than or equal to a preset threshold as a resource selection window of the N reference signals.

Optionally, the processing module is further configured to use, at a second moment based on the sensing manner or the random selection manner, a closest second window that is after the second moment in a second target window 1 and whose interval from the second moment is greater than or equal to a preset threshold as a resource selection window of a reference signal corresponding to the second target window 1.

In a possible design manner, the sending module is further configured to send a third reference signal, first control information, and first data information to the second device by using one of the N first spatial domain parameters. The third reference signal, the first control information, and the first data information are frequency division multiplexed and/or time division multiplexed in a first time unit, and the first control information includes indication information of the third reference signal.

In a possible design manner, the first control information indicates whether the first data information is dummy data information.

In a possible design manner, the first target window or the N second target windows are determined based on second configuration information, and the second configuration information indicates the first target window or the second configuration information indicates the N second target windows.

In a possible design manner, the second configuration information further indicates reference signal identifiers of the N reference signals and/or a correspondence between the N reference signals and the N first spatial domain parameters, or the second configuration information further indicates reference signal identifiers of the N reference signals, a correspondence between the N reference signals and the N second target windows, and/or a correspondence between the N reference signals and the N first spatial domain parameters.

In a possible design manner, the second configuration information indicates the first target window, and the second configuration information includes a first start position, a first window length, and a first periodicity interval. The first window length is a length of the first window. The first periodicity interval is an interval between start positions of two adjacent first windows in the at least one first window, or the first periodicity interval is an interval between end positions of the two adjacent first windows in the at least one first window. The first start position and the first periodicity interval are used to determine a start position of each of the at least one first window. The first start position, the first window length, and the first periodicity interval are used to determine an end position of each of the at least one first window.

In a possible design manner, the second configuration information indicates the first target window, and the second configuration information includes a first start position, a first end position, and a first periodicity interval. The first periodicity interval is an interval between start positions of two adjacent first windows in the at least one first window, or the first periodicity interval is an interval between end positions of the two adjacent first windows in the at least one first window. The first start position and the first periodicity interval are used to determine a start position of each of the at least one first window. The first end position and the first periodicity interval are used to determine an end position of each of the at least one first window.

In a possible design manner, the second configuration information indicates the N second target windows, and the second configuration information includes N second start positions, N second window lengths, and N second periodicity intervals. The N second window lengths are lengths of the second window in the N second target windows. One of the N second periodicity intervals is an interval between start positions of two adjacent second windows in one second target window, or one of the N second periodicity intervals is an interval between end positions of the two adjacent second windows in the second target window. The N second start positions and the N second periodicity intervals are used to determine start positions of second windows in the N second target windows. The N second start positions, the N second window lengths, and the N second periodicity intervals are used to determine end positions of the second windows in the N second target windows.

In a possible design manner, the second configuration information indicates the N second target windows, and the second configuration information includes N second start positions, N second end positions, and N second periodicity intervals. One of the N second periodicity intervals is an interval between start positions of two adjacent second windows in one second target window, or one of the N second periodicity intervals is an interval between end positions of the two adjacent second windows in the second target window. The N second start positions and the N second periodicity intervals are used to determine start positions of second windows in the N second target windows. The N second end positions and the N second periodicity intervals are used to determine end positions of the second windows in the N second target windows.

In a possible design manner, the sending module is further configured to send the second configuration information to the second device. Alternatively, the two-point communication apparatus provided in the eighth aspect further includes a receiving module. The receiving module is configured to receive the second configuration information from the second device.

In a possible design manner, the second window lengths respectively corresponding to the N second target windows are the same.

In a possible design manner, the second periodicity intervals respectively corresponding to the N second target windows are the same.

In a possible design manner, each of the at least one first window includes at least two time subunits, or each of the at least one second window includes at least two time subunits.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the eighth aspect may further include a storage module. The storage module stores a program or instructions. When the processing module executes the program or the instructions, the communication apparatus according to the eighth aspect is enabled to perform the method according to the fourth aspect.

It should be noted that the communication apparatus according to the eighth aspect may be a first device, or may be a chip (system) or another part or component that may be disposed in the first device. This is not limited in this application.

In addition, for technical effects of the communication apparatus according to the eighth aspect, refer to the technical effects of the method according to any possible implementation of the fourth aspect. Details are not described herein again.

According to a ninth aspect, a communication apparatus is provided. The communication apparatus includes a processor. The processor is coupled to a memory, and the memory is configured to store a computer program.

The processor is configured to execute the computer program stored in the memory, so that the method according to any possible implementation of the first aspect to the fourth aspect is performed.

In a possible design, the communication apparatus according to the ninth aspect may further include a transceiver. The transceiver may be a transceiver circuit or an input/output port. The transceiver may be used by the communication apparatus to communicate with another device.

It should be noted that, the input port may be configured to implement a receiving function in the first aspect to the fourth aspect, and the output port may be configured to implement a sending function in the first aspect to the fourth aspect.

In this application, the communication apparatus according to the ninth aspect may be a first device, a second device, or a chip or a chip system disposed in the first device or the second device.

In addition, for technical effects of the communication apparatus according to the ninth aspect, refer to the technical effects of the method according to any possible implementation of the first aspect to the fourth aspect. Details are not described herein again.

According to a tenth aspect, a communication system is provided. The communication system includes the communication apparatus according to the fifth aspect and the communication apparatus according to the sixth aspect. Alternatively, the communication system includes the communication apparatus according to the seventh aspect and the communication apparatus according to the eighth aspect.

Alternatively, the communication system includes the communication apparatus according to the fifth aspect for implementing the method according to the first aspect and the communication apparatus according to the sixth aspect for implementing the method according to the second aspect. Alternatively, the communication system includes the communication apparatus according to the seventh aspect for implementing the method according to the third aspect and the communication apparatus according to the eighth aspect for implementing the method according to the fourth aspect.

According to an eleventh aspect, a chip system is provided. The chip system includes a logic circuit and an input/output port. The logic circuit is configured to implement a processing function in the first aspect to the fourth aspect, and the input/output port is configured to implement receiving and sending functions in the first aspect to the fourth aspect. Specifically, the input port may be configured to implement the receiving function in the first aspect to the fourth aspect, and the output port may be configured to implement the sending function in the first aspect to the fourth aspect.

In a possible design, the chip system further includes a memory, and the memory is configured to store program instructions and data for implementing the functions in the first aspect to the fourth aspect.

The chip system may include a chip, or may include the chip and another discrete component.

According to a twelfth aspect, a computer-readable storage medium is provided. The computer-readable storage medium stores a computer program or instructions. When the computer program or the instructions are run on a computer, the method according to any possible implementation of the first aspect to the fourth aspect is performed.

According to a thirteenth aspect, a computer program product is provided. The computer program product includes a computer program or instructions. When the computer program or the instructions are run on a computer, the method according to any possible implementation of the first aspect to the fourth aspect is performed.

## BRIEF DESCRIPTION OF DRAWINGS

FIG. 1 is a diagram of an architecture of a communication system according to an embodiment of this application;
FIG. 2 is a diagram of a beam pair link according to an embodiment of this application;
FIG. 3a to FIG. 3d are some schematic flowcharts of a signal sending method according to an embodiment of this application;
FIG. 3e is a diagram of application according to an embodiment of this application;
FIG. 3f is a diagram of reference signal resources according to an embodiment of this application;
FIG. 3g is a diagram of application of beam failure detection according to an embodiment of this application;
FIG. 4a and FIG. 4b are some other schematic flowcharts of a signal sending method according to an embodiment of this application;
FIG. 5 is a schematic flowchart of another signal sending method according to an embodiment of this application;
FIG. 6 is a diagram of a first target window according to an embodiment of this application;
FIG. 7 is a diagram of another first target window according to an embodiment of this application;
FIG. 8 is a diagram of a second target window according to an embodiment of this application;
FIG. 9 is another diagram of application according to an embodiment of this application;
FIG. 10 is a diagram of resource multiplexing according to an embodiment of this application;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of still another communication apparatus according to an embodiment of this application.

## DESCRIPTION OF EMBODIMENTS

The following describes technical solutions of this application with reference to accompanying drawings.
The technical solutions in embodiments of this application may be applied to various communication systems, for example, a sidelink (sidelink) system, a universal mobile telecommunications system (universal mobile telecommunications system, UMTS), a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system like a new radio (new radio, NR) system, and a future communication system like a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

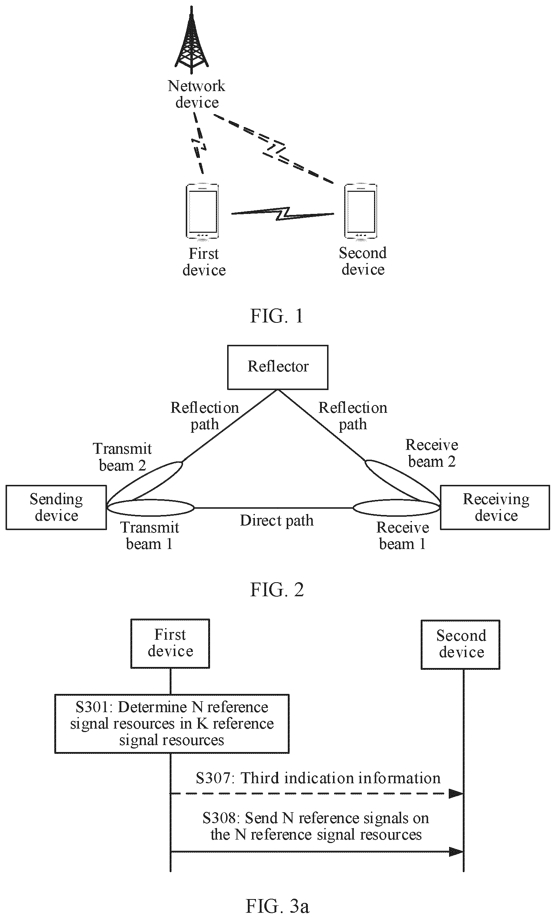

For ease of understanding embodiments of this application, a communication system shown in FIG. 1 is first used as an example to describe in detail a communication system applicable to embodiments of this application. For example, FIG. 1 is a diagram of an architecture of a communication system to which a signal sending method is applicable according to an embodiment of this application.

As shown in FIG. 1, the communication system includes a first device and a second device. Optionally, the communication system may further include a network device.

Both the first device and the second device may be terminal devices. The first device communicates with the second device through a sidelink (or a PC5 interface). Both the first device and the second device may be within network coverage. Alternatively, one of the first device and the second device may be within network coverage, and the other is out of the network coverage. For example, the second device is out of the network coverage. In this case, the second device may communicate with the network device via the first device. Alternatively, both the first device and the second device may be out of network coverage. When both the first device and the second device are within the network coverage, a serving base station of the first device may be the same as or different from a serving base station of the second device.

For example, the terminal device is a terminal that accesses the communication system and has a wireless transceiver function, or a chip or a chip system that may be disposed in the terminal. The terminal device in this application may also be referred to as a terminal, user equipment (user equipment, UE), an access terminal, a subscriber unit, a subscriber station, a mobile station, a mobile station, a remote station, a remote terminal, a mobile device, a user terminal, a wireless communication device, a user agent, or a user apparatus. The terminal in embodiments of this application may be a road side unit (road side unit, RSU), a mobile phone (mobile phone), a tablet computer (pad), an uncrewed aerial vehicle, a computer having a wireless transceiver function, a customer premise equipment (customer premise equipment, CPE), a virtual reality (virtual reality, VR) terminal, an augmented reality (augmented reality, AR) terminal, an internet of things terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

For another example, the terminal device in this application may be an express delivery terminal (for example, a device that can monitor a position of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent building, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, and an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted assembly, a vehicle-mounted component, a vehicle-mounted chip, or a vehicle-mounted unit that is built in a vehicle as one or more components or units. The vehicle may implement the method provided in this application via the vehicle-mounted module, the vehicle-mounted assembly, the vehicle-mounted component, the vehicle-mounted chip, or the vehicle-mounted unit that is built in the vehicle.

The network device may communicate with the first device, for example, through a Uu interface. For example, the network device may also be referred to as an access network device, an access device, or a radio access network device. The network device can manage a radio resource, provide an access service for the terminal device, and complete data forwarding between the terminal device and a core network. The network device may also be understood as a base station in a network.

For example, the network device in embodiments of this application may be any communication device that has a wireless transceiver function and that is configured to communicate with the terminal device. The network device includes but is not limited to, an RSU, an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (home evolved NodeB, HeNB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), and the like; or may be a gNB or a transmission point (TRP or TP) in 5G such as an NR system, or one or one group (including at least two antenna panels) of antenna panels of a base station in the 5G system; or may be a network node included in the gNB or the transmission point, for example, a baseband unit (BBU) or a distributed unit (distributed unit, DU); or may be a satellite, an uncrewed aerial vehicle, or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified as an access network device in an access network (radio access network, RAN), or the CU may be classified as an access network device in a core network (core network, CN). This is not limited in this application.

Optionally, the communication system shown in FIG. 1 is applicable to the communication network in question, and is also applicable to a future network, or the like. This is not specifically limited in embodiments of this application.

It should be noted that the signal sending method provided in embodiments of this application is applicable to any two nodes shown in FIG. 1. For specific implementation, refer to the following method embodiments. Details are not described herein.

It should be noted that, the solutions in embodiments of this application may alternatively be applied to another communication system, and a corresponding name may alternatively be replaced with a name of a corresponding function in the another communication system.

It should be understood that FIG. 1 is merely a simplified diagram used as an example for ease of understanding. The communication system may further include another network device and/or another terminal device that are/is not drawn in FIG. 1.

To make embodiments of this application clearer, the following uniformly describes a part of content and concepts related to embodiments of this application.

1. Millimeter wave communication and beam:

A frequency band (a millimeter wave frequency band for short) used for millimeter wave communication may be an electromagnetic wave band whose frequency range is from 30 gigahertz (GHz) to 300 GHz. In some occasions, frequency bands close to 30 GHz, such as 26 GHz and 28 GHz, are also classified as millimeter wave bands. In comparison with a conventional sub-6 GHz frequency band, the millimeter wave band has wider spectrum resources and can support transmission at a high data rate. In addition, a wavelength of the millimeter wave band is smaller. Therefore, an antenna size is smaller. This more facilitates multi-antenna integration. Therefore, the millimeter wave communication is a key technology in a 5th generation (fifth generation, 5G) mobile communication NR system and a future communication system. However, in comparison with the conventional sub-6 GHz frequency band, channel fading of the millimeter wave band is larger. Therefore, a device that performs communication by using the millimeter wave band needs to concentrate, by using a beamforming technology, signal sending and receiving energy at a specific direction, that is, on a specific beam, to improve an equivalent channel gain between a sending device and a receiving device, and ensure coverage performance and a data transmission rate of the millimeter wave communication.

The beam may be a wide beam, a narrow beam, or another type of beam. A technology for forming the beam may be the beamforming technology or another technical means. The beamforming technology may be specifically a digital beamforming technology, an analog beamforming technology, or a hybrid digital/analog ("/" represents or in this application) beamforming technology. The beam includes a transmit beam and a receive beam. The transmit beam may be distribution of signal strength formed at different directions in space after a signal is transmitted through an antenna, and the receive beam may be distribution of signal strength that is enhanced or weakened by an antenna array at different directions in space.

A common implementation of beamforming is to set different amplitude gains and/or phase deviations on a plurality of transmit/receive antenna units. This may equivalently form a spatial filter, to implement signal sending and receiving at a specific beam direction. Therefore, different beams may be referred to as (or "correspond to") different spatial domain parameters, spatial domain filters, spatial domain filter parameters, or the like. Different transmit beams may be referred to as (or "correspond to") different spatial domain transmit parameters, spatial domain transmit filters, spatial domain transmit filter parameters, or the like. Different receive beams may be referred to as different spatial domain receive parameters, spatial domain receive filters, spatial domain receive filter parameters, or the like. In embodiments of this application, "space domain" may also be referred to as "space" and "space" may also be referred to as "space domain." The space and the space domain have a same meaning.

Because there is usually a correspondence between the transmit beam and the receive beam, in embodiments of this application, the "spatial domain parameter/beam" may correspond to the spatial domain transmit parameter/beam, the spatial domain receive parameter/beam, or a transmit/receive spatial domain parameter pair/beam pair between the two devices with reference to a context.

In a next-generation wireless sidelink system, it may be considered that beams or a beam pair used by both terminal devices for receiving and sending are determined through beam training.

For example, a sending device sends a reference signal by using a transmit beam. A receiving device receives and measures the reference signal, and reports a reference signal identifier and a reference signal received power (reference signal received power, RSRP) to the sending device. The sending device determines, based on the reference signal identifier and a correspondence between the reference signal and the transmit beam, the transmit beam used when the reference signal is sent to the receiving device.

Similarly, the sending device sends a plurality of reference signals by using a fixed transmit beam. The receiving device continuously performs switching between receive beams to receive the reference signals and obtain RSRPs, and the receiving device determines, based on the RSRPs, the receive beams corresponding to the transmit beam. For example, when a receive beam is aligned with the sending device, an RSRP of a reference signal received by the receiving device is high, so that the receiving device determines that the receive beam corresponding to the transmit beam is the receive beam with the high RSRP.

In the foregoing process, the sending device and the receiving device may determine a beam pair link BPL between the sending device and the receiving device. The transmit beam is in one-to-one correspondence with the receive beam, and each transmit beam and a receive beam corresponding to the transmit beam form one BPL.

In addition, there is also a correspondence between a transmit beam and a receive beam of a device. For example, a transmit beam A (or a spatial domain transmit parameter A) of the first device and a receive beam B (or a spatial domain receive parameter B) of the second device form a beam pair link between the first device and the second device. In this case, the first device may determine a receive beam A (or a spatial domain receive parameter A) based on the transmit beam A (or the spatial domain transmit parameter A). The receive beam A (or the spatial domain receive parameter A) and the transmit beam A (or the spatial domain transmit parameter A) have a same or similar beam direction and beam width, or correspond to a same or similar precoding vector (amplitude and/or phase superimposed on an antenna). The second device may determine a transmit beam B (or a spatial domain transmit parameter B) based on the receive beam B (or the spatial domain receive parameter B). The transmit beam B (or the spatial domain transmit parameter B) and the receive beam B (the spatial domain receive parameter B) have a same beam direction and beam width or similar beam directions and beam widths, or correspond to a same precoding vector or similar precoding vectors. In other words, the transmit beam A of the first device, the receive beam A of the first device, the transmit beam B of the second device, and the receive beam B of the second device may be associated with or correspond to each other.

Therefore, in embodiments of this application, the "beam" may be understood as, with reference to a context, the transmit beam A, the receive beam A, the transmit beam B, the receive beam B, a BPL including the transmit beam A and the receive beam B, or a BPL including the transmit beam B and the receive beam A. The "spatial domain parameter" may be understood as, with reference to a context, the spatial domain transmit parameter A, the spatial domain receive parameter A, the spatial domain transmit parameter B, the spatial domain receive parameter B, a BPL including the spatial domain transmit parameter A and the spatial domain receive parameter B, or a BPL including the spatial domain transmit parameter B and the spatial domain receive parameter A. "Associated with a beam" may be understood as being associated with the transmit beam A, associated with the receive beam A, associated with the transmit beam B, associated with the receive beam B, associated with the BPL including the transmit beam A and the receive beam B, or associated with the BPL including the transmit beam B and the receive beam A. "Associated with a spatial domain parameter" may be understood as, with reference to a context, associated with the spatial domain transmit parameter A, associated with the spatial domain receive parameter A, associated with the spatial domain transmit parameter B, associated with the spatial domain receive parameter B, associated with the BPL including the spatial domain transmit parameter A and the spatial domain receive parameter B, or associated with the BPL including the spatial domain transmit parameter B and the spatial domain receive parameter A.

In embodiments of this application, being associated with may also be understood as being corresponding to or related to. In this application, the sending device is the first device shown in FIG. 1, and the receiving device is the second device shown in FIG. 1.

FIG. 2 is a diagram of a beam pair link according to an embodiment of this application.

As shown in FIG. 2, there are two paths for a radio channel between a sending device and a receiving device. One path is a direct path, and the other path is a reflection path after reflection by a reflector.

When the sending device sends information to the receiving device by using a transmit beam 1, and the receiving device receives the information by using a receive beam 1, that is, the sending device and the receiving device use a BPL 1, the transmit beam 1 and the receive beam 1 are aligned with the direct path, and quality of communication between the sending device and the receiving device is good. When the sending device uses a transmit beam 2 and the receiving device uses a receive beam 2, that is, the sending device and the receiving device use a BPL 2, the transmit beam 2 and the receive beam 2 are aligned with the reflection path, and quality of communication between the sending device and the receiving device can also be good.

The sending device and the receiving device use the two BPLs, so that robustness of transmission between the sending device and the receiving device can be higher. For example, when one of the BPLs is blocked and communication cannot be performed through the BPL, the sending device and the receiving device may still communicate with each other by using the other BPL. When all BPLs between the sending device and the receiving device fail, for example, all the BPLs are blocked, the sending device and the receiving device need to discover a beam failure in a timely manner, to perform beam recovery and recover normal communication.

However, in the SL system, the sending device cannot ensure that the sending device sends a reference signal at an originally determined time-frequency position for sending the reference signal. For example, the resource is preempted by transmission of another service with a higher priority. In this case, when a received power that is of the reference signal and that is obtained by the receiving device through measurement at a corresponding time-frequency position by using a receive beam is very low or even close to 0, it cannot be determined whether the received power of the reference signal is very low or even close to 0 because quality of the receive beam deteriorates or the sending device does not send the reference signal. Consequently, whether the beam fails cannot be accurately determined.

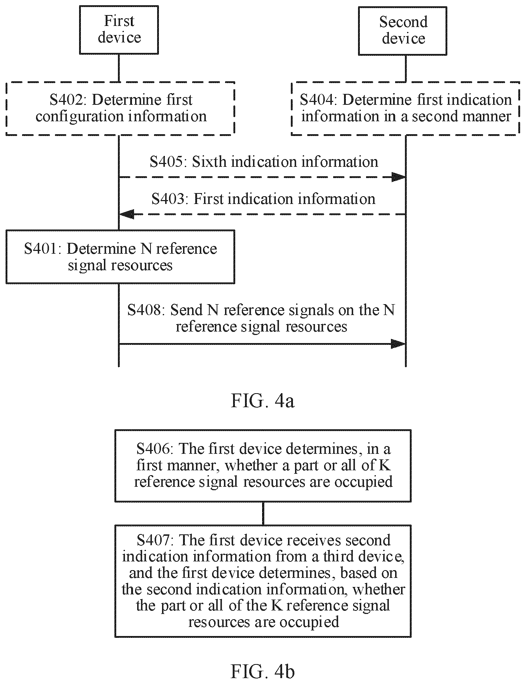

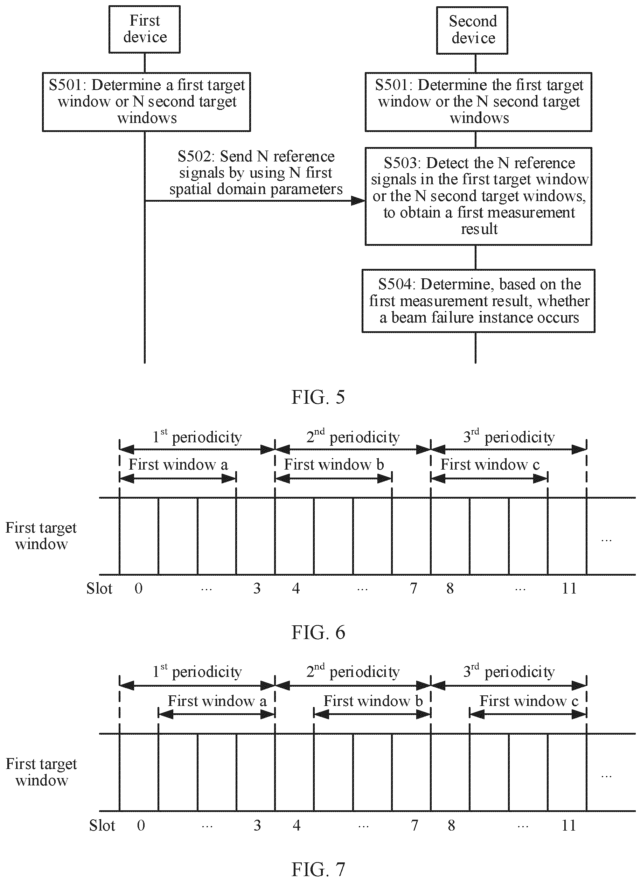

In this application, the following method shown in FIG. 3a, the following method shown in FIG. 4a, the following method shown in FIG. 5, the following method shown in FIG. 3a in combination with the following method shown in FIG. 5, or the following method shown in FIG. 4a in combination with the following method shown in FIG. 5 is used, to improve accuracy of beam failure detection.

The signal sending methods provided in embodiments of this application are specifically described below with reference to FIG. 3a to FIG. 10. Actions, terms, and the like in embodiments of this application may be mutually referenced. This is not limited. In embodiments of this application, an object name, a parameter name, or the like is merely an example. During specific implementation, another name may be used. This is not limited.

For example, FIG. 3a is a schematic flowchart of a signal sending method according to an embodiment of this application. The method shown in FIG. 3a may be used in a beam failure detection scenario, and may also be used in a channel state information measurement or reporting scenario. A scenario to which the method shown in FIG. 3a is applicable is not limited in this application.

As shown in FIG. 3a, the signal sending method includes the following steps.

S301: A first device is configured in a first sidelink resource pool, where the first sidelink resource pool includes K reference signal resources, and the first device determines N reference signal resources in the K reference signal resources.

For example, the first sidelink resource pool includes the K reference signal resources, and the N reference signal resources are reference signal resources (for example, reference signal resources that are not occupied or can be used) in the K reference signal resources in the first sidelink resource pool. N is an integer greater than 0, and K is an integer greater than or equal to N.

The N reference signal resources may be reference signal resources in the K reference signal resources in the first sidelink resource pool. For example, the N reference signal resources are N unoccupied reference signal resources in the K reference signal resources. For example, configuration information of the first sidelink resource pool includes configuration information of the K reference signal resources. For an implementation of the configuration information of the K reference signal resources, refer to the following descriptions of first configuration information in S302. Details are not described herein.

For example, the K reference signal resources are K periodic reference signal resources.

In this case, N unoccupied periodic reference signal resources are selected from the K periodic reference signal resources. In this way, the first device can actively avoid using a time-frequency resource that conflicts with another device to send a reference signal, so that no interference is caused to a receiving device corresponding to the another device. In addition, after the first device sends reference signals on the N reference signal resources, the another device also avoids, in a manner similar to that of the first device, the N reference signal resources occupied by the first device, so that reference signals received by a receiving device corresponding to the first device, for example, a second device, on the N reference signal resources are from the first device. In other words, the second device can accurately determine a status of a channel between the first device and the second device based on a result obtained through measurement on the N reference signal resources.

Optionally, the N reference signal resources are used for beam failure detection between the first device and the second device. Alternatively, the N reference signal resources may be used for channel state information measurement or reporting between the first device and the second device.

Optionally, the N reference signal resources are in one-to-one correspondence with N first spatial domain parameters. For example, when the N reference signal resources are used for beam failure detection between the first device and the second device, the N first spatial domain parameters are spatial domain parameters on which beam failure detection needs to be performed between the first device and the second device. For another example, when the N reference signal resources are used for channel state information measurement or reporting between the first device and the second device, the N first spatial domain parameters are spatial domain parameters on which channel state information measurement or reporting needs to be performed between the first device and the second device.

Specifically, the first spatial domain parameter may be a transmit/receive beam on a first device side, a receive/transmit beam on a second device side, or a beam pair between the first device and the second device. In this case, the first device sends a reference signal on a reference signal resource by using a transmit beam corresponding to the reference signal resource, to perform beam failure detection or channel state information measurement. In this embodiment of this application, an example in which the first spatial domain parameter is the transmit/receive beam on the first device side is mainly used for description. The first spatial domain parameter may be understood as a corresponding spatial domain transmit parameter/transmit beam or spatial domain receive parameter/receive beam with reference to a context. It may be understood that the transmit beam and the receive beam that correspond to the first spatial domain parameter should be beams with a same beam direction or similar beam directions, and the transmit beam and the receive beam that correspond to the first spatial domain parameter should be beams with a same beam width or similar beam widths. For example, the transmit beam and the receive beam that correspond to the first spatial domain parameter may be implemented through beamforming by using a same precoding vector.

Optionally, the N first spatial domain parameters are in one-to-one correspondence with N second spatial domain parameters, the N reference signal resources are in one-to-one correspondence with the N second spatial domain parameters, or the N reference signal resources are in one-to-one correspondence with N BPLs. The N second spatial domain parameters may be N transmit/receive beams of the second device, a correspondence between the N first spatial domain parameters and the N second spatial domain parameters may be determined by the first device and the second device through beam training, and the N first spatial domain parameters and the corresponding N second spatial domain parameters form the N BPLs between the first device and the second device.

For example, if beam failure detection needs to be performed on the N BPLs between the first device and the second device, the N reference signal resources respectively correspond to the N BPLs. Based on the foregoing descriptions, the N reference signal resources respectively correspond to the N first spatial domain parameters, and also respectively correspond to the N second spatial domain parameters. The first device sends a reference signal on a reference signal resource by using a first spatial domain parameter corresponding to the reference signal resource, and the second device receives the reference signal on the reference signal resource by using a second spatial domain parameter corresponding to the reference signal resource.

In some embodiments, a spatial domain parameter on which beam failure detection is to be performed may be determined by the first device and/or the second device by performing a prior beam training or sweeping process.

For example, in FIG. 2, the first device obtains, by performing a beam training process, two BPLs existing between the first device and the second device, and may perform beam failure detection on the two BPLs.

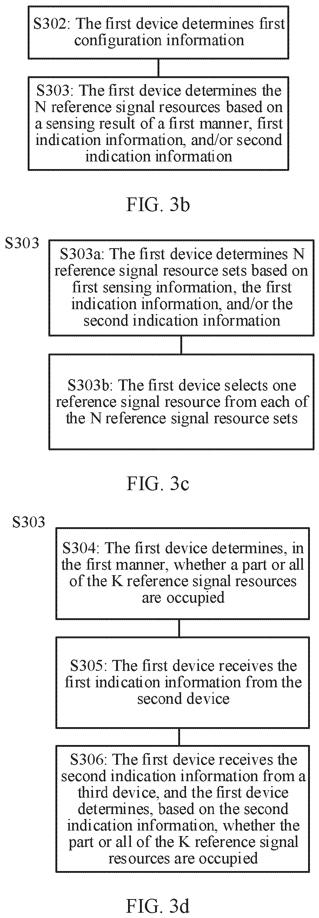

In a possible design manner, S301 may include at least one of S302 and S303. For details, refer to FIG. 3b.

S302: The first device determines the first configuration information.

The first configuration information indicates the configuration information of the first sidelink resource pool. The first configuration information includes time-domain position information and frequency-domain position information of the first sidelink resource pool. S302 may also be understood as that the first sidelink resource pool is configured for the first device.

For example, the first configuration information is pre-configured, or the first configuration information is received by the first device from a network device. The pre-configuration may be understood as that the first configuration information has been burnt into a chip of the device before delivery.

Optionally, one or more sidelink resource pools may be configured for the first device, and the sidelink resource pools configured for the first device include the first sidelink resource pool. In other words, the first device may determine configuration information of a plurality of sidelink resource pools, and the first sidelink resource pool is one of the plurality of sidelink resource pools.

Optionally, the first configuration information further includes the configuration information of the K reference signal resources.

For example, the K reference signal resources are K periodic reference signal resources.

In some embodiments, the K reference signal resources are determined based on the first configuration information, and the first configuration information includes time-domain position information of the K reference signal resources and frequency-domain position information of the K reference signal resources.

In some embodiments, the time-domain position information of the K reference signal resources may include one or more of the following: a first offset, a periodicity length, indication information of symbol positions occupied by the K reference signal resources, second port information, and third quantity information.

For example, the first offset and the periodicity length are used to determine a first time unit in each reference signal resource periodicity, and the first time unit is a time unit in which the K reference signal resources are located.

For example, the time unit includes a slot.

For example, the periodicity length is a length of the reference signal resource periodicity, and the first offset indicates offsets of the K reference signal resources in each reference signal resource periodicity. For example, if the periodicity length is L slots, and the first offset is i slots, after a frame 0, the K reference signal resources occupy an $i^{\text{th}}$ slot in every L slots. In a sidelink system, one frame may usually include a plurality of slots, and a device may receive a synchronization signal from a network device, a satellite, or another device to perform synchronization, to determine a start position of the frame 0.

For example, the second port information indicates a quantity C of contiguous time-domain subunits occupied by any one of the K reference signal resources in one frequency-domain subunit. This may also be understood as that a quantity of time-domain ports of the reference signal resource is C.

For example, the frequency-domain subunit includes a subcarrier.

For example, the third quantity information indicates a quantity of reference signals corresponding to one frequency-domain subunit in one time unit.

It may be understood that only one of the second port information and the third quantity information may be configured, and the first device may infer the other based on a value of one of the second port information and the third quantity information. For example, the time unit includes one slot, and the time subunit includes an orthogonal frequency division multiplexing (orthogonal frequency division multiplexing, OFDM) symbol. Usually, in a 4G system and a 5G system, if all 14 symbols (without considering an extended cyclic prefix) included in one slot can be used for the foregoing reference signal resources, 13 symbols remain after a last GP symbol is excluded. In this case, the third quantity indicates a quantity of reference signals corresponding to one symbol on one subcarrier. For example, when the third quantity is 4, the first device may determine that one slot includes four reference signals on one subcarrier. In this case, the first device may equivalently determine that a quantity of ports occupied by one reference signal in time domain is $\lfloor 13/4 \rfloor = 3$ or $\lfloor 13/4 \rfloor - 1 = 2$, where -1 indicates that a separate automatic gain control (automatic gain control, AGC) symbol is needed before each reference signal. Alternatively, when the second port information is 2, the first device may equivalently determine that one slot includes $\lfloor 13/2 \rfloor = 6$ or $\lfloor 13/(2+1) \rfloor = 4$ reference signals on one subcarrier. In other words, the third quantity is 6 or 4.

For example, the second port information may be configured as 1 or 2 by default, or the third quantity information may be configured as 13, 6, or 4 by default.

Optionally, one symbol before each reference signal is an AGC symbol.

For example, the AGC symbol is used for AGC adjustment of the second device. When sending the reference signals, the first device copies content on a 1st symbol of each reference signal to a previous symbol.

Optionally, the frequency-domain position information of the K reference signal resources includes at least one of the following: a frequency-domain position, a quantity of ports of the K reference signal resources, first port information, second quantity information, first frequency-domain density information, and first quantity information.

For example, the frequency-domain position includes: a start subcarrier position and an end subcarrier position of the K reference signal resources, a start resource block RB position and an end RB position of the K reference signal resources, or a start subcarrier or RB position of the K reference signal resources and occupied frequency-domain bandwidth (for example, a quantity of subcarriers or a quantity of RBs).

In some embodiments, the K reference signal resources in the first time unit occupy all frequency-domain units in the first sidelink resource pool. In this case, a reference signal resource with a system-level configuration in the resource pool occupies all bandwidth in one reference signal resource periodicity, to avoid impact of a standalone (standalone) reference signal on automatic gain control AGC of data transmission of another device.

For example, the K reference signal resources have a same port quantity P, and the K reference signal resources have a same port multiplexing type.

For example, port multiplexing type information of the K reference signal resources further indicates that P ports are frequency division multiplexed, time division multiplexed, or time-frequency division hybrid multiplexed, or further code division multiplexed based on frequency division multiplexing, time division multiplexing, or time-frequency division hybrid multiplexing.

For example, the first port information indicates a quantity B of contiguous frequency-domain subunits occupied by any one of the K reference signal resources in one time-domain subunit. This may also be understood as that a quantity of frequency-domain ports of the reference signal resource is B.

For example, the second quantity information indicates a quantity of reference signals corresponding to one frequency-domain unit in one time subunit.

It may be understood that only one of the first port information and the second quantity information may be configured, and the first device may infer the other based on a value of one of the first port information and the second quantity information.

For example, the frequency-domain unit includes a resource block RB, and the time subunit is an OFDM symbol. Generally, in the 4G system and the 5G system, one RB may include 12 subcarriers. The second quantity information indicates a quantity of reference signals corresponding to one RB on one symbol. For example, when the second quantity is 6, the first device may determine that one RB includes six reference signals on one symbol. In other words, the first device may equivalently determine that a quantity B of ports occupied by one reference signal in frequency domain is 12/6=2. Alternatively, when the first port information is 2, the first device may determine that each reference signal resource in one RB occupies two contiguous subcarriers on one symbol. In other words, the first device may equivalently determine that one RB may correspond to 12/2=6 reference signals, that is, the second quantity is 6.

For example, the first port information may be configured as 1 or 2 by default, or the second quantity information may be configured as 12 or 6 by default.

For example, the first frequency-domain density information indicates density of the K reference signal resources in frequency domain.

For example, the first frequency-domain density information indicates a frequency-domain comb spacing of each reference signal resource. For example, the frequency-domain comb spacing is I subcarriers or I RBs. For example, when the first frequency-domain density information is one RB, the first device may determine that one reference signal resource may correspond to each RB, that is, contiguous RBs in the first sidelink resource pool. For another example, when the first frequency-domain density information is two RBs, the first device may determine that one reference signal resource may correspond to RBs whose indexes are odd numbers or RBs whose indexes are even numbers. Specifically, resource mapping in one RB may be determined based on the first port information or the second quantity information.

For example, the first quantity information indicates a quantity of reference signals corresponding to each time subunit in the first sidelink resource pool. For example, the first quantity information indicates a quantity A of reference signals corresponding to one symbol. In other words, there are A reference signals in the first sidelink resource pool on one symbol.

It may be understood that only one of the first frequency-domain density information and the first quantity information may be configured, and the first device may infer the other based on a value of one of the first frequency-domain density information and the first quantity information. For example, when the first port information is 1, if the first frequency-domain density information included in the first configuration information is two RBs, it may be determined that one reference signal resource occupies RBs whose indexes are odd numbers or RBs whose indexes are even numbers, and occupies one subcarrier in one RB. Therefore, the first device can determine the first quantity A=I*12/B=2*12/1=24. Alternatively, if the first quantity information included in the first configuration information is 24, it may be determined the first frequency-domain density I=A/B/12=24/1/12=2 RBs.

In this way, the first device may determine that a $1^{st}$ reference signal resource on one symbol occupies subcarriers 0, 1, ..., B-1, I*12, I*12+1, ..., I*12+B-1, I*24, I*24+1, ..., I*24+B-1, ..., and a $2^{nd}$ reference signal occupies subcarriers B, B+1, ..., 2B-1, B+I*12, B+I*12+1, ..., I*12+2B-1, B+I*24, B+I*24+1, ..., and I*24+2B-1.

In some embodiments, the method provided in this embodiment of this application may further include: The first device determines, based on the first configuration information, identifiers respectively corresponding to the K reference signal resources, and/or the second device determines, based on the first configuration information, the identifiers respectively corresponding to the K reference signal resources. Indexes or identifiers corresponding to the reference signal resources may be mapped first in frequency domain and then in time domain, or may be mapped first in time domain and then in frequency domain.

For example, on a $1^{st}$ symbol to a $(P/B)^{th}$ symbol, an identifier of a $1^{st}$ reference signal is 0, an identifier of a $2^{nd}$ reference signal is 1, and so on.

In some embodiments, the method provided in this embodiment of this application may further include: The first configuration information includes the configuration information of the K reference signal resources. Specifically, the first configuration information includes information such as an identifier of each of the K reference signal resources, and a time-domain position and a frequency-domain position that correspond to each reference signal resource.

The method provided in this embodiment of this application may further include S302a (not shown in the figure).

S302a: The second device determines the first configuration information.

The first configuration information includes time-domain position information and frequency-domain position information of the first sidelink resource pool. S302a may also be understood as that the first sidelink resource pool is also configured for the second device.

One or more sidelink resource pools configured for the second device may be partially the same as or completely the same as the one or more sidelink resource pools configured for the first device.

Optionally, the first configuration information determined by the first device and the first configuration information determined the second device are same configuration information. To be specific, the same sidelink resource pool is configured for the first device and the second device, and the same K reference signal resources are configured in the sidelink resource pool.

Optionally, another device may also determine the same first configuration information. To be specific, a device other than the first device and the second device may be configured in the first sidelink resource pool.

Optionally, all devices for which the first sidelink resource pool is configured receive the same configuration information of the first sidelink resource pool. For example, the first device, the second device, a third device, and a fourth device receive the same configuration information of the first sidelink resource pool. It may also be understood that the K reference signal resources in the first sidelink resource pool are K reference signal resources with the system-level configuration.

The second device and the another device may determine the first configuration information in a same manner as that of the first device, that is, may determine the first configuration information in a pre-configured manner, or may determine the first configuration information by receiving the first configuration information from the network device. This is not limited in this embodiment of this application.

S303: The first device determines the N reference signal resources based on first sensing information, first indication information, and/or second indication information.

Optionally, the first sensing information is obtained by the first device in a first manner, and the first manner includes receiving and measuring a reference signal on a part or all of the K reference signal resources.

For example, the first device receives and measures the reference signal on the part or all of the K reference signal resources, to determine an unoccupied reference signal resource.

For example, the first indication information indicates at least one reference signal resource recommended by the second device in the K reference signal resources, and/or the first indication information indicates at least one reference signal resource not recommended by the second device in the K reference signal resources.

For example, the second indication information indicates at least one reference signal resource occupied by the third device in the K reference signal resources, and the first sidelink resource pool is configured for the third device.

For example, the first sidelink resource pool is configured for the third device. The third device may be any device for which the first sidelink resource pool is configured and that is other than the first device. For example, the third device may be the second device, or may be a device different from the second device.

Similar to the first device, the configuration information of the first sidelink resource pool is pre-configured on the third device, or the configuration information of the first sidelink resource pool is received by the third device from the network device. One or more sidelink resource pools may be configured for the third device, and the sidelink resource pools configured for the third device include the first sidelink resource pool. The one or more sidelink resource pools configured for the third device may be partially the same as or completely the same as the one or more sidelink resource pools configured for the first device.

For example, the first device determines, based on the first sensing information, the first indication information, and/or the second indication information, whether the K reference signal resources are occupied, and determines an available reference signal resource set, to determine N reference signal resources in the available reference signal resource set.

Optionally, in the finally determined N reference signal resources, any V+1 reference signal resources need to not occupy a same time subunit, where V is a minimum value in a quantity of spatial domain parameters (or spatial domain transmit parameters) that are capable of being simultaneously used when the first device receives a signal and a quantity of spatial domain parameters (or spatial domain receive parameters) that are capable of being simultaneously used when the second device receives a signal.

In this way, it is ensured that beam detection in the same time subunit does not exceed capabilities of the first device and the second device. The first device and the second device may exchange the capabilities, or V=1 is used by default.

Based on the foregoing descriptions, after determining the N reference signal resources, the first device may need to send reference signals by using different beams/spatial domain parameters (for example, S308 below), and whether the reference signals are occupied in different beam directions may be different. Therefore, in a possible design manner, S303 may be implemented by performing S303a. For example, S303 may include S303a and S303b. For details of S303a and S303b, refer to FIG. 3c.

S303a: The first device determines N reference signal resource sets based on the first sensing information, the first indication information, and/or the second indication information.

Optionally, the N reference signal resource sets are in one-to-one correspondence with N first spatial domain parameters. The N first spatial domain parameters may be the N first spatial domain parameters of the first device. As described above, the N first spatial domain parameters may respectively correspond to the N second spatial domain parameters of the second device, to form the N BPLs. Therefore, that the N reference signal resource sets are in one-to-one correspondence with the N first spatial domain parameters may also be understood as that the N reference signal resource sets are in one-to-one correspondence with the N second spatial domain parameters or the N reference signal resource sets are in one-to-one correspondence with the BPLs including the N first spatial domain parameters and the second spatial domain parameters.

For example, the first device determines an unoccupied reference signal resource in a beam direction corresponding to each of the N first spatial domain parameters, and the unoccupied reference signal resource through the beam C orresponding to each first spatial domain parameter forms one reference signal resource set.

For example, the first device determines an unoccupied reference signal resource in a beam direction corresponding to each of the N second spatial domain parameters, and the unoccupied reference signal resource through the beam C orresponding to each second spatial domain parameter forms one reference signal resource set.

For example, the first device determines an unoccupied reference signal resource on each of the N BPLs, that is, an unoccupied reference signal resource in a beam direction corresponding to each of the N first spatial domain parameters of the first device and an unoccupied reference signal resource in a beam direction corresponding to each of the N second spatial domain parameters of the second device, and an unoccupied reference signal resource on each BPL forms one reference signal resource set.

Optionally, each of the N reference signal resource sets includes at least one of the K reference signal resources. Each reference signal resource in each reference signal resource set is not occupied when a first spatial domain parameter and/or a second spatial domain parameter corresponding to the reference signal resource set are/is used, and is included in the K reference signal resources.

By performing S303a, the first device can determine reference signal resource sets that are not occupied when different spatial domain parameters or different beam directions are used, and determine one reference signal resource in each reference signal resource set for subsequent sending of a reference signal. The reference signal resources in the N reference signal resource sets may completely overlap, may partially overlap, or may not overlap at all.

Optionally, the N first spatial domain parameters may be spatial domain parameters on which beam failure detection needs to be performed between the first device and the second device. Alternatively, the N first spatial domain parameters may be spatial domain parameters on which channel state information measurement or reporting needs to be performed between the first device and the second device.

It is assumed that N=2, and the N first spatial domain parameters include a first spatial domain parameter 1 and a first spatial domain parameter 2. The first device may determine, based on the first manner, the first indication information, and/or the second indication information, a reference signal resource set 1 corresponding to the first spatial domain parameter 1; and determine, based on the first manner, the first indication information, and/or the second indication information, a reference signal resource set 2 corresponding to the first spatial domain parameter 2. The reference signal resource set 1 is a set of reference signal resources that are in the K reference signal resources and that are not occupied in a beam direction of the first spatial domain parameter 1. The reference signal resource set 2 is a set of reference signal resources that are in the K reference signal resources and that are not occupied in the beam direction of the first spatial domain parameter 2.

S303b: The first device selects one reference signal resource from each of the N reference signal resource sets.

For example, the first device selects one reference signal resource from each of the N reference signal resource sets, and finally selects N different reference signal resources.

It is assumed that the K reference signal resources include a reference signal resource 1, a reference signal resource 2, and a reference signal resource 3, a reference signal resource set 1 (corresponding to the first spatial domain parameter 1) includes the reference signal resource 1, the reference signal resource 2, and the reference signal resource 3, and a reference signal resource set 2 (corresponding to the first spatial domain parameter 2) includes the reference signal resource 1 and the reference signal resource 2. The first device selects the reference signal resource 3 from the reference signal resource set 1, and selects the reference signal resource 2 from the reference signal resource set 2. In this way, two unoccupied reference signal resources are determined.

On the first sidelink resource pool, other devices are distributed in different directions of the first device. Therefore, even on a same reference signal resource, when the first device receives reference signals in different beam directions by using different first spatial domain parameters, received powers of the obtained reference signals may be different. In this application, a corresponding unoccupied reference signal resource is determined for a beam direction corresponding to each first spatial domain parameter and/or second spatial domain parameter. Then, N different reference signal resources are selected from all the unoccupied reference signal resources (N reference signal resource sets). The unoccupied reference signal resource may be determined for each beam direction, to improve accuracy of determining the unoccupied reference signal resource and space division utilization efficiency of the reference signal resource, and ensure that reference signal resources selected by devices do not interfere with each other.

In a possible design manner, S303 may include at least one of S304 to S306. Refer to FIG. 3d. An execution sequence of S304, S305, and S306 is not limited in this application.

S304: The first device receives and measures the reference signal on the part or all of the K reference signal resources in the first sidelink resource pool (first manner), to determine whether the part or all of the K reference signal resources are occupied, in other words, whether the part or all of the K reference signal resources can be used as candidate resources of the N reference signal resources. The first manner may also be understood as that the first device determines an available reference signal resource in a sensing manner.

For example, the first device determines the first sensing information in the first manner. The first sensing information includes a received power on the part or all of the K reference signal resources, and the part or all of the K reference signal resources include a second reference signal resource. The second reference signal resource is any one of the part or all of the K reference signal resources. If the received power on the second reference signal resource is greater than or equal to a preset threshold, it is determined that the second reference signal resource is occupied. In other words, the N reference signal resources do not include the second reference signal resource. For example, the first device receives and measures the reference signal on the part or all of the K reference signal resources, to determine an unoccupied reference signal resource. Specifically, when the first device receives and measures the reference signal on the reference signal resource 1, and an RSRP on the reference signal resource 1 is greater than or equal to the preset threshold, the first device determines that the reference signal resource 1 is occupied. In other words, the N reference signal resources do not include the reference signal resource 1. If a value of the RSRP on the reference signal resource 1 is less than or equal to the preset threshold, the first device determines that the reference signal resource is not occupied. In other words, the N reference signal resources may include the reference signal resource 1. However, further, whether the reference signal resource 1 can be used as one of the N reference signal resources may be finally determined by the first device based on related information in S305 and S306. When the RSRP is equal to the preset threshold, this case may be classified into a case in which the resource is occupied or a case in which the resource is not occupied. Descriptions of comparison of the RSRP with the threshold in the following designs are similar, that is, the designs may be classified into the case in which the resource is occupied or the case in which the resource is not occupied. Details are not described.

For example, the first device may determine an available reference signal resource set in the first manner, and determine N reference signal resources in the reference signal resource set.

In a possible design manner, S304 may be implemented by performing S304a (not shown in the figure).

S304a: The first device receives and measures the reference signal on the part or all of the K reference signal resources in the first sidelink resource pool (first manner), to determine the N reference signal resource sets, that is, determine whether the part or all of the K reference signal resources are occupied when the N first spatial domain parameters/beams are used, so as to determine whether the part or all of the K reference signal resources can be used as candidate resources of the N reference signal resources corresponding to the N first spatial domain parameters.

For a correspondence between a reference signal resource set and a spatial domain parameter, refer to the related descriptions in S303a. Details are not described herein again.

Optionally, that the first device determines N reference signal resource sets based on the first sensing information includes: The first device receives and measures the reference signal on the part or all of the K reference signal resources by using one of the N first spatial domain parameters, to obtain the received power on the part or all of the K reference signal resources. If the received power on the second reference signal resource is greater than or equal to the preset threshold, it is determined that the second reference signal resource is occupied. In other words, a first reference signal resource set does not include the second reference signal resource.

The part or all of the K reference signal resources include the second reference signal resource. The first reference signal resource set is a reference signal resource set corresponding to one of the N first spatial domain parameters. The first reference signal resource set is one of the N reference signal resource sets.

For example, the first device receives and measures the reference signal on the part or all of the K reference signal resources by using the first spatial domain parameter 1, to determine a reference signal resource that is not occupied when the first spatial domain parameter 1 is used, and determine a set of the reference signal resource corresponding to the first spatial domain parameter 1. Optionally, the first device may perform this step once by using each of the N first spatial domain parameters, to determine a set of reference signal resources corresponding to each first spatial domain parameter.

Specifically, the first device receives and measures the reference signal on the second reference signal resource (one of the K reference signal resources) by using the first spatial domain parameter 1, to obtain a received power (for example, an RSRP) of the reference signal. If a value of the RSRP is greater than or equal to the preset threshold, it is determined that the second reference signal resource is occupied in a beam direction corresponding to the first spatial domain parameter 1. To be specific, the second reference signal resource is removed from a reference signal resource set corresponding to the first spatial domain parameter 1, or a reference signal resource set corresponding to the first spatial domain parameter 1 does not include the second reference signal resource. If the value of the RSRP is less than or equal to the preset threshold, it is determined that the second reference signal resource is not occupied, but whether the second reference signal resource is finally included in the reference signal resource set corresponding to the first spatial domain parameter 1 may be further determined based on related information in the steps S305 and S306. When the RSRP is equal to the preset threshold, this case may be classified into the case in which the resource is occupied or the case in which the resource is not occupied. This is not limited.

For example, the first manner includes receiving and measuring the reference signal on the part or all of the K reference signal resources by using the N first spatial domain parameters. The first manner may be used in both S304 and S304a.

In some embodiments, the receiving and measuring the reference signal on the part or all of the K reference signal resources by using the N first spatial domain parameters includes: receiving and measuring the reference signal on the part or all of the K reference signal resources in a first resource window by using the N first spatial domain parameters.

Optionally, the first resource window includes M reference signal resource periodicities, each of the M reference signal resource periodicities includes at least one first time unit, and the first time unit is a time unit in which the K reference signal resources are located. In this case, the first device receives and measures the reference signal in each first time unit in the first resource window by using the N first spatial domain parameters, to obtain received powers of the K reference signals, and determines, based on the received powers of the K reference signals, whether the K reference signal resources are occupied.

For example, the first device may determine the reference signal resource periodicity based on the time domain configuration information of the K reference signal resources in the first configuration information in step S302.

For example, the time unit may include a slot. One time unit includes at least one time subunit. For example, the time subunit is a symbol.

In S304 and S304a, in the first manner, the first device may receive and measure the reference signal on the part or all of the K reference signal resources in the first resource window by using the N first spatial domain parameters, or the first device may receive and measure the reference signal on the part or all of the K reference signal resources in the first resource window. In this way, the first device may determine the N reference signal resources based on a detection result (a result of receiving and measuring the reference signal on the part or all of the K reference signal resources) in the first resource window.

For example, the first device may obtain a first received power (for example, an RSRP) of the reference signal by receiving and measuring the reference signal on the reference signal resource. If the first received power is greater than or equal to the preset threshold, the first device determines that the reference signal resource is occupied. If the first received power is less than or equal to the preset threshold, the first device determines that the reference signal resource is not occupied. The first received power of the reference signal may be a maximum received power of the reference signal in the M reference signal resource periodicities in the first resource window, or the first received power of the reference signal may be an average value or a weighted average value of received powers of the reference signal in the M reference signal resource periodicities in the first resource window.

It is assumed that the K reference signal resources include the reference signal resource 1 and the reference signal resource 2, and the first resource window includes two reference signal resource periodicities, for example, a reference signal resource periodicity 1 and a reference signal resource periodicity 2. In the reference signal resource periodicity 1, the first device receives a reference signal 1 on the reference signal resource 1 and obtains a received power 1a, and receives a reference signal 2 on the reference signal resource 2 and obtains a received power 2a. In the reference signal resource periodicity 2, the first device receives the reference signal 1 on the reference signal resource 1 and obtains a received power 1b, and receives the reference signal 2 on the reference signal resource 2 and obtains a received power 2b. Assuming that the received power 1a is greater than the received power 1b, and the received power 2a is greater than the received power 2b, the first received power of the reference signal 1 may be the received power 1a or an average value or a weighted average value of the received power 1a and the received power 1b, and the first received power of the reference signal 2 may be the received power 2a or an average value or a weighted average value of the received power 2a and the received power 2b.

Optionally, the first device determines the first resource window based on configuration information of the first resource window.

For example, the configuration information of the first resource window may include a start moment and an end moment. The start moment is used to determine a start position of the first resource window, and the end moment is used to determine an end position of the first resource window. For example, the start position of the first resource window is the start moment, and the end position of the first resource window is the end moment.

The configuration information of the first resource window may further include first duration and second duration. The first duration is used to determine the start position of the first resource window, the second duration is used to determine the end position of the first resource window, and the second duration may be a period of time needed for receiving and measuring the reference signal and/or obtaining the first received power. For example, the start position of the first resource window is the start moment minus the first duration, and the end position of the first resource window is the end moment minus the second duration.

In this way, the first resource window may be adjusted based on the first duration and the second duration, and different first resource windows may adapt to different channel state change speeds.

For another example, the configuration information of the first resource window may include a value of M. In this case, the first resource window includes M reference signal resource periodicities that are before a third moment and that are closest to the third moment. The third moment may be a moment at which the first device needs to determine the N reference signal resources, and M is a quantity of reference signal resource periodicities included in the first resource window.

The configuration information of the first resource window may include second duration and the value of M. For example, the first resource window includes M reference signal resource periodicities that are closest to the third moment, that are before the third moment, and whose distances from the third moment are greater than or equal to the second duration. In this way, a period of time for receiving and measuring the reference signal and/or obtaining the first received power is reserved before the third moment, so that whether the K reference signal resources are occupied can be determined.

Optionally, the configuration information of the first resource window is included in the configuration information of the first sidelink resource pool, for example, in the first configuration information.

Specifically, in S304 and S304a, the first device may determine, based on the following method, a spatial domain parameter used in the first manner, that is, the spatial domain parameter used during reference signal sensing.

In some embodiments, each of the M reference signal resource periodicities corresponds to at least one of the N first spatial domain parameters.

Optionally, the first device receives a reference signal by using a maximum of $V_1$ first spatial domain parameters in each reference signal resource periodicity, where $V_1$ is a quantity of spatial domain parameters that are capable of being simultaneously used when the first device receives the signal.

Optionally, at least one first spatial domain parameter is used by the first device to receive a reference signal on a part or all of K reference signal resources in a reference signal resource periodicity corresponding to the at least one first spatial domain parameter.

To be specific, the first device receives a reference signal on a part or all of K reference signal resources by using at least one of the N first spatial domain parameters in each reference signal resource periodicity, and determines the N unoccupied reference signal resources.

Optionally, a correspondence between each of the M reference signal resource periodicities and the at least one first spatial domain parameter is determined by the first device based on a quantity of spatial domain parameters that are capable of being simultaneously used when the first device receives the signal.

For example, the quantity $V_1$ of spatial domain parameters that are capable of being simultaneously used when the first device receives the signal may be a quantity $V_1$ of spatial domain parameters that are used when the first device receives the signal in one time subunit. For example, the time subunit includes a symbol.

Optionally, $M \geq \lceil N/V_1 \rceil$, M is a quantity of the reference signal resource periodicities, and $V_1$ is the quantity of spatial domain parameters that are capable of being simultaneously used when the first device receives the signal.

When $V_1 = 1$, N≤M. To be specific, when the first device can use only one spatial domain parameter to receive the reference signal in each reference signal resource periodicity, a quantity of reference signal resource periodicities included in the first resource window needs to be greater than N, to ensure that the first device senses the part or all of the K reference signal resources on each of the N first spatial domain parameters.

In some embodiments, an $X^{th}$ reference signal resource periodicity in the M reference signal resource periodicities corresponds to

$$\left( Mod\left(X - 1 + C, \left\lceil \tfrac{N}{V_1} \right\rceil \right) \times V_1 + 1 \right)^{th}$$

to

$$\left(\min\left(\left(Mod\left(X - 1 + C, \left\lceil \tfrac{N}{V_1} \right\rceil \right) + 1\right) \times V_1, N\right)\right)^{th}$$

first spatial domain parameters in the N first spatial domain parameters. Alternatively, an $X^{th}$ reference signal resource periodicity in the M reference signal resource periodicities corresponds to $(Mod((X - 1) \times V_1 + 1 + C, N))^{th}$ to $(Mod((X - 1) \times V_1 + V_1 + C, N))^{th}$ first spatial domain parameters in the N first spatial domain parameters. The $X^{th}$ reference signal resource periodicity is an $X^{th}$ reference signal resource periodicity after a start moment of a frame 0 closest to a current reference signal periodicity, the mathematical symbol mod represents a modulo operation, for example, Mod(5, 2)=1, the mathematical symbol $\lceil \ \rceil$ represents rounding up, for example, $\left\lceil \tfrac{5}{2} \right\rceil = 3$, $V_1$ is the quantity of spatial domain parameters that are capable of being simultaneously used when the first device receives the signal, and C is a configured or pre-configured integer.

The $(Mod((X - 1) \times V_1 + 1 + C, N))^{th}$ to $(Mod((X - 1) \times V_1 + V_1 + C, N))^{th}$ first spatial domain parameters may be understood as the $V_1$ first spatial domain parameters in a cycle constructed by {1, 2, 3, ..., N}, that is, a case in which $Mod((X - 1) \times V_1 + 1 + C, N)$ is greater than $Mod((X - 1) \times V_1 + V_1 + C, N)$ may occur. For example, when N=5, $Mod((X - 1) \times V_1 + 1 + C, N)$=4, and $Mod((X - 1) \times V_1 + V_1 + C, N)$=1, the $(Mod((X - 1) \times V_1 + 1 + C, N))^{th}$ to $(Mod((X - 1) \times V_1 + V_1 + C, N))^{th}$ first spatial domain parameters should be understood as the $4^{th}$ to the $1^{st}$ spatial domain parameters in the cycle constructed by {1, 2, 3, 4, 5}, namely, the $4^{th}$, $5^{th}$, and $1^{st}$ spatial domain parameters.

Optionally, configuration information of C is included in the configuration information of the first sidelink resource pool.

Optionally, the first device may determine the start moment of the frame 0 by detecting a synchronization signal/physical sidelink broadcast channel block (synchronization signal/physical sidelink broadcast channel block, SSB) sent by another device, or the first device directly determines the start moment of the frame 0 when the first device sends the SSB.

In this case, in the $X^{th}$ reference signal resource periodicity, the reference signal may be received and measured on the part or all of the K reference signal resources by using the

$$\left( Mod\left(X - 1 + C, \left\lceil \tfrac{N}{V_1} \right\rceil \right) \times V_1 + 1 \right)^{th}$$

to

$$\left( \min\left(\left(Mod\left(X - 1 + C, \left\lceil \tfrac{N}{V_1} \right\rceil \right) + 1\right) \times V_1, N\right) \right)^{th}$$

first spatial domain parameters. Alternatively, in the $X^{th}$ reference signal resource periodicity, the reference signal may be received and measured on the part or all of the K reference signal resources by using the $(Mod((X - 1) \times V_1 + 1 + C, N))^{th}$ to $(Mod((X - 1) \times V_1 + V_1 + C, N))^{th}$ first spatial domain parameters in the N first spatial domain parameters.

For example, it is assumed that the quantity M of reference signal resource periodicities is equal to 4, the quantity N of spatial domain parameters on which beam failure detection needs to be performed is equal to 2, where the spatial domain parameters are respectively denoted as a first spatial domain parameter 1 and a first spatial domain parameter 2, $V_1$=1, and the start position of the first resource window is aligned with the start moment of the frame 0. In this case, the first spatial domain parameter 1 is used to receive and measure the K reference signals in the $1^{st}$ reference signal resource periodicity and the $2^{nd}$ reference signal resource periodicity, and the first spatial domain parameter 2 is used to receive and measure the K reference signals in the $3^{rd}$ reference signal resource periodicity and the $4^{th}$ reference signal resource periodicity.

In some other embodiments, in the M reference signal resource periodicities, $1^{st}$, $(1+\lceil N/V_1 \rceil)^{th}$, $(1+2\times\lceil N/V_1 \rceil)^{th}$, ... reference signal resource periodicities correspond to $1^{st}$ to $V_1^{th}$ first spatial domain parameters in the N first spatial domain parameters, $2^{nd}$, $(2+\lceil N/V_1 \rceil)^{th}$, $(2+2\times\lceil N/V_1 \rceil)^{th}$, ... reference signal resource periodicities correspond to $(V_1+1)^{th}$ to $(2V_1)^{th}$ first spatial domain parameters, and $(\lceil N/V_1 \rceil)^{th}$, $(2\times\lceil N/V_1 \rceil)^{th}$, $(3\times\lceil N/V_1 \rceil)^{th}$, ... reference signal resource periodicities correspond to

$((\lceil N/V_1 \rceil - 1) \times V_1)^{\text{th}}$ to N$^{\text{th}}$ first spatial domain parameters. The mathematical symbol mod represents a modulo operation, for example, Mod(5, 2)=1, the mathematical symbol $\lceil \rceil$ represents rounding up, for example, $\left\lceil \frac{5}{2} \right\rceil = 3$, and $V_1$ is the quantity of spatial domain parameters that are capable of being simultaneously used when the first device receives the signal.

For example, it is assumed that the quantity M of reference signal resource periodicities is equal to 7, the quantity N of spatial domain parameters on which beam failure detection needs to be performed is equal to 5, where the spatial domain parameters are respectively denoted as a first spatial domain parameter 1 to a first spatial domain parameter 5, and $V_1$=2. In this case, in the 1$^{\text{st}}$, 4$^{\text{th}}$, and 7$^{\text{th}}$ reference signal resource periodicities in the first resource window, the reference signal is received and measured by using the first spatial domain parameter 1 and the first spatial domain parameter 2. In the 2$^{\text{nd}}$ and 5$^{\text{th}}$ reference signal resource periodicities, the reference signal is received and measured by using the first spatial domain parameter 3 and the first spatial domain parameter 4. In the 3$^{\text{rd}}$ and 6$^{\text{th}}$ reference signal resource periodicities, the reference signal is received and measured by using the first spatial domain parameter 5.

For another example, it is assumed that the quantity M of reference signal resource periodicities is equal to 4, the quantity N of spatial domain parameters on which beam failure detection needs to be performed is equal to 2, where the spatial domain parameters are respectively denoted as a first spatial domain parameter 1 and a first spatial domain parameter 2, and $V_1$=1. In this case, in the 1$^{\text{st}}$ and 3$^{\text{rd}}$ reference signal resource periodicities in the first resource window, the reference signal is received and measured by using the first spatial domain parameter 1. In the 2$^{\text{nd}}$ and 4$^{\text{th}}$ reference signal resource periodicities, the reference signal is received and measured by using the first spatial domain parameter 2.

In some other embodiments, in the M reference signal resource periodicities, 1$^{\text{st}}$ to $(\lfloor M/\lceil N/V_1 \rceil \rfloor)^{\text{th}}$ reference signal resource periodicities correspond to 1$^{\text{st}}$ to $(V_1)^{\text{th}}$ first spatial domain parameters in the N first spatial domain parameters, $(\lfloor M/\lceil N/V_1 \rceil \rfloor + 1)^{\text{th}}$ to $(2 \times \lfloor M/\lceil N/V_1 \rceil \rfloor)^{\text{th}}$ reference signal resource periodicities correspond to $(V_1+1)^{\text{th}}$ to $(2V_1)^{\text{th}}$ first spatial domain parameters, and $(M - Mod(M, \lceil \frac{N}{V_1} \rceil) + 1 - \lfloor M/\lceil N/V_1 \rceil \rfloor)^{\text{th}}$ to M$^{\text{th}}$ reference signal resource periodicities correspond to $((\lceil N/V_1 \rceil - 1) \times V_1)^{\text{th}}$ to N$^{\text{th}}$ first spatial domain parameters. The mathematical symbol mod represents a modulo operation, the mathematical symbol $\lceil \rceil$ represents rounding up, and $V_1$ is the quantity of spatial domain parameters that are capable of being simultaneously used when the first device receives the signal.

For example, it is assumed that the quantity M of reference signal resource periodicities is equal to 7, the quantity N of spatial domain parameters on which beam failure detection needs to be performed is equal to 5, where the spatial domain parameters are respectively denoted as a first spatial domain parameter 1 to a first spatial domain parameter 5, and $V_1$=2. In this case, in the 1$^{\text{st}}$ and 2$^{\text{nd}}$ reference signal resource periodicities in the first resource window, the reference signal is received and measured by using the first spatial domain parameter 1 and the first spatial domain parameter 2. In the 3$^{\text{rd}}$ and 4$^{\text{th}}$ reference signal resource periodicities, the reference signal is received and measured by using the first spatial domain parameter 3 and the first spatial domain parameter 4. In the 5$^{\text{th}}$ to 7$^{\text{th}}$ reference signal resource periodicities, the reference signal is received and measured by using the first spatial domain parameter 5.

Optionally, in S304 and S304a, the first device may further remove a reference signal resource that has been occupied by the first device.

Optionally, when the first device does not perform receiving and detection in one time subunit, the first device may consider that all reference signal resources corresponding to the time subunit are occupied.

Optionally, when the first device does not perform receiving and detection in one time subunit, the first device may consider that all reference signal resources corresponding to the time subunit except a reference signal resource occupied by the first device are occupied.

S305: The second device sends the first indication information to the first device. The first device receives the first indication information from the second device. The first indication information indicates the at least one reference signal resource recommended by the second device in the K reference signal resources, and/or the first indication information indicates the at least one reference signal resource not recommended by the second device in the K reference signal resources.

For example, when the first indication information includes indication information of the reference signal resource 2, and the reference signal resource 2 is a reference signal resource not recommended by the second device, the first device determines that the N reference signal resources do not include the reference signal resource 2.

For example, when the first indication information includes indication information of the reference signal resource 2, and the reference signal resource 2 is a reference signal resource recommended by the second device, the first device determines that the N reference signal resources may include the reference signal resource 2. However, further, whether the reference signal resource 2 can be used as one of the N reference signal resources may be finally determined by the first device based on related information in S304 and S306.

For example, when the first indication information includes indication information of the reference signal resource 3 and indication information of the reference signal resource 4, where the reference signal resource 3 is a reference signal resource recommended by the second device, and the reference signal resource 4 is a reference signal resource not recommended by the second device, the first device determines that the N reference signal resources may include the reference signal resource 3, and determines that the N reference signal resources do not include the reference signal resource 4.

It should be noted that the foregoing example is described by using an example in which the first indication information includes one recommended or non-recommended reference signal resource. The first indication information may include one or more recommended or non-recommended reference signal resources. This is not limited.

In a possible design manner, the second device may receive and measure the reference signal on a part or all of the K reference signal resources in the first sidelink resource pool (second manner), to determine whether the part or all of the K reference signal resources are occupied, and determine a recommended or not-recommended reference signal resource in the first indication information. For example, whether a reference signal resource is occupied is determined based on an RSRP of a signal received on the reference signal resource. If the RSRP is greater than or equal to the preset threshold, it is considered that the reference signal resource is occupied. In this case, the first indication information may indicate, to the first device, that the reference signal resource is not recommended. If the RSRP is less than or equal to the preset threshold, it is considered that the reference signal is not occupied. In this case, the first indication information may indicate, to the first device, that the reference signal resource is recommended.

In a possible design manner, S305 may be implemented by performing S305a (not shown in the figure).

S305a: The second device sends the first indication information to the first device. The first device receives the first indication information from the second device. The first indication information further indicates, based on S305, a first spatial domain parameter associated with each of the at least one reference signal resource recommended by the second device, and/or the first indication information further indicates a first spatial domain parameter associated with each of the at least one reference signal resource not recommended by the second device.

For example, the N first spatial domain parameters of the first device are in one-to-one correspondence with the N first spatial domain parameters of the second device, and can form N BPLs. Therefore, S305a may also be understood as that the first indication information further indicates, based on S305, a second spatial domain parameter/BPL associated with each of the at least one reference signal resource recommended by the second device, and/or the first indication information further indicates a second spatial domain parameter/BPL associated with each of the at least one reference signal resource not recommended by the second device.

For example, the first indication information includes a correspondence between the at least one reference signal resource recommended by the second device and the first spatial domain parameter (or an equivalent second spatial domain parameter or BPL), and an identifier of the at least one reference signal resource recommended by the second device. For example, the first indication information includes a correspondence between the at least one reference signal resource not recommended by the second device and the first spatial domain parameter (or an equivalent second spatial domain parameter or BPL), and an identifier of the at least one reference signal resource not recommended by the second device.

For another example, the first indication information may include a correspondence between the at least one reference signal resource recommended by the second device and at least one first reference signal resource, and an identifier of the at least one reference signal resource recommended by the second device. Each of the at least one reference signal resource recommended by the second device and each of the at least one first reference signal resource have a type-D quasi co-location relationship, and the at least one reference signal resource recommended by the second device is in one-to-one correspondence with the at least one first reference signal resource. Alternatively, the first indication information may include a correspondence between the at least one reference signal resource not recommended by the second device and at least one first reference signal resource, and an identifier of the at least one reference signal resource not recommended by the second device. Each of the at least one reference signal resource not recommended by the second device and each of the at least one first reference signal resource have a type-D quasi co-location relationship, and the at least one reference signal resource not recommended by the second device is in one-to-one correspondence with the at least one first reference signal resource.

Having the type-D quasi co-location relationship means that beams corresponding to one reference signal resource are the same as or similar to beams (including a transmit/receive beam of the first device and a receive/transmit beam of the second device) corresponding to another first reference signal resource. For example, when the first device and the second device have performed beam training on the first reference signal resource, a spatial domain parameter corresponding to the first reference signal resource has been determined. In this way, when a reference signal resource and the first reference signal resource have the type-D quasi co-location relationship, the first device and the second device may send and receive the reference signal by using a beam that is the same as or similar to the beam corresponding to the first reference signal resource.

For example, the first indication information includes indication information of the reference signal resource 2 and indication information of the first spatial domain parameter 2, the first spatial domain parameter 2 is one of the N first spatial domain parameters, and the reference signal resource 2 is associated with the first spatial domain parameter 2.

When the reference signal resource 2 is a reference signal resource recommended by the second device, the first device determines that the reference signal resource set 2 may include the reference signal resource 2. The reference signal resource set 2 is a reference signal resource set corresponding to the first spatial domain parameter 2. However, further, whether the reference signal resource 2 can be used as one reference signal resource in the reference signal resource set 2 may be finally determined by the first device based on related information in S304a and S306a.

When the reference signal resource 2 is a reference signal resource not recommended by the second device, the first device removes the reference signal resource 2 from the reference signal resource set 2. The reference signal resource set 2 is a reference signal resource set corresponding to the first spatial domain parameter 2. For example, the first indication information includes an index of the reference signal resource 2 and an index of the reference signal resource 3. The reference signal resource 2 is one of the K reference signal resources, and the reference signal resource 2 and the reference signal resource 3 have a quasi co-location relationship. When the first device and the second device previously performed beam training on the reference signal resource 3, the first device may determine, based on the reference signal resource 3, that a first spatial domain parameter associated with the reference signal resource 2 is a first spatial domain parameter for previously sending the reference signal resource 3.

When the reference signal resource 2 is a reference signal resource recommended by the second device, the first device determines that the reference signal resource set 2 may include the reference signal resource 2. The reference signal resource set 2 is a reference signal resource set corresponding to a first spatial domain parameter used for the reference signal resource 3. However, further, whether the reference signal resource 2 can be used as one reference signal resource in the reference signal resource set 2 may be finally determined by the first device based on related information in S304a and S306a.

When the reference signal resource 2 is a reference signal resource not recommended by the second device, the first device removes the reference signal resource 2 from the reference signal resource set 2. The reference signal resource set 2 is a reference signal resource set corresponding to a first spatial domain parameter used for the reference signal resource 3.

In a possible design manner, the second device may receive and measure a reference signal on a part or all of the K reference signal resources in the first sidelink resource pool (second manner), to determine whether the part or all of the K reference signal resources are occupied when the N second spatial domain parameters/beams are used, so as to determine whether the part or all of the K reference signal resources can be used as candidate resources of the N reference signal resources corresponding to the N first spatial domain parameters. Then, reference signal resources that are recommended or not recommended in the first indication information and first spatial domain parameters respectively corresponding to these reference signal resources are further determined.

The N second spatial domain parameters are spatial domain parameters corresponding to the N first spatial domain parameters. For example, the N first spatial domain parameters are N transmit/receive beams of the first device. In this case, the N second spatial domain parameters may be receive/transmit beams of the second device that correspond to the N transmit/receive beams of the first device, and the N transmit beams and the N receive beams may be N BPLs determined in a previous beam training process.

For example, for the method for determining, by the second device in the second manner, whether the reference signal resource is occupied, refer to the method for determining, by the first device in the first manner, whether the reference signal resource is occupied in S304/S304a.

In some embodiments, that the second device receives and measures the reference signal on the part or all of the K reference signal resources by using the N second spatial domain parameters, to determine the first indication information includes: The second device receives and measures the reference signal on the part or all of the K reference signal resources in a first resource window by using the N second spatial domain parameters, to determine the first indication information.

Optionally, the second device obtains the first resource window based on configuration information of the first resource window. For a method for determining the first resource window by the second device, refer to the corresponding descriptions in the method shown in S304. Details are not described herein again.

For example, the first resource window includes M reference signal resource periodicities, and the second device may receive and measure the reference signal on the part or all of the K reference signal resources by using a maximum of $V_2$ second spatial domain parameters in each reference signal resource periodicity. $V_2$ is a quantity of spatial domain parameters that are capable of being simultaneously used when the second device receives the signal. For a method for determining, by the second device in each reference signal resource periodicity, the maximum of $V_2$ second spatial domain parameters used to receive the reference signal, refer to the method for determining, by the first device in each reference signal resource periodicity, the maximum of $V_1$ first spatial domain parameters used to receive the reference signal. Details are not described herein again.

For example, the second device may determine the reference signal resource periodicity based on the time domain configuration information of the K reference signal resources in the first configuration information.

In some embodiments, each of the M reference signal resource periodicities corresponds to at least one of the N second spatial domain parameters.

Optionally, at least one second spatial domain parameter is used by the second device to receive a reference signal on a part or all of K reference signal resources in a reference signal resource periodicity corresponding to the at least one second spatial domain parameter.

To be specific, the second device receives the reference signal on the part or all of K reference signal resources by using at least one of the N second spatial domain parameters in each reference signal resource periodicity, and determines the unoccupied reference signal resources.

Optionally, the correspondence between each of the M reference signal resource periodicities and the at least one second spatial domain parameter is determined by the second device based on a quantity of spatial domain parameters that are capable of being simultaneously used when the second device receives the signal. A specific implementation is similar to an implementation in which the first device determines the correspondence between each of the M reference signal resource periodicities and the at least one first spatial domain parameter based on the quantity of spatial domain parameters that are capable of being simultaneously used when the first device receives the signal.

For example, the quantity $V_2$ of spatial domain parameters that are capable of being simultaneously used when the second device receives the signal may be a quantity $V_2$ of spatial domain parameters that are used when the second device receives the signal in one time subunit. For example, the time subunit includes a symbol.

Optionally, $M \geq \lceil N/V_2 \rceil$, M is a quantity of the reference signal resource periodicities, and $V_2$ is the quantity of spatial domain parameters that are capable of being simultaneously used when the second device receives the signal.

When $V_2 = 1$, N≤M. To be specific, when the second device can use only one spatial domain parameter to receive the reference signal in each reference signal resource periodicity, a quantity of reference signal resource periodicities included in the first resource window needs to be greater than N, to ensure that the second device senses the part or all of the K reference signal resources on each of the N second spatial domain parameters.

In some embodiments, an $X^{th}$ reference signal resource periodicity in the M reference signal resource periodicities corresponds to

$$( \ Mod\left(X - 1 + C, \left\lceil \frac{N}{V_2} \right\rceil\right) \times V_2 + 1 \ )^{th} \ \text{to}$$

$$( \min\left(\left(Mod\left(X - 1 + C, \left\lceil \frac{N}{V_2} \right\rceil\right) + 1\right) \times V_2, N \right) )^{th}$$

second spatial domain parameters in the N second spatial domain parameters, or an $X^{th}$ reference signal resource periodicity in the M reference signal resource periodicities corresponds to $(Mod((X-1) \times V_2 + 1 + C, N))^{th}$ to $(Mod((X-1) \times V_2 + V_2 + C, N))^{th}$ second spatial domain parameters in the N second spatial domain parameters. The $X^{th}$ reference signal resource periodicity is an $X^{th}$ reference signal resource periodicity after a start moment of a frame 0 closest to a current reference signal periodicity, the mathematical symbol mod represents a modulo operation, for example, Mod(5, 2)=1, the mathematical symbol ⌈ ⌉ represents rounding up, for example, $\left\lceil \frac{5}{2} \right\rceil = 3$, $V_2$ is the quantity of spatial domain parameters that are capable of being simultaneously used when the second device receives the signal, and C is a configured or pre-configured integer.

The $(Mod((X-1) \times V_2 + 1 + C, N))^{th}$ to $(Mod((X-1) \times V_2 + V_2 + C, N))^{th}$ second spatial domain parameters may be understood as the $V_2$ second spatial domain parameters in a cycle constructed by {1, 2, 3, ..., N}, that is, a case in which Mod((X-1) × $V_2$ + 1 + C, N) is greater than $Mod((X-1) \times V_2 + V_2 + C, N)$ may occur. For example, when N=5, $Mod((X-1) \times V_2 + 1 + C, N)$=4, and $Mod((X-1) \times V_2 + V_2 + C, N)$=1, the $(Mod((X-1) \times V_2 + 1 + C, N))^{th}$ to $(Mod((X-1) \times V_2 + V_2 + C, N))^{th}$ second spatial domain parameters should be understood as $4^{th}$ to $1^{st}$ spatial domain parameters in the cycle constructed by {1, 2, 3, 4, 5}, namely, the $4^{th}$, $5^{th}$, and $1^{st}$ spatial domain parameters.

Optionally, configuration information of C is included in the configuration information of the first sidelink resource pool.

Optionally, a specific implementation in which the second device determines the start moment of the frame 0 is similar to that in which the first device determines the start moment of the frame 0. Details are not described herein again.

In some other embodiments, in the M reference signal resource periodicities, $1^{st}$, $(1+\lceil N/V_2 \rceil)^{th}$, $(1+2 \times \lceil N/V_2 \rceil)^{th}$, ... reference signal resource periodicities correspond to $1^{st}$ to $(V_2)^{th}$ second spatial

domain parameters in the N second spatial domain parameters, 2nd, $(2+\lceil N/V_2\rceil)^{th}$, $(2+2\times\lceil N/V_2\rceil)^{th}$, ... reference signal resource periodicities correspond to $(V_2+1)^{th}$ to $(2V_2)^{th}$ second spatial domain parameters, and $(\lceil N/V_2\rceil)^{th}, (2\times\lceil N/V_2\rceil)^{th}, (3\times\lceil N/V_2\rceil)^{th}$, ... reference signal resource periodicities correspond to $((\lceil N/V_2\rceil-1)\times V)^{th}$ to Nth second spatial domain parameters. The mathematical symbol mod represents a modulo operation, the mathematical symbol ⌈ ⌉ represents rounding up, and $V_2$ is the quantity of spatial domain parameters that are capable of being simultaneously used when the second device receives the signal. For a specific example, refer to the descriptions corresponding to the first device side. Details are not described herein again.

In some other embodiments, in the M reference signal resource periodicities, 1st to $(\lfloor M/\lceil N/V_2\rceil\rfloor)^{th}$ reference signal resource periodicities correspond to 1st to $(V_2)^{th}$ second spatial domain parameters in the N second spatial domain parameters, $(\lfloor M/\lceil N/V_2\rceil\rfloor+1)^{th}$ to $(2\times\lfloor M/\lceil N/V_2\rceil\rfloor)^{th}$ reference signal resource periodicities correspond to $(V_2+1)^{th}$ to $(2V_2)^{th}$ second spatial domain parameters, and $(M-Mod(M,\lceil\frac{N}{V_2}\rceil)+1-\lfloor M/\lceil N/V_2\rceil\rfloor)^{th}$ to Mth reference signal resource periodicities correspond to $((\lceil N/V_2\rceil-1)\times V_2)^{th}$ to Nth second spatial domain parameters. The mathematical symbol mod represents a modulo operation, the mathematical symbol ⌈ ⌉ represents rounding up, and $V_2$ is the quantity of spatial domain parameters that are capable of being simultaneously used when the second device receives the signal. For a specific example, refer to the descriptions corresponding to the first device side. Details are not described herein again.

Optionally, when determining the first indication information, the second device may further remove a reference signal resource that has been occupied by the second device.

Optionally, when the second device does not perform receiving and detection in one time subunit, the second device may consider that all reference signal resources corresponding to the time subunit are occupied.

Optionally, when the second device does not perform receiving and detection in one time subunit, the second device may consider that all reference signal resources corresponding to the time subunit except a reference signal resource occupied by the second device are occupied.

S306: The first device receives the second indication information from the third device. The second indication information indicates at least one reference signal resource occupied by the third device in the K reference signal resources. The first device determines, based on the second indication information, whether a part or all of the K reference signal resources are occupied, that is, whether the part or all of the K reference signal resources can be used as candidate resources of the N reference signal resources.

In step S306, the third device may send the second indication information to the first device, to indicate that the third device is performing receiving on one or more reference signal resources. Based on the foregoing method, the first device can be prevented from causing interference to receiving of a reference signal by another device.

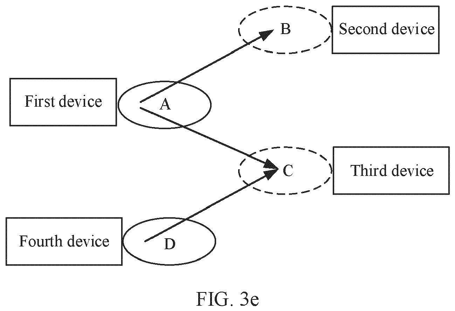

For example, as shown in FIG. 3e, the fourth device is sending a reference signal a to the third device on a reference signal resource a by using a transmit beam D (a transmit beam is a solid line, and a receive beam is a dashed line), and the third device receives the reference signal a by using a receive beam C. In addition, the first device wants to determine a reference signal resource, and sends a reference signal to the second device on the reference signal resource by using a beam A. The reference signal may be used for beam failure detection or channel state information measurement and reporting. Therefore, in step S304, the first device receives and measures the reference signal a by using the beam direction A as a receive beam. The transmit beam D of the fourth device is not aligned with the beam A of the first device. Therefore, the first device cannot determine, by performing only S304, that the reference signal resource a is occupied, and may select the reference signal resource a and send the reference signal to the second device through the beam A on the reference signal resource a. This causes interference to receiving performed by the third device. By performing step S306, the third device may send, through the beam C, the second indication information indicating that the reference signal resource a is occupied. After detecting the second indication information, the first device may determine that the reference signal resource has been occupied, and does not send the reference signal on the reference signal resource.

Optionally, the second indication information is from the third device. For example, the third device sends the second indication information to the first device. Correspondingly, the first device receives the second indication information from the third device.

In a possible design manner, S306 may be implemented by performing S306a (not shown in the figure).

S306a: The first device receives the second indication information from the third device, and the first device determines the N reference signal resource sets based on the second indication information.

Optionally, the first device receives the second indication information by using one of the N first spatial domain parameters. The first device determines, based on the second indication information, a reference signal resource set corresponding to the first spatial domain parameter used to receive the second indication information.

Optionally, if the first spatial domain parameter used by the first device to receive the second indication information corresponds to one of the N first spatial domain parameters, the first device may determine, based on the second indication information, the reference signal resource set corresponding to the first spatial domain parameter used to receive the second indication information.

For example, the second indication information indicates the at least one reference signal resource occupied by the third device in the K reference signal resources. If the first device receives the second indication information in a beam direction corresponding to the first spatial domain parameter 1 (one of the N first spatial domain parameters), it is determined that the reference signal resource indicated by the second indication information is removed from the reference signal resource set 1 corresponding to the first spatial domain parameter 1. In other words, the reference signal resource set 1 does not include the reference signal resource indicated by the second indication information.

Optionally, the second indication information further indicates a first spatial domain parameter associated with each of the at least one reference signal resource occupied by the third device.

For example, the second indication information includes an identifier of the at least one reference signal resource occupied by the third device and a correspondence between the at least one reference signal resource occupied by the third device and the first spatial domain parameter.

For example, the first device determines, based on the at least one reference signal resource occupied by the third device and the first spatial domain parameter corresponding to each of the at least one reference signal resource occupied by the third device, a reference signal resource that is not occupied when the first spatial domain parameter is used.

Optionally, the first device may determine the N reference signal resource sets based on the second indication information and a first power corresponding to the second indication information. For example, the first power is an RSRP of a demodulation reference signal in the second indication information. When the first power is greater than or equal to the preset threshold, the first device determines that a reference signal resource indicated in the second indication information is occupied.

Optionally, for a specific method for sending the second indication information by the third device, refer to a method for sending fourth indication information by the second device in S309. Details are not described herein.

In S303, the first device may determine the available reference signal resource by performing one method in S304 to S306, or may determine the available reference signal resource by combining at least two methods in S304 to S306.

For example, the first device may exclude an occupied reference signal resource based only on a sensing result (the first sensing information and the first manner) of the first device, to determine the candidate resources of the N reference signal resources, and determine the N reference signal resources in the candidate resources of the N reference signal resources. In other words, only S304 is performed.

Alternatively, the first device may exclude an occupied reference signal resource based on a sensing result of the first device, to determine the candidate resources of the N reference signal resources, then obtain an intersection set between the reference signal resource recommended by the second device and the candidate resources of the N reference signal resources, removes the reference signal resource not recommended by the second device from the candidate resources of the N reference signal resources to update the candidate resources of the N reference signal resources, and determine the N reference signal resources in updated candidate resources of the N reference signal resources. In other words, S304 and S305 are combined.

Alternatively, based on the combination of S304 and S305, the first device removes the reference signal resource occupied by the third device from the updated candidate resources of the N reference signal resources, determines candidate resources of the N reference signal resources that are updated for the second time, then determine the N reference signal resources in the candidate resources of the N reference signal resources that are updated for the second time. In other words, S304, S305, and S306 are combined. Certainly, there is another manner, for example, only S305, only S306, a combination of S304 and S306, or a combination of S305 and S306.

Similarly, in S303a, the first device may determine, by performing a method in S304a to S306a, the N reference signal resource sets respectively corresponding to the N first spatial domain parameters. Alternatively, at least two methods in S304a to S306a may be combined to determine the available reference signal resources.

For example, the first device determines the N reference signal resource sets based on the first sensing information. For a specific implementation, refer to S304a. Details are not described herein again.

For another example, the first device may determine the N reference signal resource sets based on the first indication information.

For example, the first device determines, based on the at least one reference signal resource recommended by the second device and the first spatial domain parameter corresponding to each of the at least one reference signal resource recommended by the second device, a reference signal resource that is not occupied when the first spatial domain parameter is used.

For another example, the first device may determine the N reference signal resource sets based on the first sensing information and the first indication information.

For example, on the basis of determining, in the first manner, a reference signal resource set corresponding to one first spatial domain parameter, the first device may further remove, based on the first indication information, the reference signal resource not recommended by the second device from the reference signal resource set corresponding to the first spatial domain parameter, and determine a final reference signal resource set corresponding to the first spatial domain parameter.

For another example, the first device may determine the N reference signal resource sets based on the second indication information.

For another example, the first device may obtain, based on the first sensing information and the second indication information, a reference signal resource that is not occupied when the first spatial domain parameter is used.

For example, on the basis of determining, in the first manner, a reference signal resource set corresponding to one first spatial domain parameter, the first device may further remove, based on the second indication information, the reference signal resource that has been occupied by the third device from the reference signal resource set corresponding to the first spatial domain parameter, and determine a final reference signal resource set corresponding to the first spatial domain parameter.

For another example, the first device may obtain, based on the first indication information and the second indication information, a reference signal resource that is not occupied when the first spatial domain parameter is used.

For example, the first device determines, based on the first indication information, a reference signal resource set corresponding to one first spatial domain parameter (one of the N first spatial domain parameters), then removes the at least one reference signal resource that is occupied by the third device and that is indicated in the second indication information from the reference signal resource set corresponding to the first spatial domain parameter, and determine a final reference signal resource set corresponding to the first spatial domain parameter.

For another example, the first device may determine the N reference signal resource sets based on the first sensing information, the first indication information, and the second indication information.

For example, on the basis of determining, in the first manner, a reference signal resource set corresponding to one first spatial domain parameter, the first device may further remove, based on the first indication information and the second indication information, the reference signal resource not recommended by the second device and the reference signal resource occupied by the third device from the reference signal resource set corresponding to the first spatial domain parameter, and determine a final reference signal resource set corresponding to the first spatial domain parameter.

Optionally, in this application, if the first device and/or the second device need/needs to perform beam failure detection on the N BPLs, when the first device and/or the second device cannot determine the N available or unoccupied reference signal resources in the K reference signal resources, the first device and the second device may further perform beam failure detection by using the following method shown in FIG. 5. Specifically, some BPLs may be detected by using the method in FIG. 3a, and other BPLs may be detected by using the method in FIG. 5.

Optionally, the method provided in this embodiment of this application may further include S307: The first device sends third indication information to the second device. Correspondingly, the second device receives the third indication information from the first device.

Optionally, the third indication information indicates the N reference signal resources.

To be specific, the first device may notify the second device of the N unoccupied reference signal resources determined by the first device, so that the second device can receive the reference signals on the N reference signal resources indicated by the third indication information, for example, perform beam failure detection on the N reference signal resources.

Optionally, the third indication information may further indicate the N first spatial domain parameters corresponding to the N reference signal resources. The second device may determine a receive beam on each reference signal resource based on the first spatial domain parameter corresponding to each reference signal resource.

Optionally, the N first spatial domain parameters of the first device may respectively correspond to the N second spatial domain parameters of the second device, to form the N BPLs. The third indication information may further equivalently indicate the N second spatial domain parameters or the N BPLs corresponding to the N reference signal resources.

For example, the third indication information may include identifiers of the N reference signal resources and identifiers of the N first spatial domain parameters (or N equivalent second spatial domain parameters or BPLs), and the N reference signal resources are in one-to-one correspondence with the N first spatial domain parameters.

For another example, the third indication information may include identifiers of the N reference signal resources and identifiers of N first reference signal resources, and each of the N reference signal resources and one of the N first reference signal resources have a type-D quasi co-location relationship. The N reference signal resources are in one-to-one correspondence with the N first reference signal resources.

Having the type-D quasi co-location relationship means that beams corresponding to the N reference signal resources are the same as or similar to beams (including a transmit/receive beam of the first device and a receive/transmit beam of the second device) corresponding to the N first reference signal resource. The first device and the second device have performed beam training on the N first reference signal resources, and have determined spatial domain parameters corresponding to the N first reference signal resources. In this way, the first device may further indicate the second device to transmit and/or receive the reference signals on the N reference signal resources by using the beam pairs corresponding to the N first reference signal resources.

S308: The first device sends the N reference signals to the second device on the N reference signal resources. Correspondingly, the second device receives the N reference signals from the first device on the N reference signal resources.

In a possible design, the first device sends the reference signals to the second device on the N reference signal resources by using the first spatial domain parameters respectively corresponding to the N reference signal resources. The second device receives, based on the third indication information, the reference signals from the first device on the N reference signal resources by using the second spatial domain parameters respectively corresponding to the N reference signal resources.

For example, if the N reference signal resources are periodic reference signal resources, the first device periodically sends the reference signals to the second device, and the second device periodically receives and measures the N reference signals. When the N reference signal resources are used for beam failure detection between the first device and the second device, and the second device detects, in a periodicity, that RSRPs of all the N reference signals are less than or equal to the preset threshold, the second device may report a beam failure instance (beam failure instance) to a higher layer. It should be noted that the RSRPs of the N reference signals may be RSRPs in a current periodicity, or may be average or weighted average RSRPs in the current periodicity and several previous periodicities.

Optionally, the beam failure may be understood as a beam failure at a physical layer. After determining that the beam failure occurs, the second device may report the beam failure instance to the higher layer, and the higher layer of the second device may maintain a second counter to count a quantity of beam failures. When a quantity of beam failures occurred within a period of time reaches a specific preset value, the higher layer determines that a beam failure event (beam failure event) occurs, to trigger a beam failure recovery process, for example, restart beam sweeping or beam training. After the beam training is completed, a new BPL between the first device and the second device may be determined, and a reference signal resource used for beam failure detection may be determined for the new BPL by using the method shown in FIG. 3a or FIG. 5.

In some embodiments, the first device may send the N reference signals to the second device on the N reference signal resources in a first sequence.

For example, the first sequence may be determined based on a device identifier of the first device and a device identifier of the second device.

For another example, the first sequence may be determined based on a priority of a service between the first device and the second device. For example, a sequence used to send the reference signals is determined based on a priority of the service between the first device and the second device.

For example, after determining the N unoccupied reference signal resources, the first device periodically sends the N reference signals to the second device at resource positions corresponding to the N reference signal resources.

It is assumed that N=2, the N reference signal resources include the reference signal resource 1 and the reference signal resource 2, the reference signal resource 1 corresponds to the first spatial domain parameter 1, the reference signal resource 2 corresponds to the first spatial domain parameter 2, the first device sends the reference signal 1 to the second device by using the first spatial domain parameter 1 and on the reference signal resource 1 corresponding to the first spatial domain parameter 1 in each reference signal resource periodicity, and the second device detects the reference signal 1 by using the second spatial domain parameter 1 corresponding to the first spatial domain parameter 1 and on the reference signal resource 1 corresponding to the first spatial domain parameter 1 in each reference signal resource periodicity. In addition, the first device sends the reference signal 2 to the second device by using the first spatial domain parameter 2 and on the reference signal resource 2 corresponding to the first spatial domain parameter 2 in each reference signal resource periodicity, and the second device detects the reference signal 2 by using the second spatial domain parameter 2 corresponding to the first spatial domain parameter 1 and on the reference signal resource 2 corresponding to the first spatial domain parameter 2 in each reference signal resource periodicity.

For example, one reference signal resource periodicity includes one first time unit, and the first time unit is a time unit in which the K reference signal resources are located. The first device sends the N reference signals to the second device on N unoccupied reference signal resources in the K reference signal resources in the reference signal resource periodicity.

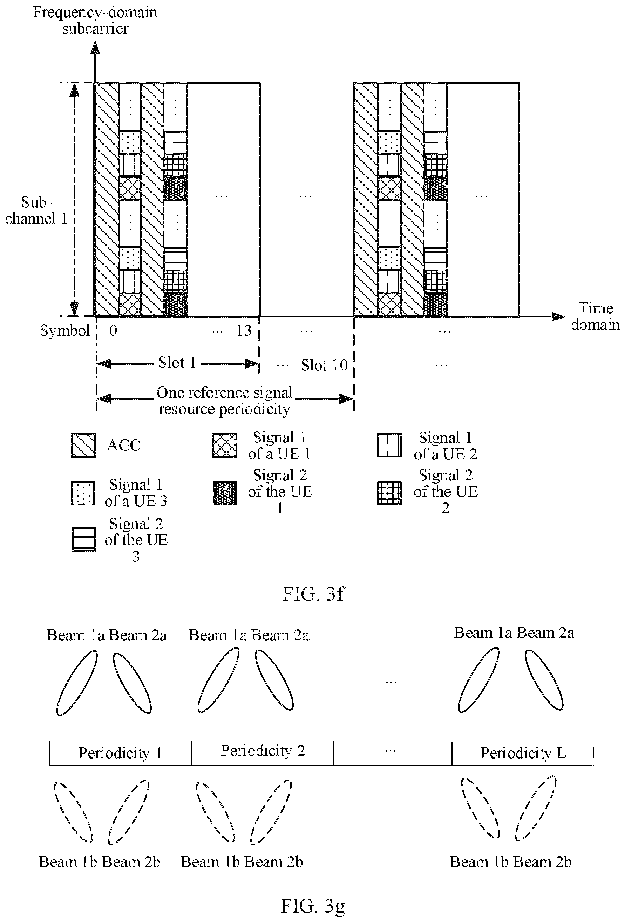

FIG. 3f is a diagram of reference signal resources according to an embodiment of this application.

As shown in FIG. 3f, it is assumed that a periodicity length of a reference signal resource periodicity is 10 slots. In each reference signal resource periodicity, reference signals and corresponding AGC symbols occupy an entire slot and an entire bandwidth other than a gap (GAP) symbol or a guard symbol (not shown in the figure), where each reference signal occupies one port. In other words, P=B=1. The reference signals are located on symbols 1, 3, 5, ..., and 13 in the slot. The AGC symbols are on symbols 0, 2, 4, ..., and 12, and content sent on an AGC symbol is repetition of content of a symbol following the AGC symbol.

A UE 1, a UE 2, and a UE 3 need to perform beam failure detection with a UE 4, a UE 5, and a UE 6 respectively, and two beams between each transmission pair (for example, the UE 1 and the UE 4) need to be detected. The UE 1, the UE 2, and the UE 3 can separately select, by using the method shown in FIG. 3a, two orthogonal reference signal resources to perform beam failure detection. The UE 1 sends a signal 1 to the UE 4 at a resource position of the signal 1 of the UE 1, and sends a signal 2 to the UE 4 at a resource position of the signal 2 of the UE 1. This is similar for the UE 2 and the UE 3, and details are not described one by one.

Because each UE can send and/or receive only one beam in one symbol, the two reference signal resources (as shown in FIG. 3f, the resource position of the signal 1 of the UE 1 and the resource position of the signal 2 of the UE 1) selected by the UE 1 are located in different symbols. This is similar for the UE 2 and the UE 3. According to the method shown in FIG. 3a, it can be ensured that the reference signal resources selected by the UE 1, the UE 2, and the UE 3 are strictly periodic and do not interfere with each other, thereby ensuring reliability of the reference signal resources used for the beam failure detection, and further improving reliability of the beam failure detection.

FIG. 3g is a diagram of application of beam failure detection according to an embodiment of this application.

For example, N=2. The first device and the second device perform beam failure detection. In a periodicity (reference signal resource periodicity) 1, the first device sends a reference signal 1 on a reference signal resource 1 by using a beam 1a (first spatial domain parameter), and the second device detects the reference signal 1 on the reference signal resource 1 by using a beam 1b (second spatial domain parameter), to obtain an RSRP value of the reference signal 1. The first device sends a reference signal 2 on a reference signal resource 2 by using a beam 2a (first spatial domain parameter), and the second device detects the reference signal 2 on the reference signal resource 2 by using a beam 2b (second spatial domain parameter), to obtain an RSRP value of the reference signal 2. If both the RSRP value of the reference signal 1 and the RSRP value of the reference signal 2 are less than the preset threshold, it is considered that one beam failure instance (beam failure instance) occurs, and the beam failure instance may be reported to a higher layer.

In some embodiments, the method provided in this embodiment of this application may further include S309: The second device sends fourth indication information. Correspondingly, the fourth device receives the fourth indication information from the second device (not shown in the figure).

Similar to the first device, the configuration information of the first sidelink resource pool is pre-configured on the fourth device, or the configuration information of the first sidelink resource pool is received by the fourth device from the network device. One or more sidelink resource pools may be configured for the fourth device, and the sidelink resource pools configured for the fourth device include the first sidelink resource pool. The one or more sidelink resource pools configured for the fourth device may be partially the same as or completely the same as the one or more sidelink resource pools configured for the first device.

Optionally, the fourth indication information indicates at least one reference signal resource occupied by the second device in the N reference signal resources. In this way, the second device notifies the fourth device of reference signal resources occupied by the second device, and the fourth device may select an unoccupied resource based on the fourth indication information.

Optionally, the at least one reference signal resource occupied by the second device includes a third reference signal resource, and a spatial domain transmit parameter (spatial domain parameter) used by the second device to send the fourth indication information corresponds to a spatial domain receive parameter (spatial domain parameter) used by the second device to receive the reference signal on the third reference signal resource. The second device receives the reference signal from the first device on the third reference signal resource. In this way, the fourth device may determine, based on the fourth indication information, a reference signal resource set corresponding to the spatial domain parameter (spatial domain transmit parameter that is on the fourth device side and that forms a beam pair with the spatial domain parameter used by the second device to send the fourth indication information). An effect thereof is similar to that of determining, by the first device based on the second indication information sent by the third device, the reference signal resource occupied by the third device.

For example, if the second device receives the reference signal from the first device on the reference signal resource 1 by using the second spatial domain parameter 1, the second device sends the fourth indication information by using the second spatial domain parameter 1. The fourth indication information includes indication information of the reference signal resource 1.

According to the method shown in FIG. 3a, the first device determines the N reference signal resources. The K reference signal resources are the K periodic reference signal resources. The N reference signal resources are N of the K reference signal resources in the first sidelink resource pool. Because the K reference signal resources are the K periodic reference signal resources, and the K reference signal resources include the N reference signal resources, the N reference signal resources are N periodic reference signal resources. The first device sends N periodic reference signals to the second device on the N reference signal resources. In this way, the first device sends the N periodic reference signals to the second device on the N reference signal resources, and the second device receives, on the N reference signal resources, the N reference signals sent by the first device. The N reference signal resources are determined. Therefore, the second device can determine a state of a channel between the second device and the first device based on detection results on the N reference signal resources, for example, determine whether a beam fails.

In addition, because the N reference signal resources are determined reference signal resources in the first sidelink resource pool, when sending the N periodic reference signals to the second device on the N reference signal resources, the first device does not need to send additional control information to indicate the reference signals, to reduce resource overheads.

For example, FIG. 4a is a schematic flowchart of another signal sending method according to an embodiment of this application.

The method shown in FIG. 4a may be used in a beam failure detection scenario, and may also be used in a channel state information measurement or reporting scenario. A scenario to which the method shown in FIG. 4a is applicable is not limited in this application. The method shown in FIG. 4a may be used independently, or the method shown in FIG. 4a may be used in combination with the method shown in FIG. 5. A difference between the method shown in FIG. 4a and the method shown in FIG. 3a lies in that, in the method shown in FIG. 3a, the first device determines the N reference signal resources, and notifies the second device through the third indication information. In the method shown in FIG. 4a, a second device determines N reference signal resources, and notifies a first device of the N reference signal resources.

As shown in FIG. 4a, the signal sending method includes the following steps.

S401: The first device is configured in a first sidelink resource pool, where the first sidelink resource pool includes K reference signal resources, and the first device determines the N reference signal resources.

For descriptions of the first sidelink resource pool, the K reference signal resources, and the N reference signal resources, refer to the corresponding descriptions in S301. Details are not described herein again.

In a possible design manner, S401 may include at least one of S402 and S403.

S402: The first device determines first configuration information. For a specific implementation of S402, refer to S302. Details are not described herein again.

The method provided in this embodiment of this application may further include S403: The second device sends first indication information to the first device, the first device receives the first indication information, and the first device determines the N reference signal resources based on the first indication information.

For example, the first indication information includes N reference signal resources recommended by the second device to the first device.

Optionally, the first indication information includes indication information of the N reference signal resources, and the first indication information indicates the first device to send reference signals on the N reference signal resources.

For example, the first indication information may indicate N (for example, unoccupied) reference signal resources in the K reference signal resources (the second device has selected N reference signal resources from all unoccupied reference signal resources), or the first indication information may indicate K-N occupied reference signal resources in the K reference signal resources.

It may be understood that, in the method shown in FIG. 3a, the second device may also send the first indication information to the first device, to indicate a recommended or non-recommended reference signal resource. In the method shown in FIG. 3a, the first device finally determines reference signal resources to be used by the first device and the second device, and the second indication information only assists the first device in deciding. In the method shown in FIG. 4a, a subsequent receiving device of the reference signals, namely, the second device, determines reference signal resources to be used. A function of the first indication information in this method is similar to that of the third indication information in the method shown in FIG. 3a, but devices sending and receiving information change. To be specific, the second device may notify the first device of the N (for example, unoccupied) reference signal resources determined by the second device, so that the first device can send the reference signals on the N reference signal resources indicated by the first indication information.

Optionally, the first indication information further indicates a first spatial domain parameter associated with each of at least one reference signal resource recommended by the second device. In this case, the first device may determine transmit beams on the N reference signal resources based on the first indication information.

Optionally, N first spatial domain parameters of the first device may respectively correspond to N second spatial domain parameters of the second device, to form N BPLs. The first indication information may further equivalently indicate the N second spatial domain parameters or the N BPLs corresponding to the N reference signal resources.

For example, the first indication information may include identifiers of the N reference signal resources and identifiers of the N first spatial domain parameters (or N equivalent second spatial domain parameters or BPLs), and the N reference signal resources are in one-to-one correspondence with the N first spatial domain parameters.

For another example, the first indication information may include identifiers of the N reference signal resources and identifiers of N first reference signal resources, and each of the N reference signal resources and one of the N first reference signal resources have a type-D quasi co-location relationship. The N reference signal resources are in one-to-one correspondence with the N first reference signal resources.

Before S403, the second device may determine the first indication information by performing at least one of S404 and S405. An execution sequence of S404 and S405 is not limited in this application.

S404: The second device receives and measures the reference signal on a part or all of the K reference signal resources in the first sidelink resource pool (second manner), to determine whether the part or all of the K reference signal resources are occupied, in other words, whether the part or all of the K reference signal resources can be used as candidate resources of the N reference signal resources. Then, N reference signal resources are selected from the candidate resources of the N reference signal resources as the N reference signal resources in the first indication information. The second manner may also be understood as that the second device determines an available reference signal resource in a sensing manner. For a specific implementation of S406, refer to related descriptions of determining, by the second device in the second manner in S305, whether the reference signal resource is available. Details are not described herein again.

For example, the second device may determine an available reference signal resource set in the second manner, and determine the N reference signal resources in the reference signal resource set.

For example, the second device receives and measures the reference signal on the part or all of the K reference signal resources, to obtain received powers on the part or all of the K reference signal resources. The part or all of the K reference signal resources include a second reference signal resource. If the received power on the second reference signal resource is greater than or equal to a preset threshold, it is determined that the second reference signal resource is occupied. To be specific, the N reference signal resources do not include the second reference signal resource, the second reference signal resource is one of at least one reference signal resource not recommended by the second device, and N reference signal resources recommended in the first indication information do not include the second reference signal resource.

In a possible design manner, S404 may be implemented by performing S404a (not shown in the figure).

S404a: The second device receives and measures the reference signal on the part or all of the K reference signal resources in the first sidelink resource pool (second manner), to determine N reference signal resource sets, that is, determine whether the part or all of the K reference signal resources are occupied when the N second spatial domain parameters/beams are used, so as to determine whether the part or all of the K reference signal resources can be used as candidate resources of the N reference signal resources corresponding to the N second spatial domain parameters. For a specific implementation of S404a, refer to the related descriptions of determining, by the second device in the second manner in S305a, whether the reference signal resources are available when the N second spatial domain parameters are used. Details are not described herein again.

The N second spatial domain parameters are spatial domain parameters corresponding to the N first spatial domain parameters. For example, the N first spatial domain parameters are N transmit beams of the first device. In this case, the N second spatial domain parameters may be receive beams of the second device that correspond to the N transmit beams of the first device. To be specific, the N transmit beams and the N receive beams may be N BPLs determined in a previous beam training process.

Optionally, in S404 and S404a, the second device may further remove a reference signal resource that has been occupied by the second device.

Optionally, when the second device does not perform receiving and detection in one time subunit, the second device may consider that all reference signal resources corresponding to the time subunit are occupied.

Optionally, when the second device does not perform receiving and detection in one time subunit, the second device may consider that all reference signal resources corresponding to the time subunit except a reference signal resource occupied by the second device are occupied.

S405: The first device sends sixth indication information to the second device. The second device receives the sixth indication information from the first device. The sixth indication information indicates at least one reference signal resource recommended by the first device in the K reference signal resources, and/or the sixth indication information indicates at least one reference signal resource not recommended by the first device in the K reference signal resources.

For example, when the sixth indication information includes indication information of a reference signal resource 5, and the reference signal resource 5 is a reference signal resource not recommended by the first device, the second device determines that the N reference signal resources do not include the reference signal resource 5.

For example, when the sixth indication information includes indication information of a reference signal resource 5, and the reference signal resource 5 is a reference signal resource recommended by the first device, the second device determines that the N reference signal resources may include the reference signal resource 5. However, further, whether the reference signal resource 5 can be used as one of the N reference signal resources may be finally determined by the second device based on related information in S404.

For example, when the sixth indication information includes indication information of a reference signal resource 6 and indication information of a reference signal resource 7, where the reference signal resource 6 is a reference signal resource recommended by the first device, and the reference signal resource 7 is a reference signal resource not recommended by the first device, the second device determines that the N reference signal resources may include the reference signal resource 6, and determines that the N reference signal resources do not include the reference signal resource 7.

It should be noted that the foregoing example is described by using an example in which the sixth indication information includes one recommended or non-recommended reference signal resource. The sixth indication information may include one or more recommended or non-recommended reference signal resources. This is not limited.

In a possible design manner, S405 may be implemented by performing S405a (not shown in the figure).

S405a: The first device sends the sixth indication information to the second device. The second device receives the sixth indication information from the first device. The sixth indication information further indicates, based on S405, a first spatial domain parameter associated with each of the at least one reference signal resource recommended by the first device, and/or the sixth indication information further indicates a first spatial domain parameter associated with each of the at least one reference signal resource not recommended by the first device.

For example, the N first spatial domain parameters of the first device are in one-to-one correspondence with N first spatial domain parameters of the second device, and can form N BPLs. Therefore, S405a may also be understood as that the sixth indication information further indicates, based on S405, a second spatial domain parameter/BPL associated with each of the at least one reference signal resource recommended by the first device, and/or the sixth indication information further indicates a second spatial domain parameter/BPL associated with each of the at least one reference signal resource not recommended by the first device.

For a specific implementation of S405a, refer to S305a. Details are not described herein again.

For example, the sixth indication information includes an identifier of the at least one reference signal resource recommended by the first device and a correspondence between the at least one reference signal resource recommended by the first device and the first spatial domain parameter (or an equivalent second spatial domain parameter or BPL). Alternatively, the sixth indication information includes an identifier of the at least one reference signal resource not recommended by the first device and a correspondence between the at least one reference signal resource not recommended by the first device and the first spatial domain parameter (or an equivalent second spatial domain parameter or BPL).

For another example, the sixth indication information may include an identifier of the at least one reference signal resource recommended by the first device and a correspondence between the at least one reference signal resource recommended by the first device and the at least one first reference signal resource. Each of the at least one reference signal resource recommended by the first device and each of the at least one first reference signal resource have a type-D quasi co-location relationship, and the at least one reference signal resource recommended by the first device is in one-to-one correspondence with the at least one first reference signal resource. Alternatively, the sixth indication information may include an identifier of the at least one reference signal resource not recommended by the first device and a correspondence between the at least one reference signal resource not recommended by the first device and the at least one first reference signal resource. Each of the at least one reference signal resource not recommended by the first device and each of the at least one first reference signal resource have a type-D quasi co-location relationship. The at least one reference signal resource not recommended by the first device is in one-to-one correspondence with the at least one first reference signal resource.

In S405, a function of the sixth indication information may be similar to that of the first indication information in S305. To be specific, the first device sends, to the second device, a reference signal resource recommended or not recommended by the first device, so that the reference signal resource is provided for the second device to decide.

The second device may determine the available reference signal resource by using any method in S404 and S405 or by using a combination of the two methods.

For example, the second device may exclude an occupied reference signal resource based only on a sensing result (first manner) of the second device, to determine the candidate resources of the N reference signal resources, and determine the N reference signal resources in the candidate resources of the N reference signal resources. In other words, only S404 is performed.

Alternatively, the second device may select the N reference signal resources from the reference signal resource recommended by the first device. In other words, only S405 is performed. Alternatively, the second device may exclude an occupied reference signal resource based on a sensing result of the second device, to determine the candidate resources of the N reference signal resources, then obtain an intersection set between the reference signal resource recommended by the first device and the candidate resources of the N reference signal resources, removes the reference signal resource not recommended by the first device from the candidate resources of the N reference signal resources to update the candidate resources of the N reference signal resources, and determine the N reference signal resources in updated candidate resources of the N reference signal resources. In other words, S404 and S405 are combined.

Similarly, the second device may determine, by performing a method in S404a and S405a, the N reference signal resource sets respectively corresponding to the N second spatial domain parameters.

For example, based on determining, in the second manner, the N reference signal resource sets corresponding to the N second spatial domain parameters, the second device may select one reference signal resource from each of the N reference signal resource sets, and finally select the N different reference signal resources. In other words, there is only S404a.

For example, the second device determines, based on the at least one reference signal resource recommended by the first device and the first spatial domain parameter corresponding to each of the at least one reference signal resource recommended by the first device, a reference signal resource that is not occupied when the first spatial domain parameter is used. In other words, there is only S405a.

For example, on the basis of determining, in the second manner, a reference signal resource set corresponding to one second spatial domain parameter, the second device may further remove, based on the sixth indication information, the reference signal resource not recommended by the first device from the reference signal resource set corresponding to the second spatial domain parameter, and determine a final reference signal resource set corresponding to the second spatial domain parameter. In other words, S404a is combined with S405a.

Optionally, the first device may determine the sixth indication information by performing at least one of S406 and S407 (refer to FIG. 4b). An execution sequence of S406 and S407 is not limited in this application.

Optionally, in this application, if the first device and/or the second device need/needs to perform beam failure detection on the N BPLs, when the first device and/or the second device cannot determine the N available or unoccupied reference signal resources in the K reference signal resources, the first device and the second device may further perform beam failure detection by using the following method shown in FIG. 5. Specifically, some BPLs may be detected by using the method in FIG. 4a, and other BPLs may be detected by using the method in FIG. 5.

S406: The first device receives and measures the reference signal on the part or all of the K reference signal resources in the first sidelink resource pool (first manner), to determine whether the part or all of the K reference signal resources are occupied, in other words, whether the part or all of the K reference signal resources can be used as candidate resources of the N reference signal resources (for a specific implementation, refer to S304, and details are not described herein again). Then, the reference signal resource recommended or not recommended in the sixth indication information is determined based on the candidate resources of the N reference signal resources.

For example, whether a reference signal resource is occupied is determined based on an RSRP of a signal received on the reference signal resource. If the RSRP is greater than or equal to the preset threshold, it is considered that the reference signal resource is occupied. In this case, the sixth indication information may indicate, to the second device, that the reference signal resource is not recommended. If the RSRP is less than or equal to the preset threshold, it is considered that the reference signal is not occupied. In this case, the sixth indication information may indicate, to the second device, that the reference signal resource is recommended.

In a possible design manner, S406 may be implemented by performing S406a (not shown in the figure).

S406a: The first device receives and measures the reference signal on the part or all of the K reference signal resources in the first sidelink resource pool (first manner), to determine the N reference signal resource sets, that is, determine whether the part or all of the K reference signal resources are occupied when the N first spatial domain parameters/beams are used, so as to determine whether the part or all of the K reference signal resources can be used as candidate resources of the N reference signal resources corresponding to the N first spatial domain parameters (for a specific implementation, refer to S304a, and details are not described herein again). Then, reference signal resources that are recommended or not recommended in the sixth indication information and first spatial domain parameters respectively corresponding to these reference signal resources are further determined.

For a correspondence between a reference signal resource set and a spatial domain parameter, refer to the related descriptions in S303a. Details are not described herein again.

Optionally, the first device may further remove a reference signal resource that has been occupied by the first device.

Optionally, when the first device does not perform receiving and detection in one time subunit, the first device may consider that all reference signal resources corresponding to the time subunit are occupied.

Optionally, when the first device does not perform receiving and detection in one time subunit, the first device may consider that all reference signal resources corresponding to the time subunit except a reference signal resource occupied by the first device are occupied.

S407: The first device receives the second indication information from a third device. The second indication information indicates at least one reference signal resource occupied by the third device in the K reference signal resources. The first device determines, based on the second indication information, whether the part or all of the K reference signal resources are occupied (for a specific implementation, refer to S306, and details are not described herein again). Then, the reference signal resource recommended or not recommended in the sixth indication information is determined based on the second indication information.

In a possible design manner, S407 may be implemented by performing S407a (not shown in the figure).

S407a: The first device receives the second indication information from the third device, and the first device determines the N reference signal resource sets based on the second indication information (for a specific implementation, refer to S306a, and details are not described herein again). Then, the reference signal resource recommended or not recommended in the sixth indication information is determined in the N reference signal resource sets.

The first device may determine, by using any method in S406 and S407, the reference signal resource recommended or not recommended in the sixth indication information.

For example, the first device may exclude an occupied reference signal resource based only on a sensing result (first manner) of the first device, to determine the candidate resources of the N reference signal resources, and determine the recommended or non-recommended reference signal resource in the candidate resources of the N reference signal resources. In other words, there is only S406.

Alternatively, the first device may exclude an occupied reference signal resource based on a sensing result of the first device, to determine the candidate resources of the reference signal resources. Then, the first device removes the reference signal resource occupied by the third device from the candidate resources of the reference signal resources, to update the candidate resources of the reference signal resources, and determine the recommended or non-recommended reference signal resource in updated candidate resources of the reference signal resources. In other words, S406 is combined with S407.

S408: The first device sends N reference signals to the second device on the N reference signal resources. Correspondingly, the second device receives the N reference signals from the first device on the N reference signal resources.

In a possible design, the first device sends, based on the first indication information, the reference signals to the second device on the N reference signal resources by using the first spatial domain parameters respectively corresponding to the N reference signal resources. The second device receives, based on the first indication information, the reference signals from the first device on the N reference signal resources by using the second spatial domain parameters respectively corresponding to the N reference signal resources.

When the N reference signal resources are used for beam failure detection between the first device and the second device, the second device determines, based on measurement results on the N reference signal resources, whether a beam failure instance occurs.

For a specific implementation of S408, refer to S308. Details are not described herein again.

In some embodiments, the method provided in this embodiment of this application may further include S409: The second device sends fourth indication information. Correspondingly, the fourth device receives the fourth indication information from the second device (not shown in the figure). For a specific implementation of S409, refer to S309. Details are not described herein again.

According to the method shown in FIG. 4a, the first device determines the N reference signal resources. The K reference signal resources are K periodic reference signal resources. The N reference signal resources are N of the K reference signal resources in the first sidelink resource pool. Because the K reference signal resources are the K periodic reference signal resources, and the K reference signal resources include the N reference signal resources, the N reference signal resources are N periodic reference signal resources. The first device sends N periodic reference signals to the second device on the N reference signal resources. In this way, the first device sends the N periodic reference signals to the second device on the N reference signal resources, and the second device receives, on the N reference signal resources, the N reference signals sent by the first device. The N reference signal resources are determined. Therefore, the second device can determine a state of a channel between the second device and the first device based on detection results on the N reference signal resources, for example, determine whether a beam fails.

In addition, because the N reference signal resources are determined reference signal resources in the first sidelink resource pool, when sending the N periodic reference signals to the second device on the N reference signal resources, the first device does not need to send additional control information to indicate the reference signals, to reduce resource overheads.

For example, FIG. 5 is a schematic flowchart of still another signal sending method according to an embodiment of this application. The method shown in FIG. 5 may be used independently, or the method shown in FIG. 5 may be used in combination with the method shown in FIG. 3a or FIG. 4a. For example, in the method shown in FIG. 3a or FIG. 4a, if detecting that the K reference signal resources in the first sidelink resource pool are all occupied by another device, the first device and/or the second device may continue to perform beam failure detection by using the method shown in FIG. 5.

As shown in FIG. 5, the signal sending method includes the following steps.

S501: A first device determines a first target window or N second target windows. Correspondingly, the second device determines the first target window or the N second target windows.

Optionally, the first target window includes at least one periodic first window. Each first window included in the first target window corresponds to N first spatial domain parameters.

Optionally, the N first spatial domain parameters are spatial domain parameters on which the first device is to perform beam failure detection.

Optionally, the N first spatial domain parameters are in one-to-one correspondence with N second spatial domain parameters, and the N second spatial domain parameters are spatial domain parameters on which the second device is to perform beam failure detection. Therefore, that each first window included in the first target window corresponds to N first spatial domain parameters may also be understood as that each first window included in the first target window corresponds to the N second spatial domain parameters, or each first window included in the first target window corresponds to the N first spatial domain parameters and the N second spatial domain parameters, that is, corresponds to N BPLs between the first device and the second device. For the first spatial domain parameter, the second spatial domain parameter, and a correspondence between the N first spatial domain parameters and the N second spatial domain parameters, refer to the corresponding descriptions in S301. Details are not described herein again.

In some embodiments, a spatial domain parameter on which beam failure detection is to be performed may be determined by the first device and/or the second device, for example, determined by performing a beam training or sweeping process. For a specific implementation, refer to the corresponding descriptions in S301. Details are not described herein again.

For example, the first window is used by the first device and the second device to perform beam failure detection. For example, the first device sends N reference signals in each first window by using the N first spatial domain parameters, and the second device detects the N reference signals in each first window by using the N second spatial domain parameters.

Optionally, each of the N second target windows includes at least one periodic second window, and the N second target windows are in one-to-one correspondence with the N first spatial domain parameters.

Optionally, the N first spatial domain parameters are in one-to-one correspondence with the N second spatial domain parameters, and the N second spatial domain parameters are the spatial domain parameters on which the second device is to perform beam failure detection. Therefore, that the N second target windows are in one-to-one correspondence with the N first spatial domain parameters may also be understood as that the N second target windows are in one-to-one correspondence with the N second spatial domain parameters, or the N second target windows are in one-to-one correspondence with the N first spatial domain parameters and the N second spatial domain parameters, that is, the N second target windows are in one-to-one correspondence with the N BPLs between the first device and the second device. In this case, the first device sends the reference signal in each second target window by using one first spatial domain parameter. Correspondingly, the second device detects the reference signal in each second target window by using one second spatial domain parameter for beam failure detection.

For example, N=2. The first device and the second device need to perform beam failure detection on two BPLs: a first spatial domain parameter 1 and a second spatial domain parameter 1, and a first spatial domain parameter 2 and a second spatial domain parameter 2. The first device and the second device may determine two second target windows: a second target window 1 and a second target window 2. The second target window 1 corresponds to the first spatial domain parameter 1 and/or the second spatial domain parameter 1. The second target window 2 corresponds to the first spatial domain parameter 2 and/or the second spatial domain parameter 2. In this case, the first device may send the reference signal in a second window in the second target window 1 by using the first spatial domain parameter 1, and the second device detects the reference signal in the second window in the second target window 1 by using the second spatial domain parameter 1. The first device sends the reference signal in a second window in the second target window 2 by using the first spatial domain parameter 2, and the second device detects the reference signal in the second window in the second target window 2 by using the second spatial domain parameter 2.

In this way, a position at which the reference signal is expected to appears is limited to the first window or the second window, and a resource position used for beam failure detection is not limited to a fixed position, so that the resource position used for beam failure detection has a specific degree of freedom. This reduces impact of uncertainty of a resource position for sending the reference signal on beam failure detection, and can improve accuracy of beam failure detection.

The first device sends the reference signal in the first window or the second window, and the second device detects the reference signal in the first window or the second window. This increases a time range for detecting the reference signal. Even if a resource that is of the first device and that is originally used to send the reference signal in the first window or the second window is preempted, the first device may still send the reference signal on a subsequent resource, and a receiving device may still normally detect the reference signal.

Optionally, each of the at least one first window includes at least two time subunits.

Optionally, each of the at least one second window includes at least two time subunits.

For example, the time subunit includes a symbol. In this case, the first window or the second window may include a plurality of symbols.

In some embodiments, the first device determines the first target window, and sends second configuration information to the second device. The second configuration information includes configuration information of the first target window. The second device determines the first target window based on the second configuration information.

Alternatively, the second device determines the first target window, and sends second configuration information to the first device. The second configuration information includes configuration information of the first target window. The first device determines the first target window based on the second configuration information. Alternatively, the first device determines the first target window, and the second device determines the first target window. The first target window determined by the first device is the same as the first target window determined by the second device.

Optionally, the second configuration information further indicates reference signal identifiers (or equivalent reference signal resource identifiers) of the N reference signals and/or a correspondence between the N reference signals (or equivalent reference signal resources) and the N first spatial domain parameters. The N reference signals (or equivalent reference signal resources) are in one-to-one correspondence with the N first spatial domain parameters.

Optionally, the second configuration information further indicates reference signal identifiers (or equivalent reference signal resource identifiers) of the N reference signals and/or a correspondence between the N reference signals (or equivalent reference signal resources) and the N second spatial domain parameters. The N reference signals (or equivalent reference signal resources) are in one-to-one correspondence with the N second spatial domain parameters.

Optionally, the second configuration information further indicates reference signal identifiers (or equivalent reference signal resource identifiers) of the N reference signals and/or a correspondence between the N reference signals (or equivalent reference signal resources) and the N BPLs. The N reference signals (or equivalent reference signal resources) are in one-to-one correspondence with the N BPLs. The N BPLs are N BPLs respectively including the N first spatial domain parameters of the first device and the N second spatial domain parameters of the second device.

In other words, the second configuration information includes the correspondence between the N reference signals and the N first spatial domain parameters and/or the N second spatial domain parameters, that is, indicates a specific first spatial domain parameter used by the first device to send a specific reference signal, and a specific second spatial domain parameter used by the second device to receive a specific reference signal.

In some embodiments, the second configuration information indicates the first target window. Specifically, the second configuration information includes a first start position, a first window length, and a first periodicity interval.

For example, the first start position is a quantity of slot offsets and/or symbol offsets of a start position of a $1^{st}$ first window after a frame 0 (for example, each frame 0 or a latest frame 0) relative to a start position of the frame 0.

For example, the first periodicity interval is an interval between start positions of two adjacent first windows. Alternatively, the first periodicity interval is an interval between end positions of two adjacent first windows. The first periodicity interval may also be understood as a length of a periodicity of the first window.

Optionally, for a specific implementation in which the first device determines a start moment of the frame 0, refer to the corresponding descriptions in the method shown in FIG. 3a. Details are not described herein again.

For example, the first window length is a length of the first window. For example, the first window length is a length of one first window in one periodicity.

For example, the first start position and the first periodicity interval are used to determine a start position of each first window, and the first start position, the first window length, and the first periodicity interval are used to determine an end position of each first window.

For example, a position of each first window (relative to a position of the frame 0) is determined based on the second configuration information as follows: The position of the first window in a $1^{st}$ periodicity is: first start position to first start position+first window length; the position of the first window in a $2^{nd}$ periodicity is: first start position+first periodicity interval to first start position+first window length+first periodicity interval; the position of the first window in a $3^{rd}$ periodicity is: first start position+2×first periodicity interval to first start position+first window length+2×first periodicity interval, and so on. Details are not described one by one.

FIG. 6 is a diagram of the first target window according to an embodiment of this application.

For example, with reference to FIG. 6, it is assumed that the first start position is 0 slots, the first window length is three slots, and the first periodicity interval is four slots. Assuming that a slot 0 is a start slot of the frame 0, all first windows in the first target window occupy the slot 0 to a slot 2, a slot 4 to a slot 6, a slot 8 to a slot 10, and the like.

In some other embodiments, the second configuration information indicates the first target window, and the second configuration information includes a first start position, a first end position, and a first periodicity interval.

For example, the first end position is a quantity of slot offsets and/or symbol offsets of an end position of a $1^{st}$ first window after a frame 0 (for example, each frame 0 or a latest frame 0) relative to a start position of the frame 0. For example, assuming that the first end position is three slots, and the first periodicity interval is four slots, the end position of the first window is a slot 3, a slot 7, a slot 11, or the like after the frame 0.

For example, the first start position and the first periodicity interval are used to determine a start position of the first window in each periodicity, and the first end position and the first periodicity interval are used to determine an end position of the first window in each periodicity.

For example, a position of the first window is determined based on the second configuration information as follows: The position of the first window in a $1^{st}$ periodicity is: first start position to first end position; the position of the first window in a $2^{nd}$ periodicity is: first start position+first periodicity interval to first end position+first periodicity interval; the position of the first window in a 3rd periodicity is: first start position+2×first periodicity interval to first end position+2×first periodicity interval, and so on. Details are not described one by one.

FIG. 7 is another diagram of the first target window according to an embodiment of this application.

For example, with reference to FIG. 7, it is assumed that the first start position is one slot, the first end position is three slots, and the first periodicity interval is four slots. Assuming that a slot 0 is a start slot of the frame 0, all first windows in the first target window occupy a slot 1 to a slot 3, a slot 5 to a slot 7, a slot 9 to a slot 11, and the like.

Optionally, the second configuration information may further include a first value C1. The first window may be flexibly configured.

For example, a position of the first window is determined based on the second configuration information as follows: The position of the first window in a 1st periodicity is: first start position+C1 to first start position+C1+first window length; the position of the first window in a 2nd periodicity is: first start position+C1+first periodicity interval to first start position+C1+first window length+first periodicity interval; the position of the first window in a 3rd periodicity is: first start position+C1+2×first periodicity interval to first start position+C1+first window length+2× first periodicity interval, and so on. Details are not described one by one.

For another example, a position of the first window is determined based on the second configuration information as follows: The position of the first window in a 1st periodicity is: first start position+C1 to first end position+C1; the position of the first window in a 2nd periodicity is: first start position+C1+first periodicity interval to first end position+C1+first periodicity interval; the position of the first window in a 3rd periodicity is: first start position+C1+2×first periodicity interval to first end position+C1+2×first periodicity interval, and so on. Details are not described one by one.

In some embodiments, the first device determines the N second target windows, and sends second configuration information to the second device. The second configuration information includes configuration information of the N second target windows. The second device determines the N second target windows based on the second configuration information. Alternatively, the second device determines the N second target windows, and sends second configuration information to the first device. The second configuration information includes configuration information of the N second target windows. The first device determines the N second target windows based on the second configuration information. Alternatively, the first device determines the N second target windows, and the second device determines the N second target windows. The N second target windows determined by the first device are the same as the N second target windows determined by the second device.

Optionally, the second configuration information further indicates reference signal identifiers (or equivalent reference signal resource identifiers) of the N reference signals, a correspondence between the N reference signals (or equivalent reference signal resources) and the N second target windows, and/or a correspondence between the N reference signals (or equivalent reference signal resources) and the N first spatial domain parameters. The N reference signals (or equivalent reference signal resources) are in one-to-one correspondence with the N second target windows, and the N reference signals (or equivalent reference signal resources) are in one-to-one correspondence with the N first spatial domain parameters.

Optionally, the second configuration information further indicates reference signal identifiers (or equivalent reference signal resource identifiers) of the N reference signals, a correspondence between the N reference signals (or equivalent reference signal resources) and the N second target windows, and/or a correspondence between the N reference signals (or equivalent reference signal resources) and the N second spatial domain parameters. The N reference signals (or equivalent reference signal resources) are in one-to-one correspondence with the N second target windows, and the N reference signals (or equivalent reference signal resources) are in one-to-one correspondence with the N second spatial domain parameters.

Optionally, the second configuration information further indicates reference signal identifiers (or equivalent reference signal resource identifiers) of the N reference signals, a correspondence between the N reference signals (or equivalent reference signal resources) and the N second target windows, and/or a correspondence between the N reference signals (or equivalent reference signal resources) and the N BPLs. The N reference signals (or equivalent reference signal resources) are in one-to-one correspondence with the N second target windows, and the N reference signals (or equivalent reference signal resources) are in one-to-one correspondence with the N BPLs. The N BPLs are N BPLs respectively including the N first spatial domain parameters of the first device and the N second spatial domain parameters of the second device.

In other words, the second configuration information includes the correspondence between the N reference signals and the N first spatial domain parameters and/or the N second spatial domain parameters, that is, indicates a specific first spatial domain parameter used by the first device to send a specific reference signal, and a specific second spatial domain parameter used by the second device to receive a specific reference signal. The second configuration information may further configure the correspondence between the N reference signals and the N second target windows, that is, indicate a specific target window in which the first device sends a specific reference signal.

In some embodiments, the second configuration information indicates the N second target windows, and the second configuration information includes N second start positions, N second window lengths, and N second periodicity intervals.

For example, the N second start positions may be the same or may be different. In this case, the second windows may occupy a same position or different positions in different second target windows.

For example, one second start position is a quantity of slot offsets and/or symbol offsets of a start position of a 1st second window in one second target window after a frame 0 (for example, each frame 0 or a latest frame 0) relative to a start position of the frame 0.

For example, the N second window lengths are lengths of second windows in the N second target windows. The N second window lengths may be the same or may be different. In this case, the second windows may occupy a same position or different positions in different second target windows.

For example, the second periodicity interval is an interval between start positions of two adjacent second windows in one second target window, or the second periodicity interval is an interval between end positions of two adjacent second windows in one second target window. For example, the second periodicity interval may also be understood as a length of a periodicity of a second window in one second target window.

For example, the N second start positions and the N second periodicity intervals are used to determine start positions of the second windows in the N second target windows, and the N second start positions, the N second window lengths, and the N second periodicity intervals are used to determine end positions of the second windows in the N second target windows.

It is assumed that N=3. To be specific, three second target windows are configured in the second configuration information, and are respectively denoted as a second target window 1, a second target window 2, and a second target window 3. Specifically, the second configuration information includes: a second start position 1, a second window length 1, and a second periodicity interval 1 that correspond to the second target window 1, a second start position 2, a second window length 2, and a second periodicity interval 2 that correspond to the second target window 2, and a third start position 3, a second window length 3, and a second periodicity interval 3 that correspond to the second target window 3. In this case, positions of second windows in the second target window 1 are: second start position 1 to second start position 1+second window length 1, second start position 1+first periodicity interval 1 to second start position 1+second window length 1+first periodicity interval 1; second start position 1+2×first periodicity interval 1 to second start position 1+second window length 1+2×first periodicity interval 1, and so on. Details are not described one by one. Positions of second windows in the second target window 2 are: second start position 2 to second start position 2+second window length 2, second start position 2+first periodicity interval 2 to second start position 2+second window length 2+first periodicity interval 2, second start position 2+2×first periodicity interval 2 to second start position 2+second window length 2+2×first periodicity interval 2, and so on. Details are not described one by one. Positions of second windows in the second target window 3 are: second start position 3 to second start position 3+second window length 3, second start position 3+first periodicity interval 3 to second start position 3+second window length 3+first periodicity interval 3, second start position 3+2×first periodicity interval 3 to second start position 3+second window length 3+2× first periodicity interval 3, and so on. Details are not described one by one.

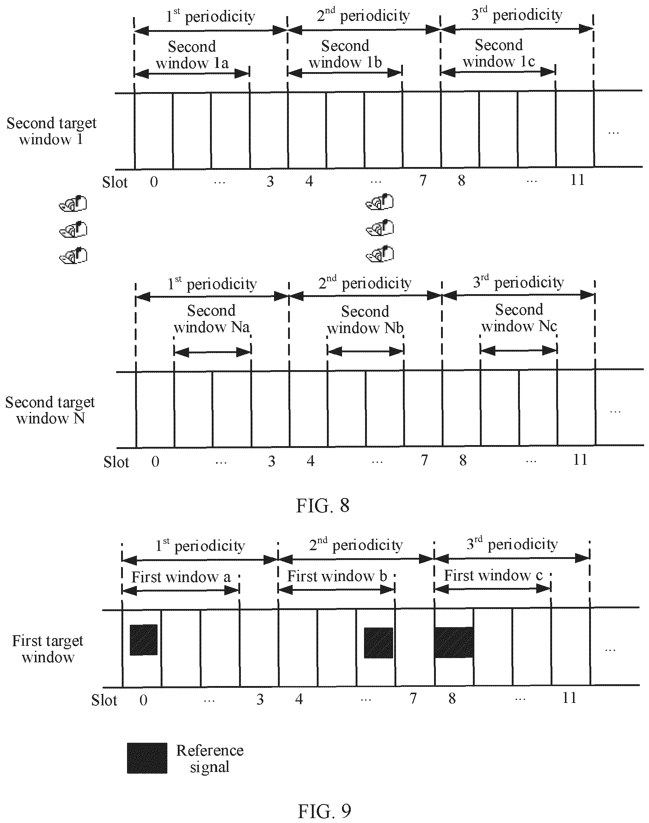

FIG. 8 is a diagram of the second target window according to an embodiment of this application.

For example, with reference to FIG. 8, it is assumed that a second start position 1 corresponding to a second target window 1 is 0 slots, a second start position N corresponding to a second target window N is one slot, a second window length 1 of the second target window 1 is three slots, a second window length N corresponding to the second target window N is two slots, and second periodicity intervals corresponding to all second target windows are each four slots. It is assumed that a slot 0 is a start slot of a frame 0. In this case, all second windows in the second target window 1 respectively occupy the slot 0 to a slot 2, a slot 4 to a slot 6, a slot 8 to a slot 10, and the like, and all second windows in the second target window N respectively occupy a slot 1 and a slot 2, a slot 5 and a slot 6, a slot 9 and a slot 10, and the like.

In some other embodiments, the second configuration information indicates the N second target windows, and the second configuration information includes N second start positions, N second end positions, and N second periodicity intervals.

For example, the second end position is a quantity of slot offsets and/or symbol offsets of an end position of a 1st second window after a frame 0 (for example, each frame 0 or a latest frame 0) relative to a start position of the frame 0. The N second end positions may be the same or may be different. In this case, the second windows may occupy a same position or different positions in different second target windows.

For example, the N second start positions and the N second periodicity intervals are used to determine start positions of the second windows in the N second target windows, and the N second end positions and the N second periodicity intervals are used to determine end positions of the second windows in the N second target windows.

It is assumed that N=3. To be specific, three second target windows are configured in the second configuration information, and are respectively denoted as a second target window 1, a second target window 2, and a second target window 3. Specifically, the second configuration information includes: a second start position 1, a second end position 1, and a second periodicity interval 1 that correspond to the second target window 1, a second start position 2, a second end position 2, and a second periodicity interval 2 that correspond to the second target window 2, and a third start position 3, a second end position 3, and a second periodicity interval 3 that correspond to the second target window 3. In this case, positions of second windows in the second target window 1 are: second start position 1 to second end position 1, second start position 1+first periodicity interval 1 to second end position 1+first periodicity interval 1; second start position 1+2×first periodicity interval 1 to second end position 1+2×first periodicity interval 1, and so on. Details are not described one by one. Positions of second windows in the second target window 2 are: second start position 2 to second end position 2, second start position 2+first periodicity interval 2 to second end position 2+first periodicity interval 2, second start position 2+2×first periodicity interval 2 to second end position 2+2×first periodicity interval 1, and so on. Details are not described one by one. Positions of second windows in the second target window 3 are: second start position 3 to second end position 3, second start position 3+first periodicity interval 3 to second end position 3+first periodicity interval 3, second start position 3+2×first periodicity interval 3 to second end position 3+2×first periodicity interval 3, and so on. Details are not described one by one.

For example, with reference to FIG. 8, it is assumed that a second start position 1 corresponding to a second target window 1 is 0 slots, a second start position N corresponding to a second target window N is one slot, a second end position 1 of the second target window 1 is three slots, a second end position N corresponding to the second target window N is three slots, and second periodicity intervals corresponding to all second target windows are each four slots. It is assumed that a slot 0 is a start slot of a frame 0. In this case, all second windows in the second target window 1 respectively occupy the slot 0 to a slot 2, a slot 4 to a slot 6, a slot 8 to a slot 10, and the like, and all second windows in the second target window N respectively occupy a slot 1 and a slot 2, a slot 5 and a slot 6, a slot 9 and a slot 10, and the like.

Optionally, the second configuration information may further include a second value C2. The second windows may be flexibly configured. A specific example is similar to the example corresponding to the first window, and details are not described herein again.

Optionally, the N second window lengths may be configured as a same length or different lengths. When the N second window lengths are configured as the same length, the second configuration information may include configuration information of only one second window length.

Optionally, the N second periodicity intervals may be configured as a same periodicity interval or different periodicity intervals. When the N second periodicity intervals are configured as the same periodicity interval, the second configuration information may include configuration information of only one second periodicity interval. For example, the second periodicity intervals respectively corresponding to the N second target windows are the same or different.

S502: The first device sends the N reference signals to the second device by using the N first spatial domain parameters.

For example, a resource used to send the N reference signals is in the first target window.

For example, the first device determines the correspondence between the N reference signals and the N first spatial domain parameters based on the second configuration information in S501, and sends the corresponding N reference signals to the second device in each first window included in the first target window by using the N first spatial domain parameters.

For example, the first device sends the N reference signals to the second device in each first window included in the first target window by using the N first spatial domain parameters.

With reference to FIG. 6, the first device sends the N corresponding reference signals to the second device in a first window a by using the N first spatial domain parameters, sends the N corresponding reference signals to the second device in a first window b by using the N first spatial domain parameters, sends the N corresponding reference signals to the second device in a first window c by using the N first spatial domain parameters, and so on. Details are not described one by one.

For example, a resource used to send the N reference signals is in the N second target windows. For example, the first device sends the N reference signals to the second device in the N second target window by using the N first spatial domain parameters. For any one of the N second target windows, based on the second configuration information in S501, the second target window may correspond to one reference signal. In this case, the first device sends the corresponding reference signal to the second device in each second window included in the second target window.

For example, the first device determines, based on the second configuration information in S501, the correspondence between the N second target windows and the N first spatial domain parameters and/or the correspondence between the N reference signals and the N second target windows, and/or the correspondence between the N reference signals and the N first spatial domain parameters. In this case, in each second window included in any second target window, the first device sends, to the second device by using a first spatial domain parameter corresponding to the second target window, a reference signal corresponding to the second target window.

With reference to FIG. 8, assuming that the second target window 1 to the second target window N respectively correspond to a first spatial domain parameter 1 to a first spatial domain parameter N, and respectively correspond to a reference signal 1 to a reference signal N, in a second window 1a to a second window 1c of the second target window 1, the first device sends the reference signal (reference signal 1) to the second device for three times by using the first spatial domain parameter 1. Similarly, in a second window 2a to a second window 2c of the second target window 2, the first device sends the reference signal (reference signal 2) to the second device for three times by using the first spatial domain parameter 2. By analogy, in a second window Na to a second window Nc of the second target window N, the first device sends the reference signal (reference signal N) to the second device for three times by using the first spatial domain parameter N.

Optionally, the first device determines, in a sensing-based resource selection manner (also referred to as a sensing manner) or a random selection manner, the reference signal resources used to send the N reference signals.

In a possible design solution, the first device determines, in the first target window in the sensing-based resource selection manner or the random selection manner, the reference signal resources respectively corresponding to the N reference signals, and the first device may determine a position of a resource selection window based on a position of the first target window.

To be specific, in a conventional scenario of determining a resource for data transmission, the position of the resource selection window is determined based on a packet delay budget of data. For example, an end position of the resource selection window cannot exceed an end position of the packet delay budget. However, in this embodiment of this application, the first device needs to send the N reference signals in each first window of the first target window. Therefore, the position of the resource selection window may be determined based on the start positions and the end positions of the first windows. The end position of the first window may be understood as a special packet delay budget. For details of the sensing-based resource selection manner and the random selection manner, refer to the related descriptions in the 3GPP TS 38.214 (Release 16) and the 3GPP TS 38.321 (Release 16). Details are not described in this application.

For example, that the first device determines, in the first target window, the reference signal resources respectively corresponding to the N reference signals includes: The first device uses, at a second moment based on the sensing manner or the random selection manner, a closest first window that is after the second moment in the first target window and whose interval from the second moment is greater than or equal to a preset threshold as a resource selection window of the N reference signals.

For example, when the preset threshold is 0, the first device determines, at the second moment based on the sensing manner or the random selection manner, a first resource 1 in the first window 1 of the first target window. The first resource 1 is used to send the reference signal 1. The first resource 1 is a resource in a closest first window corresponding to the reference signal 1 after the second moment.

For example, that the first device determines, in the N second target windows, the reference signal resources respectively corresponding to the N reference signals includes: The first device uses, at a second moment based on the sensing manner or the random selection manner, a closest second window that is after the second moment in one second target window and whose interval from the second moment is greater than or equal to a preset threshold as a resource selection window of a reference signal corresponding to the second target window.

With reference to FIG. 9, the first device first determines the first window a as a resource selection window of a reference signal a, and determines, in the first window, one resource used to send the reference signal a. Optionally, when the first device determines that the resource originally used to send the reference signal a is preempted by another device, the first device may re-determine, in the first window a, a reference signal resource used to send the reference signal a.

In some embodiments, the N reference signals include a third reference signal, and the third reference signal may be frequency division multiplexed and/or time division multiplexed with first control information and/or first data information in a first time unit.

Optionally, S502 includes: The first device sends the third reference signal, the third reference signal and the first control information, the third reference signal and the first data information, or the third reference signal, the first control information, and the first data information to the second device by using one of the N first spatial domain parameters.

Optionally, the third reference signal is one of the N reference signals. The third reference signal may be any reference signal in the N reference signals, and the any reference signal may be frequency division multiplexed and/or time division multiplexed on a resource with other information. When sending the reference signal, the first device may simultaneously send the reference signal and the first control information and/or the first data information to the second device. In this way, when the first device sends the reference signal, a power can be basically kept constant in an entire slot, to avoid impact on AGC of another device. In addition, the first control information may carry indication information of the third reference signal, for example, reference signal identification information (which may also be understood as reference signal information) of the third reference signal. If information such as a spatial domain parameter or a time-frequency resource position related to the third reference signal has been configured in previous communication between the first device and the second device, the second device may determine, based on the first control information, the time-frequency resource position at which the third reference signal is received and a used spatial domain receive parameter.

For example, the first device may send the third reference signal and at least one of the first control information and the first data information to the second device in one slot.

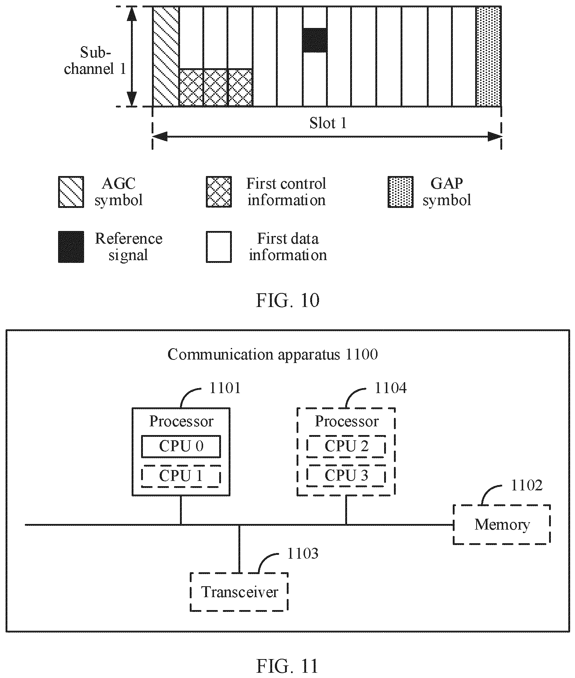

FIG. 10 is a diagram of resource multiplexing according to an embodiment of this application.

As shown in FIG. 10, the first device sends an AGC symbol, first data information, a reference signal, first control information, and a GAP symbol in one slot and one sub-channel. For the AGC symbol and the GAP symbol, refer to the corresponding descriptions in the method shown in FIG. 3a. Details are not described herein again.

Optionally, the first data information may be dummy data information, or may be valid data information.

Optionally, the first control information indicates whether the first data information is dummy data information. In this case, after determining that the first data information is dummy data information, the second device may not need to demodulate a data part, and the second device may be prevented from applying to the first device for unnecessary retransmission.

For example, when the first device does not need to send actual data to the second device, the first data information may be padded with dummy (dummy) data. For example, fixed quadrature amplitude modulation (quadrature amplitude modulation, QAM) signals (which are all, for example, 1) are used at a resource element (resource element, RE) position that originally carries data information. In this way, when the first device sends the reference signal, a power can be basically kept constant in an entire slot, to avoid impact on AGC of another device.

Optionally, the first control information may include indication information of the third reference signal or fifth indication information.

For example, the indication information of the third reference signal includes an identifier of the third reference signal.

The first control information includes the indication information of the third reference signal, and the indication information may indicate that the third reference signal is included in a first time unit and/or a first frequency-domain unit in which the first control information is located. The second device may determine, based on the identifier of the third reference signal, a first spatial domain parameter and/or a second spatial domain parameter corresponding to the third reference signal and a time-domain position and a frequency-domain position that are of the third reference signal, so that the second device can determine to detect the third reference signal by using the corresponding second spatial domain parameter.

For example, the identifier of the third reference signal is used to determine configuration information of a currently sent third reference signal, and the configuration information of the third reference signal includes a spatial domain parameter corresponding to the third reference signal (assuming that the first device and the second device have performed beam training on the third reference signal) and a specific time-domain position and frequency-domain position of the third reference signal.

For example, the fifth indication information indicates the first spatial domain parameter and/or the second spatial domain parameter corresponding to the third reference signal. After receiving the first control information, the second device may directly determine, based on the fifth indication information, the first spatial domain parameter and/or the second spatial domain parameter corresponding to the third reference signal, so that the reference signal can be detected by using the corresponding second spatial domain parameter.

For example, the fifth indication information includes an identifier of one first spatial domain parameter and/or an identifier of one second spatial domain parameter.

For another example, if the fifth indication information includes an identifier of one fourth reference signal, the third reference signal and the fourth reference signal have a type-D quasi co-location relationship.

Having a type-D quasi co-location relationship means that a receive/transmit beam corresponding to the third reference signal is the same as or similar to a receive/transmit beam corresponding to the fourth reference signal. If the first device and the second device have performed beam training on the fourth reference signal resource, a spatial domain parameter corresponding to the fourth reference signal resource has been determined. In this case, the second device may receive the third reference signal by using a same or similar beam/spatial domain parameter.

For example, the first control information is first-order sidelink control information (sidelink control information, SCI) (which may also be referred to as SCI1) on a physical sidelink control channel (physical sidelink control channel, PSSCH), or second-order SCI (which may also be referred to as SCI2) on a physical sidelink shared channel (physical sidelink share channel, PSCCH). Alternatively, the first-order SCI and the second-order SCI jointly form the first control information. The fifth indication information includes indication information of the identifier of the third reference signal and a transmission configuration indicator (transmission configuration indicator, TCI), and the TCI indicates the first spatial domain parameter corresponding to the third reference signal.

For example, the SCI1 and/or the SCI2 may indicate whether the first data information is dummy data information.

S503: The second device detects the N reference signals in the first target window or the N second target windows, to determine a first measurement result.

For example, the first measurement result includes measurement results of the N reference signals. For example, the measurement result of the reference signal includes a received power of the reference signal, for example, an RSRP value.

For example, a measurement result of one reference signal in the first measurement result may be a received power of the reference signal received once (for example, in a time unit), or may be a received power obtained by performing averaging or weighted averaging on received powers of the same reference signal received a plurality of times. Averaging or weighted averaging the received powers is equivalent to filtering the measurement result, to avoid interference caused by a transient sudden change of a channel to beam failure detection.

For example, the second device detects the N reference signals by using the N second spatial domain parameters in each first window included in the first target window based on the correspondence between the reference signals and the second spatial domain parameters, to determine the first measurement result.

Alternatively, for example, the second device detects the N reference signals by using the N second spatial domain parameters in the N second target windows based on the correspondence between the reference signals and the second spatial domain parameters, to determine the first measurement result.

Alternatively, for example, the second device determines, based on the detected first control information, the second spatial domain parameters that should be used to receive the reference signals, and determines the first measurement result.

In a possible design solution, S503 includes: If the second device detects the first control information in one first window of the first target window, and the first control information includes the indication information of the third reference signal, with reference to the related descriptions in S502, the second device may determine, based on the first control information, the time-frequency resource on which the third reference signal is located and the corresponding second spatial domain parameter, and detect the third reference signal by using the second spatial domain parameter corresponding to the third reference signal, to determine a measurement result of the third reference signal.

Optionally, the first control information may further include an indication indicating whether the first data information is dummy data information. If the first data information is dummy data, the second device may not perform demodulation or decoding, and may not send data receiving feedback information to the first device either.

With reference to FIG. 6, it is assumed that N=2, the second spatial domain parameter 1 corresponds to the reference signal 1, and the second spatial domain parameter 2 corresponds to the reference signal 2. The second device separately receives, by using two second spatial domain parameters, the two reference signals in the first window a to the first window c of the first target window, and determines a first measurement result. The first measurement result includes a received power (received power 1a for short) of the reference signal 1 in the first window a, a received power (received power 2a for short) of the reference signal 2 in the first window a, a received power (received power 1b for short) of the reference signal 1 in the first window b, a received power (received power 2b for short) of the reference signal 2 in the first window b, a received power (received power 1c for short) of the reference signal 1 in the first window c, and a received power (received power 2c for short) of the reference signal 2 in the first window c.

With reference to FIG. 8, it is assumed that N=2, the second spatial domain parameter 1 corresponds to the reference signal 1, the second spatial domain parameter 2 corresponds to the reference signal 2, and the second target window 1 and the second target window 2 respectively correspond to the second spatial domain parameter 1 and the second spatial domain parameter 2. The second device receives, by using the second spatial domain parameter 1, the reference signal 1 in the first window 1a to the first window 1c of the second target window 1, and the second device receives, by using the second spatial domain parameter 2, the reference signal 2 in the first window 2a to the first window 2c of the second target window 2, to determine a first measurement result. The first measurement result includes: a received power (received power 1a for short) of the reference signal 1 in the first window 1a of the second target window 1, a received power (received power 1b for short) of the reference signal 1 in the first window 1b of the second target window 1, a received power (received power 1c for short) of the reference signal 1 in the first window 1c of the second target window 1, a received power (received power 2a for short) of the reference signal 2 in the first window 2a of the second target window 2, a received power (received power 2b for short) of the reference signal 2 in the first window 2b of the second target window 2, and a received power (received power 2c for short) of the reference signal 2 in the first window 2c of the second target window 2.

S504: The second device determines, based on the first measurement result, whether a beam failure instance occurs.

For example, the second device determines, based on the received powers of the N reference signals, whether the beam failure occurs.

Optionally, the N reference signals include the third reference signal. If the second device does not detect the third reference signal (or does not detect the first control information including the indication information of the third reference signal) in one first window, the second device determines that the received power of the third reference signal in the first window is 0.

Alternatively, optionally, the N reference signals include the third reference signal. If the second device does not detect the third reference signal (or does not detect the first control information including the indication information of the third reference signal) in one second window of a second target window corresponding to the third reference signal, the second device determines that the received power of the third reference signal in the second window is 0.

In a possible design solution, S504 includes: The second device determines, at a first moment based on the first measurement result, whether all the N reference signals meet a first condition; and if all the N reference signals meet the first condition, determines that the beam failure instance occurs; or if not all the N reference signals meet the first condition, determines that the beam failure instance does not occur.

Optionally, the first condition includes: Before the first moment, a received power of a second reference signal in at least one first window of the first target window is less than or equal to a first threshold, or before the first moment, an average received power of the second reference signal in the at least one first window included in the first target window is less than or equal to a second threshold.

Optionally, the second reference signal is any one of the N reference signals.

For example, the average received power may be an average value of the received powers, or may be a weighted average value.

For example, the first threshold and the second threshold are preset, and values of the first threshold and the second threshold may be the same or may be different. This is not limited in this application.

For example, the first moment may be one of a plurality of periodic moments. To be specific, the second device may periodically check whether a beam failure occurs. A periodicity of the first moment may be the same as a periodicity of the first target window or one second target window, or may be different from the periodicity of the first target window or any second target window.

For example, a quantity of first windows in the at least one first window may be configured or pre-configured by a higher layer, and a quantity of second windows in the at least one second window may be configured or pre-configured by the higher layer.

With reference to the example corresponding to FIG. 6 in S503, if the first moment is an end position of the slot 11, and the quantity of the at least one first window is 2, the second device determines, based on the two first windows before the first moment, whether a beam failure occurs. For details, refer to the following (1) to (4).

(1) If the received power 1b, the received power 1c, the received power 2b, and the received power 2c are all less than or equal to the first threshold, it is determined that the beam failure instance occurs. Otherwise, it is determined that no beam failure instance occurs.

(2) Alternatively, if an average value or a weighted average value of the received power 1b and the received power 1c is less than or equal to the second threshold, and an average value or a weighted average value of the received power 2b and the received power 2c is less than or equal to the second threshold, it is determined that the beam failure instance occurs. Otherwise, it is determined that no beam failure instance occurs.

(3) If a value of any received power in the received power 1b, the received power 1c, the received power 2b, and the received power 2c is greater than the first threshold, it is determined that no beam failure instance occurs. Otherwise, it is determined that the beam failure instance occurs.

(4) Alternatively, if an average value or a weighted average value of the received power 1b and the received power 1c is greater than the second threshold, and/or an average value or a weighted average value of the received power 2b and the received power 2c is greater than the second threshold, it is determined that no beam failure instance occurs. Otherwise, it is determined that the beam failure instance occurs.

Alternatively, optionally, the first condition includes: Before the first moment, a received power of a second reference signal in at least one second window of a second target window corresponding to the second reference signal is less than or equal to a third threshold, or an average received power of a second reference signal in at least one second window included in the second target window corresponding to the second reference signal is less than or equal to a fourth threshold.

For example, the third threshold and the fourth threshold are preset, and values of the third threshold and the fourth threshold may be the same or may be different. This is not limited in this application.

With reference to the example corresponding to FIG. 8 in S503, if the first moment is an end position of the slot 11, and the quantity of the at least one second window is 2, the second device determines, based on the received power 1b of the reference signal 1 in the second window 1b before the first moment, the received power 1c of the reference signal 1 in the second window 1c before the first moment, the received power 2b of the reference signal 2 in the second window 2b before the first moment, and the received power 2c of the reference signal 2 in the second window 2c before the first moment, whether a beam failure occurs. For details, refer to the following (5) to (8).

(5) If the received power 1b, the received power 1c, the received power 2b, and the received power 2c are all less than or equal to the third threshold, it is determined that the beam failure instance occurs. Otherwise, it is determined that no beam failure instance occurs.

(6) Alternatively, if an average value or a weighted average value of the received power 1b and the received power 1c is less than or equal to the fourth threshold, and an average value or a weighted average value of the received power 2b and the received power 2c is less than or equal to the fourth threshold, it is determined that the beam failure instance occurs. Otherwise, it is determined that no beam failure instance occurs.

(7) If a value of any received power in the received power 1b, the received power 1c, the received power 2b, and the received power 2c is greater than the third threshold, it is determined that no beam failure instance occurs. Otherwise, it is determined that the beam failure instance occurs.

(8) Alternatively, if an average value or a weighted average value of the received power 1b and the received power 1c is greater than the fourth threshold, and/or an average value or a weighted average value of the received power 2b and the received power 2c is greater than the fourth threshold, it is determined that no beam failure instance occurs. Otherwise, it is determined that the beam failure instance occurs.

Optionally, the beam failure may be understood as a beam failure at a physical layer. After determining that the beam failure occurs, the second device may report the beam failure instance to the higher layer, and the higher layer of the second device may maintain a second counter to count a quantity of beam failures. When a quantity of beam failures occurred within a period of time reaches a specific preset value, the higher layer determines that a beam failure event (beam failure event) occurs, to trigger a beam failure recovery process, for example, restart beam sweeping or beam training.

According to the method shown in FIG. 5, the first device and the second device perform beam failure detection in the first target window or the N second target windows. Compared with an existing technology in which a reference signal is detected at a fixed time point, in this application, the reference signals are detected in the first target window or the second target windows including a plurality of time points, so that a time range for detecting the reference signals is increased. Even if a resource used by the first device to send a reference signal at a time point in the first target window or the N second target windows is preempted, if the first device continues to send the reference signal at a subsequent time point in the first target window or the N second target windows, a receiving device can still normally detect the reference signal, so that impact on the beam failure detection caused by uncertainty of a position of a resource for sending the reference signal can be reduced, thereby improving accuracy of beam failure detection.

**In** this application, one of the method shown in FIG. 3a, the method shown in FIG. 4a, and the method shown in FIG. 5 may be selected for separate use, or the methods may be used in combination. For example, when finding, by performing the method shown in FIG. 3a or FIG. 4a, that available reference signal resources in a first resource pool are insufficient, the first device and the second device may perform beam failure detection by performing the method shown in FIG. 5. Alternatively, when finding, by performing the method shown in FIG. 3a or FIG. 4a, that available reference signal resources in a first resource pool are insufficient, the first device and the second device may select to perform beam failure detection on a part of beams by performing the method shown in FIG. 3a or FIG. 4a, and perform beam failure detection on a remaining part of the beams by performing the method shown in FIG. 5. A combination of the methods should be understood as a simple extension of this application.

In this application, unless otherwise specified, for same or similar parts in embodiments, reference may be made to each other. In embodiments of this application and the implementations/methods/implementation methods in embodiments, unless otherwise specified or if there is a logic conflict, terms and/or descriptions are consistent and may be mutually referenced between different embodiments and between the implementations/methods/implementation methods in embodiments. Technical features in different embodiments and the implementations/methods/implementation methods in embodiments may be combined to form a new embodiment, implementation, method, or implementation method based on an internal logical relationship of the technical features. The foregoing descriptions are implementations of this application, but are not intended to limit the protection scope of this application.

The foregoing describes in detail the signal sending method provided in embodiments of this application with reference to FIG. 1 to FIG. 10. The following describes in detail a communication apparatus provided in embodiments of this application with reference to FIG. 11 to FIG. 13.

FIG. 11 is a diagram of a structure of a communication apparatus that may be configured to perform an embodiment of this application.

The communication apparatus 1100 may be a first device or a second device, or may be a chip used in the first device or the second device or another component having a corresponding function. As shown in FIG. 11, the communication apparatus 1100 may include a processor 1101. Optionally, the communication apparatus 1100 may further include either or both of a memory 1102 and a transceiver 1103. The processor 1101 and either or both of the memory 1102 and the transceiver 1103 may be coupled, for example, may be connected through a communication bus. Alternatively, the processor 1101 may be used independently.

The following specifically describes components of the communication apparatus 1100 with reference to FIG. 11.

The processor 1101 is a control center of the communication apparatus 1100, and may be one processor or may be a collective name of a plurality of processing elements. For example, the processor 1101 may be one or more central processing units (central processing units, CPUs) or an application-specific integrated circuit (application-specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

The processor 1101 may perform various functions of the communication apparatus 1100 by running or executing a software program stored in the memory 1102 and invoking data stored in the memory 1102.

During specific implementation, in an embodiment, the processor 1101 may include one or more CPUs, for example, a CPU 0 and a CPU 1 shown in FIG. 11.

During specific implementation, in an embodiment, the communication apparatus 1100 may alternatively include a plurality of processors, for example, the processor 1101 shown in FIG. 11 and a processor 1104. Each of the processors may be a single-core processor (single-CPU) or a multi-core processor (multi-CPU). The processor herein may be one or more communication devices, circuits, and/or processing cores configured to process data (for example, computer program instructions).

Optionally, the memory 1102 may be a read-only memory (read-only memory, ROM) or another type of static storage communication device that can store static information and instructions, a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage communication device, or any other medium that can be configured to carry or store expected program code in a form of an instruction or a data structure and that can be accessed by a computer, but is not limited thereto. The memory 1102 may be integrated with the processor 1101, or may exist independently, and is coupled to the processor 1101 through an input/output port (not shown in FIG. 11) of the communication apparatus 1100. This is not specifically limited in this embodiment of this application.

For example, the input port may be configured to implement one or more receiving functions performed by the first device or the second device in any one of the foregoing method embodiments, and the output port may be configured to implement one or more sending functions performed by the first device or the second device in any one of the foregoing method embodiments.

The memory 1102 may be configured to store a software program for performing the solutions of this application, and the processor 1101 controls execution. For a specific implementation, refer to the foregoing method embodiments. Details are not described herein again.

Optionally, the transceiver 1103 is configured to communicate with another communication apparatus. For example, when the communication apparatus 1100 is the first device, the transceiver 1103 may be configured to communicate with the second device or the like. For another example, when the communication apparatus 1100 is the second device, the transceiver 1103 may be configured to communicate with the first device or the like. In addition, the transceiver 1103 may include a receiver and a transmitter (which are not separately shown in FIG. 11). The receiver is configured to implement a receiving function, and the transmitter is configured to implement a sending function. The transceiver 1103 may be integrated with the processor 1101, or may exist independently, and is coupled to the processor 1101 through an input/output port (not shown in FIG. 11) of the communication apparatus 1100. This is not specifically limited in this embodiment of this application.

It should be noted that the structure of the communication apparatus 1100 shown in FIG. 11 does not constitute a limitation on the communication apparatus. An actual communication apparatus may include more or fewer components than those shown in the figure, combine some components, or have a different component arrangement.

The actions of the first device or the second device in FIG. 1 to FIG. 10 may be performed by the processor 1101 in the communication apparatus 1100 shown in FIG. 11 by invoking application program code stored in the memory 1102, to separately instruct the first device or the second device to perform the actions. This is not limited in this embodiment.

When the communication apparatus is the first device or the second device, the communication apparatus 1100 may separately perform any one or more of the possible design manners of the first device or the second device in the foregoing method embodiments.

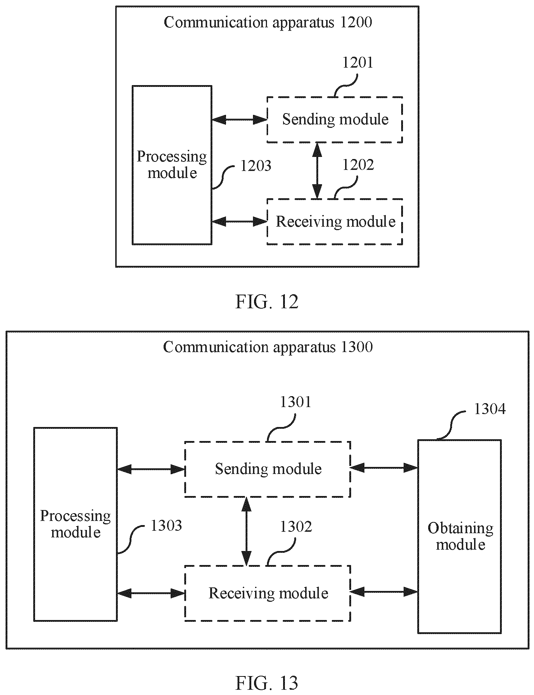

FIG. 12 is a diagram of a structure of another communication apparatus according to an embodiment of this application. For ease of descriptions, FIG. 12 shows only main components of the communication apparatus.

The communication apparatus 1200 may include a sending module 1201, a receiving module 1202, and/or a processing module 1203.

For example, when the communication apparatus 1200 is the first device in the foregoing method embodiments, the communication apparatus 1200 may include the sending module 1201 and the processing module 1203, and may further include the receiving module 1202.

For example, when the communication apparatus 1200 is the second device in the foregoing method embodiments, the communication apparatus 1200 may include the receiving module 1202 and the processing module 1203, and may further include the sending module 1201.

The communication apparatus 1200 may be the first device or the second device in the foregoing method embodiments. The sending module 1201 may also be referred to as a sending unit, and is configured to implement any one or more sending functions performed by the first device or the second device in any one of the foregoing method embodiments. The receiving module 1202 may also be referred to as a receiving unit, and is configured to implement any one or more receiving functions performed by the first device or the second device in any one of the foregoing method embodiments.

It should be noted that the sending module 1201 and the receiving module 1202 may be separately disposed, or may be integrated into one module, namely, a transceiver module. Specific implementations of the receiving module and the sending module are not specifically limited in this application. The transceiver module may include a transceiver circuit, a transceiver machine, a transceiver, or a communication interface.

Optionally, the communication apparatus 1200 may further include a storage module (not shown in FIG. 12). The storage module stores a program or instructions. When the processing module 1203 executes the program or the instructions, the communication apparatus 1200 is enabled to perform the method in any one of the foregoing method embodiments.

The processing module 1203 may be configured to implement one or more processing functions performed by the first device or the second device in any one of the foregoing method embodiments. The processing module 1203 may be a processor.

FIG. 13 is a diagram of a structure of still another communication apparatus according to an embodiment of this application. For ease of description, FIG. 13 shows only main components of the communication apparatus.

The communication apparatus 1300 may include a sending module 1301, a receiving module 1302, an obtaining module 1304, and/or a processing module 1303.

For example, when the communication apparatus 1300 is the second device in the foregoing method embodiments, the communication apparatus 1300 may include the obtaining module 1304 and the processing module 1303, and may further include the sending module 1301 and/or the receiving module 1302.

The communication apparatus 1300 may be the second device in the foregoing method embodiments. The sending module 1301 may also be referred to as a sending unit, and is configured to implement any one or more sending functions performed by the second device in any one of the foregoing method embodiments. The receiving module 1302 may also be referred to as a receiving unit, and is configured to implement any one or more receiving functions performed by the second device in any one of the foregoing method embodiments.

It should be noted that the sending module 1301 and the receiving module 1302 may be separately disposed, or may be integrated into one module, namely, a transceiver module. Specific implementations of the receiving module and the sending module are not specifically limited in this application. The transceiver module may include a transceiver circuit, a transceiver machine, a transceiver, or a communication interface.

Optionally, the communication apparatus 1300 may further include a storage module (not shown in FIG. 13). The storage module stores a program or instructions. When the processing module 1303 or the obtaining module 1304 executes the program or the instructions, the communication apparatus 1300 is enabled to perform the method in any one of the foregoing method embodiments.

The processing module 1303 may be configured to implement one or more processing functions performed by the second device in any one of the foregoing method embodiments. The processing module 1303 may be a processor. The obtaining module 1304 may be configured to implement one or more obtaining functions performed by the second device in any one of the foregoing method embodiments. The obtaining module 1304 and the processing module 1303 may be a same module, or may be different modules.

In this embodiment, the communication apparatus 1200 or the communication apparatus 1300 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 1200 or the communication apparatus 1300 may be in a form of the communication apparatus 1100 shown in FIG. 11.

For example, the processor 1101 in the communication apparatus 1100 shown in FIG. 11 may invoke computer-executable instructions stored in the memory 1102, so that the method in the foregoing method embodiments is performed.

Specifically, functions/implementation processes of the sending module 1201, the receiving module 1202, the sending module 1301, and the receiving module 1302 may be implemented by the transceiver 1103 in the communication apparatus 1100 shown in FIG. 11. Functions/implementation processes of the processing module 1203, the storage module, the processing module 1303, and the storage module may be implemented by the processor 1101 in the communication apparatus 1100 shown in FIG. 11 by invoking the computer-executable instructions stored in the memory 1102.

Because the communication apparatus 1200 and the communication apparatus 1300 provided in this embodiment may perform the foregoing methods, for technical effects that can be achieved by the communication apparatus 1200 and the communication apparatus 1300, refer to the foregoing method embodiments. Details are not described herein again.

In a possible design solution, the communication apparatus 1200 shown in FIG. 12 may be used in the system shown in FIG. 1, and perform the functions of the first device in the methods shown in FIG. 3a to FIG. 4b.

The processing module 1203 is configured to determine N reference signal resources. The sending module 1201 is configured to send N reference signals to a second device on the N reference signal resources. A first sidelink resource pool is configured for the communication apparatus 1200. The first sidelink resource pool includes K reference signal resources. The K reference signal resources are K periodic reference signal resources. The K reference signal resources include the N reference signal resources, where K is an integer greater than or equal to N.

It should be noted that all related content of the steps in the foregoing method embodiments may be cited in the functional descriptions of the corresponding functional module. Details are not described herein again.

In addition, for technical effects of the communication apparatus 1200, refer to the technical effects of the methods shown in FIG. 3a to FIG. 4b. Details are not described herein again.

In a possible design solution, the communication apparatus 1200 shown in FIG. 12 may be used in the system shown in FIG. 1, and perform the functions of the second device in the methods shown in FIG. 3a to FIG. 4b.

The processing module 1203 is configured to determine N reference signal resources. The receiving module 1202 is configured to receive N reference signals from a first device on the N reference signal resources. A first sidelink resource pool is configured for the communication apparatus 1200. The first sidelink resource pool includes K reference signal resources. The K reference signal resources are K periodic reference signal resources. The K reference signal resources include the N reference signal resources, where N is an integer greater than 0, and K is an integer greater than or equal to N.

It should be noted that all related content of the steps in the foregoing method embodiments may be cited in the functional descriptions of the corresponding functional module. Details are not described herein again.

In addition, for technical effects of the communication apparatus 1200, refer to the technical effects of the methods shown in FIG. 3a to FIG. 4b. Details are not described herein again.

In a possible design solution, the communication apparatus 1300 shown in FIG. 13 may be used in the system shown in FIG. 1, and perform the functions of the second device in the methods shown in FIG. 5 to FIG. 10.

The obtaining module 1304 is configured to detect N reference signals in a first target window or N second target windows, to determine a first measurement result. The processing module 1303 is configured to determine, based on the first measurement result, whether a beam failure instance occurs. The first measurement result includes measurement results of the N reference signals. The N second target windows are in one-to-one correspondence with N second spatial domain parameters. The N reference signals are in one-to-one correspondence with the N second spatial domain parameters, and the N second spatial domain parameters are spatial domain parameters on which the communication apparatus is to perform beam failure detection.

It should be noted that all related content of the steps in the foregoing method embodiments may be cited in the functional descriptions of the corresponding functional module. Details are not described herein again.

In addition, for technical effects of the communication apparatus 1300, refer to the technical effects of the methods shown in FIG. 5 to FIG. 10. Details are not described herein again.

In a possible design solution, the communication apparatus 1200 shown in FIG. 12 may be used in the system shown in FIG. 1, and perform the functions of the first device in the methods shown in FIG. 5 to FIG. 10.

The processing module 1203 is configured to determine a first target window or N second target windows. The sending module 1201 is configured to send N reference signals to a second device by using N first spatial domain parameters. Resources used to send the N reference signals are in the first target window or the N second target windows. The first target window includes at least one periodic first window. The N reference signals are in one-to-one correspondence with the N first spatial domain parameters. The N first spatial domain parameters are spatial domain parameters on which the communication apparatus is to perform beam failure detection.

It should be noted that all related content of the steps in the foregoing method embodiments may be cited in the functional descriptions of the corresponding functional module. Details are not described herein again.

**In** addition, for technical effects of the communication apparatus 1200, refer to the technical effects of the methods shown in FIG. 5 to FIG. 10. Details are not described herein again.

An embodiment of this application provides a communication system. The communication system includes a first device and a second device. The communication system may further include a third device.

The first device is configured to perform the actions of the first device in the foregoing method embodiments, the second device is configured to perform the actions of the second device in the foregoing method embodiments, and the third device is configured to perform the actions of the third device in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement a processing function in the method provided in embodiments of this application, and the input/output port may be configured to implement receiving and sending functions in the method provided in embodiments of this application.

For example, the input port may be configured to implement the receiving function in the method provided in embodiments of this application, and the output port may be configured to implement the sending function in the method provided in embodiments of this application.

For example, the processor in the communication apparatus 1100 may be configured to perform, for example, but not limited to, baseband-related processing, and the transceiver in the communication apparatus 1100 may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system-on-chip (system-on-chip). Whether components are independently disposed on different chips or are integrated and disposed on one or more chips usually depends on specific requirements of a product design. Specific implementations of the foregoing components are not limited in this embodiment.

In a possible design, the chip system further includes a memory, and the memory is configured to store program instructions and data for implementing the functions in the method provided in embodiments of this application.

The chip system may include a chip, or may include the chip and another discrete component.

An embodiment of this application provides a computer-readable storage medium. The computer-readable storage medium stores a computer program or instructions. When the computer program or the instructions are run on a computer, the method provided in embodiments of this application is performed.

An embodiment of this application provides a computer program product. The computer program product includes a computer program or instructions. When the computer program or the instructions are run on a computer, the method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example but not limitative description, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When the software is used to implement the foregoing embodiments, the embodiments may be implemented completely or partially in a form of a computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one (piece) of a, b, or c may represent: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, units and algorithm steps in the examples described in combination with embodiments disclosed in this specification may be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for detailed working processes of the foregoing system, apparatus, and unit, refer to the corresponding processes in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, the functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to an existing technology, or a part of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal sending method, comprising:

   determining, by a first device, N reference signal resources, wherein a first sidelink resource pool is configured for the first device, the first sidelink resource pool comprises K reference signal resources, the K reference signal resources are K periodic reference signal resources, the K reference signal resources comprise the N reference signal resources, N is an integer greater than 0, and K is an integer greater than or equal to N; and
   sending, by the first device, N reference signals to a second device on the N reference signal resources.

2. The method according to claim 1, wherein the N reference signal resources are used for beam failure detection, the N reference signal resources are in one-to-one correspondence with N first spatial domain parameters, and the N first spatial domain parameters are spatial domain parameters on which the first device is to perform beam failure detection.

3. The method according to claim 1 or 2, wherein the determining, by a first device, N reference signal resources comprises:

determining, by the first device, the N reference signal resources based on first sensing information, first indication information, and/or second indication information, wherein the first sensing information is obtained by the first device in a first manner, and the first manner comprises receiving and measuring a reference signal on a part or all of the K reference signal resources; the first indication information indicates at least one reference signal resource recommended by the second device in the K reference signal resources, or the first indication information indicates at least one reference signal resource not recommended by the second device in the K reference signal resources; and the second indication information indicates at least one reference signal resource occupied by a third device in the K reference signal resources.

4. The method according to claim 3, wherein the determining, by the first device, the N reference signal resources based on first sensing information, first indication information, and/or second indication information comprises:

determining, by the first device, N reference signal resource sets based on the first sensing information, the first indication information, and/or the second indication information, wherein the N reference signal resource sets are in one-to-one correspondence with the N first spatial domain parameters, and each of the N reference signal resource sets comprises at least one of the K reference signal resources; and
selecting, by the first device, one reference signal resource from each of the N reference signal resource sets.

5. The method according to claim 3 or 4, wherein the first indication information further indicates a first spatial domain parameter associated with each of the at least one reference signal resource recommended by the second device, or the first indication information further indicates a first spatial domain parameter associated with each of the at least one reference signal resource not recommended by the second device.

6. The method according to claim 4 or 5, wherein the method further comprises:
receiving, by the first device, the second indication information by using one of the N first spatial domain parameters, wherein the second indication information is used to determine a reference signal resource set corresponding to the first spatial domain parameter used to receive the second indication information.

7. The method according to any one of claims 3 to 6, wherein the receiving and measuring a reference signal on a part or all of the K reference signal resources comprises: receiving and measuring the reference signal on the part or all of the K reference signal resources by using the N first spatial domain parameters.

8. The method according to claim 7, wherein the receiving and measuring the reference signal on the part or all of the K reference signal resources by using the N first spatial domain parameters comprises: receiving and measuring the reference signal on the part or all of the K reference signal resources in a first resource window by using the N first spatial domain parameters, wherein the first resource window comprises M reference signal resource periodicities, M is an integer greater than or equal to 1, each of the M reference signal resource periodicities comprises at least one first time unit, one of the at least one first time unit is a time unit in which the K reference signal resources are located, and each of the M reference signal resource periodicities corresponds to at least one of the N first spatial domain parameters.

9. The method according to claim 8, wherein a correspondence between each of the M reference signal resource periodicities and the at least one of the N first spatial domain parameters is determined based on a quantity of spatial domain parameters that are capable of being simultaneously used when the first device receives a signal.

10. The method according to claim 9, wherein an $X^{th}$ reference signal resource periodicity in the M reference signal resource periodicities corresponds to $\left(Mod\left(X - 1 + C, \left\lceil\frac{N}{V_1}\right\rceil\right) \times V_1 + 1\right)^{th}$ to $\left(\min\left(\left(Mod\left(X - 1 + C, \left\lceil\frac{N}{V_1}\right\rceil\right) + 1\right) \times V_1, N\right)\right)^{th}$ first spatial domain parameters in the N first spatial domain parameters, or an $X^{th}$ reference signal resource periodicity in the M reference signal resource periodicities corresponds to $(Mod((X-1) \times V_1 + 1 + C, N))^{th}$ to $(Mod((X-1) \times V_1 + V_1 + C, N))^{th}$ first spatial domain parameters in the N first spatial domain parameters, wherein $V_1$ is the quantity of spatial domain parameters that are capable of being simultaneously used when the first device receives the signal, and C is a configured or pre-configured integer.

11. The method according to any one of claims 1 to 10, wherein before the sending, by the first device, N reference signals to a second device on the N reference signal resources, the method further comprises:
sending, by the first device, third indication information to the second device, wherein the third indication information indicates the N reference signal resources.

12. The method according to claim 11, wherein the third indication information further indicates the N first spatial domain parameters corresponding to the N reference signal resources.

13. The method according to any one of claims 1 to 12, wherein the K reference signal resources are determined based on first configuration information, and the first configuration information comprises time-domain position information of the K reference signal resources and frequency-domain position information of the K reference signal resources.

14. A signal receiving method, comprising:

determining, by a second device, N reference signal resources, wherein a first sidelink resource pool is configured for the second device, the first sidelink resource pool comprises K reference signal resources, the K reference signal resources are K periodic reference signal resources, the K reference signal resources comprise the N reference signal resources, N is an integer greater than 0, and K is an integer greater than or equal to N; and
receiving, by the second device, N reference signals from a first device on the N reference signal resources.

15. The method according to claim 14, wherein the N reference signal resources are used for beam failure detection, the N reference signal resources are in one-to-one correspondence with N second spatial domain parameters, and the N second spatial domain parameters are spatial domain parameters on which the second device is to perform beam failure detection.

16. The method according to claim 14 or 15, wherein the determining, by a second device, N reference signal resources comprises:
receiving, by the second device, third indication information from the first device, wherein the third indication information indicates the N reference signal resources.

17. The method according to claim 16, wherein the third indication information further indicates N first spatial domain parameters corresponding to the N reference signal resources, and the N first spatial domain parameters are in one-to-one correspondence with the N second spatial domain parameters.

18. The method according to claim 17, wherein the third indication information comprises identifiers of the N reference signal resources and identifiers of N first reference signal resources, and each of the N reference signal resources and one of the N first reference signal resources have a type-D quasi co-location relationship; or
the third indication information comprises identifiers of the N reference signal resources and identifiers of the N first spatial domain parameters, and the N reference signal resources are in one-to-one correspondence with the N first spatial domain parameters.

19. The method according to any one of claims 14 to 18, wherein before the receiving, by the second device, N reference signals from a first device on the N reference signal resources, the method further comprises:
sending, by the second device, first indication information to the first device, wherein the first indication information indicates at least one reference signal resource recommended by the second device in the K reference signal resources, or the first indication information indicates at least one reference signal resource not recommended by the second device in the K reference signal resources.

20. The method according to claim 19, wherein the first indication information comprises indication information of the N reference signal resources, and the first indication information indicates the first device to send a reference signal on the N reference signal resources.

21. The method according to claim 19 or 20, wherein the first indication information further indicates a first spatial domain parameter associated with each of the at least one reference signal resource recommended by the second device, or the first indication information further indicates a first spatial domain parameter associated with each of the at least one reference signal resource not recommended by the second device.

22. The method according to any one of claims 19 to 21, wherein before the sending, by the second device, first indication information to the first device, the method further comprises:
receiving and measuring, by the second device, a reference signal on a part or all of the K reference signal resources, to determine the first indication information.

23. The method according to any one of claims 14 to 22, wherein the method further comprises:
sending, by the second device, fourth indication information, wherein the fourth indication information indicates at least one reference signal resource occupied by the second device in the N reference signal resources.

24. A signal receiving method, comprising:

detecting, by a second device, N reference signals in a first target window or N second target windows, to determine a first measurement result, wherein the first measurement result comprises measurement results of the N reference signals, the N reference signals are in one-to-one correspondence with N second spatial domain parameters, and the N second spatial domain parameters are spatial domain parameters on which the second device is to perform beam failure detection; and
determining, by the second device based on the first measurement result, whether a beam failure instance occurs.

25. The method according to claim 24, wherein the first target window comprises at least one periodic first window, and each first window comprised in the first target window corresponds to the N second spatial domain parameters; or each of the N second target windows comprises at least one periodic second window, and the N second target windows are in one-to-one correspondence with the N second spatial domain parameters.

26. The method according to claim 24 or 25, wherein the determining, by the second device based on the first measurement result, whether a beam failure instance occurs comprises:

determining, by the second device at a first moment based on the first measurement result, whether all the N reference signals meet a first condition; and if all the N reference signals meet the first condition, determining that the beam failure instance occurs; or if not all the N reference signals meet the first condition, determining that the beam failure instance does not occur, wherein
the first condition comprises: a received power of a second reference signal in at least one first window of the first target window is less than or equal to a first threshold before the first moment, or an average received power of a second reference signal in at least one first window comprised in the first target window is less than or equal to a second threshold before the first moment, wherein the second reference signal is any one of the N reference signals; or
the first condition comprises: before the first moment, a received power of a second reference signal in at least one second window of a second target window corresponding to the second reference signal is less than or equal to a third threshold, or an average received power of a second reference signal in at least one second window comprised in the second target window corresponding to the second reference signal is less than or equal to a fourth threshold.

27. The method according to any one of claims 24 to 26, wherein the detecting, by a second device, N reference signals in a first target window or N second target windows, to determine a first measurement result comprises:

if the second device detects first control information in one first window of the first target window, and the first control information comprises indication information of a third reference signal, detecting, by the second device by using a second spatial domain parameter corresponding to the third reference signal, the third reference signal on a time-frequency resource on which the third reference signal is located, to determine a measurement result of the third reference signal, wherein the third reference signal is one of the N reference signals; or
if the second device detects first control information in one second window of the N second target windows, and the first control information comprises indication information of a third reference signal, detecting, by the second device by using a second spatial domain parameter corresponding to the third reference signal, the third reference signal on a time-frequency resource on which the third reference signal is located, to determine a measurement result of the third reference signal.

28. The method according to claim 27, wherein the first control information, the third reference signal, and first data information are frequency division multiplexed and/or time division multiplexed in a first time unit, and the first control information indicates whether the first data information is dummy data information.

29. The method according to any one of claims 24 to 28, wherein the first target window or the N second target windows are determined by the second device based on second configuration information, and the second configuration information indicates the first target window or the second configuration information indicates the N second target windows.

30. The method according to claim 29, wherein the second configuration information further indicates reference signal identifiers of the N reference signals and/or a correspondence between the N reference signals and the N second spatial domain parameters, or the second configuration information further indicates reference signal identifiers of the N reference signals, a correspondence between the N reference signals and the N second target windows, and/or a correspondence between the N reference signals and the N second spatial domain parameters.

31. The method according to claim 29 or 30, wherein the second configuration information indicates the first target window, and the second configuration information comprises a first start position, a first window length, and a first periodicity interval, wherein the first window length is a length of the first window, the first periodicity interval is an interval between start positions of two adjacent first windows in the at least one first window, the first start position and the first periodicity interval are used to determine a start position of each of the at least one first window, and the first start position, the first window length, and the first periodicity interval are used to determine an end position of each of the at least one first window.

32. The method according to claim 29 or 30, wherein the second configuration information indicates the first target window, and the second configuration information comprises a first start position, a first end position, and a first periodicity interval, wherein the first periodicity interval is an interval between start positions of two adjacent first windows in the at least one first window, the first start position and the first periodicity interval are used to determine a start position of each of the at least one first window, and the first end position and the first periodicity interval are used to determine an end position of each of the at least one first window.

33. The method according to claim 29 or 30, wherein the second configuration information indicates the N second target windows, and the second configuration information comprises N second start positions, N second window lengths, and N second periodicity intervals, wherein the N second window lengths are lengths of the second window in the N second target windows, one of the N second periodicity intervals is an interval between start positions of two adjacent second windows in one second target window, the N second start positions and the N second periodicity intervals are used to determine start positions of second windows in the N second target windows, and the N second start positions, the N second window lengths, and the N second periodicity intervals are used to determine end positions of the second windows in the N second target windows.

34. The method according to claim 29 or 30, wherein the second configuration information indicates the N second target windows, and the second configuration information comprises N second start positions, N second end positions, and N second periodicity intervals, wherein one of the N second periodicity intervals is an interval between start positions of two adjacent second windows in one second target window, the N second start positions and the N second periodicity intervals are used to determine start positions of second windows in the N second target windows, and the N end positions and the N second periodicity intervals are used to determine end positions of the second windows in the N second target windows.

35. The method according to claim 33, wherein the second window lengths respectively corresponding to the N second target windows are the same.

36. The method according to any one of claims 33 to 35, wherein the second periodicity intervals respectively corresponding to the N second target windows are the same.

37. The method according to any one of claims 29 to 36, wherein the method further comprises:

sending, by the second device, the second configuration information to a first device; or
receiving, by the second device, the second configuration information from a first device.

38. The method according to any one of claims 25 to 37, wherein each of the at least one first window comprises at least two time subunits, or each of the at least one second window comprises at least two time subunits.

39. A signal sending method, comprising:

determining, by a first device, a first target window or N second target windows; and

sending, by the first device, N reference signals to a second device by using N first spatial domain parameters, wherein resources for sending the N reference signals are in the first target window or the N second target windows, the N reference signals are in one-to-one correspondence with the N first spatial domain parameters, and the N first spatial domain parameters are spatial domain parameters on which the first device is to perform beam failure detection.

40. The method according to claim 39, wherein the first target window comprises at least one periodic first window, and each first window comprised in the first target window corresponds to the N first spatial domain parameters; or each of the N second target windows comprises at least one periodic second window, and the N second target windows are in one-to-one correspondence with the N first spatial domain parameters.

41. The method according to claim 39 or 40, wherein the method further comprises:

determining, by the first device in the first target window based on a sensing manner or a random selection manner, reference signal resources respectively corresponding to the N reference signals; or

determining, by the first device in the N second target windows based on a sensing manner or a random selection manner, reference signal resources respectively corresponding to the N reference signals.

42. The method according to any one of claims 39 to 41, wherein the N reference signals comprise a third reference signal, and the sending, by the first device, N reference signals to a second device by using N first spatial domain parameters comprises:

sending, by the first device, the third reference signal, first control information, and first data information to the second device by using one of the N first spatial domain parameters, wherein the third reference signal, the first control information, and the first data information are frequency division multiplexed and/or time division multiplexed in a first time unit, and the first control information comprises indication information of the third reference signal.

43. The method according to claim 42, wherein the first control information indicates whether the first data information is dummy data information.

44. The method according to any one of claims 39 to 43, wherein the first target window or the N second target windows are determined by the first device based on second configuration information, and the second configuration information indicates the first target window or the second configuration information indicates the N second target windows.

45. The method according to claim 44, wherein the second configuration information further indicates reference signal identifiers of the N reference signals and/or a correspondence between the N reference signals and the N first spatial domain parameters, or the second configuration information further indicates reference signal identifiers of the N reference signals, a correspondence between the N reference signals and the N second target windows, and/or a correspondence between the N reference signals and the N first spatial domain parameters.

46. The method according to claim 44 or 45, wherein the second configuration information indicates the first target window, and the second configuration information comprises a first start position, a first window length, and a first periodicity interval, wherein the first window length is a length of the first window, the first periodicity interval is an interval between start positions of two adjacent first windows in the at least one first window, the first start position and the first periodicity interval are used to determine a start position of each of the at least one first window, and the first start position, the first window length, and the first periodicity interval are used to determine an end position of each of the at least one first window.

47. The method according to claim 44 or 45, wherein the second configuration information indicates the first target window, and the second configuration information comprises a first start position, a first end position, and a first periodicity interval, wherein the first periodicity interval is an interval between start positions of two adjacent first windows in the at least one first window, the first start position and the first periodicity interval are used to determine a start position of each of the at least one first window, and the first end position and the first periodicity interval are used to determine an end position of each of the at least one first window.

48. The method according to claim 44 or 45, wherein the second configuration information indicates the N second target windows, and the second configuration information comprises N second start positions, N second window lengths, and N second periodicity intervals, wherein the N second window lengths are lengths of the second window in the N second target windows, one of the N second periodicity intervals is an interval between start positions of two adjacent second windows in one second target window, the N second start positions and the N second periodicity intervals are used to determine start positions of second windows in the N second target windows, and the N second start positions, the N second window lengths, and the N second periodicity intervals are used to determine end positions of the second windows in the N second target windows.

49. The method according to claim 44 or 45, wherein the second configuration information indicates the N second target windows, and the second configuration information comprises N second start positions, N second end positions, and N second periodicity intervals, wherein one of the N second periodicity intervals is an interval between start positions of two adjacent second windows in one second target window, the N second start positions and the N second periodicity intervals are used to determine start positions of second windows in the N second target windows, and the N end positions and the N second periodicity intervals are used to determine end positions of the second windows in the N second target windows.

50. The method according to claim 48, wherein the second window lengths respectively corresponding to the N second target windows are the same.

51. The method according to any one of claims 48 to 50, wherein the second periodicity intervals respectively corresponding to the N second target windows are the same.

52. The method according to any one of claims 44 to 49, wherein the method further comprises:

sending, by the first device, the second configuration information to the second device; or
receiving, by the first device, the second configuration information from the second device.

53. The method according to any one of claims 40 to 52, wherein each of the at least one first window comprises at least two time subunits, or each of the at least one second window comprises at least two time subunits.

54. A communication apparatus, wherein the communication apparatus comprises a unit or a module configured to perform the method according to any one of claims 1 to 13.

55. A communication apparatus, wherein the communication apparatus comprises a unit or a module configured to perform the method according to any one of claims 14 to 23.

56. A communication apparatus, wherein the communication apparatus comprises a unit or a module configured to perform the method according to any one of claims 24 to 38.

57. A communication apparatus, wherein the communication apparatus comprises a unit or a module configured to perform the method according to any one of claims 39 to 53.

58. A communication apparatus, wherein the communication apparatus comprises a processor, and the processor is configured to perform the method according to any one of claims 1 to 53.

59. A communication system, wherein the communication system comprises the communication apparatus according to claim 54 and the communication apparatus according to claim 55, or the communication system comprises the communication apparatus according to claim 56 and the communication apparatus according to claim 57.

60. A computer-readable storage medium, wherein the computer-readable storage medium stores a computer program or instructions, and when the computer program or the instructions are run on a computer, the method according to any one of claims 1 to 53 is performed.

61. A computer program product, wherein the computer program product comprises a computer program or instructions, and when the computer program or the instructions are run on a computer, the method according to any one of claims 1 to 53 is performed.

Network
device

First
device

Second
device

FIG. 1

Reflector

Reflection
path

Reflection
path

Transmit
beam 2

Receive
beam 2

Sending
device

Transmit
beam 1

Direct path

Receive
beam 1

Receiving
device

FIG. 2

First
device

Second
device

S301: Determine N reference
signal resources in K reference
signal resources

S307: Third indication information

S308: Send N reference signals on
the N reference signal resources

FIG. 3a

S302: The first device determines first configuration information

S303: The first device determines the N reference signal resources based on a sensing result of a first manner, first indication information, and/or second indication information

FIG. 3b

S303

S303a: The first device determines N reference signal resource sets based on first sensing information, the first indication information, and/or the second indication information

S303b: The first device selects one reference signal resource from each of the N reference signal resource sets

FIG. 3c

S303

S304: The first device determines, in the first manner, whether a part or all of the K reference signal resources are occupied

S305: The first device receives the first indication information from the second device

S306: The first device receives the second indication information from a third device, and the first device determines, based on the second indication information, whether the part or all of the K reference signal resources are occupied

FIG. 3d

FIG. 3e

FIG. 3f

FIG. 3g

EP 4 546 850 A1

First device

Second device

S402: Determine first configuration information

S404: Determine first indication information in a second manner

S405: Sixth indication information

S403: First indication information

S401: Determine N reference signal resources

S408: Send N reference signals on the N reference signal resources

FIG. 4a

S406: The first device determines, in a first manner, whether a part or all of K reference signal resources are occupied

S407: The first device receives second indication information from a third device, and the first device determines, based on the second indication information, whether the part or all of the K reference signal resources are occupied

FIG. 4b

75

First
device

Second
device

S501: Determine a first target
window or N second target
windows

S501: Determine the first target
window or the N second target
windows

S502: Send N reference
signals by using N first
spatial domain parameters

S503: Detect the N reference
signals in the first target window
or the N second target windows,
to obtain a first measurement
result

S504: Determine, based on the
first measurement result, whether
a beam failure instance occurs

FIG. 5

1$^{st}$ periodicity          2$^{nd}$ periodicity          3$^{rd}$ periodicity

First window a          First window b          First window c

First target
window

Slot    0        ⋯      3    4      ⋯      7    8      ⋯      11

FIG. 6

1$^{st}$ periodicity          2$^{nd}$ periodicity          3$^{rd}$ periodicity

First window a          First window b          First window c

First target
window

Slot    0        ⋯      3    4      ⋯      7    8      ⋯      11

FIG. 7

76

FIG. 8

FIG. 9

FIG. 10

FIG. 11

FIG. 12

FIG. 13

## INTERNATIONAL SEARCH REPORT

International application No.

**PCT/CN2023/105906**

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

DWPI, ENTXT, CNKI, CNTXT: 参考信号, 侧行链路, 直连, 空域, 参数, 指示, 周期, RS, resource, set, SL, sidelink, beam failure, spatial

### C. DOCUMENTS CONSIDERED TO BE RELEVANT

| Category* | Citation of document, with indication, where appropriate, of the relevant passages | Relevant to claim No. |
|---|---|---|
| X | CN 109644455 A (BEIJING XIAOMI MOBILE SOFTWARE CO., LTD.) 16 April 2019 (2019-04-16)<br>description, paragraphs [0005]-[0056] | 1-23, 54, 55, 58-61 |
| X | WO 2021062832 A1 (HUAWEI TECHNOLOGIES CO., LTD.) 08 April 2021 (2021-04-08)<br>description paragraphs [0100]-[0011] | 24-53, 56-61 |
| A | CN 111132204 A (CHENGDU HUAWEI TECHNOLOGIES CO., LTD.) 08 May 2020 (2020-05-08)<br>entire document | 1-61 |
| A | CN 112118037 A (CHINA MOBILE COMMUNICATION CO., LTD., RESEARCH INSTITUTE et al.) 22 December 2020 (2020-12-22)<br>entire document | 1-61 |
| A | WO 2019141011 A1 (ZTE CORP.) 25 July 2019 (2019-07-25)<br>entire document | 1-61 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 September 2023** | **18 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/105906**

| Patent document cited in search report | | | Publication date (day/month/year) | Patent family member(s) | | | Publication date (day/month/year) |
|---|---|---|---|---|---|---|---|
| CN | 109644455 | A | 16 April 2019 | US | 2022015067 | A1 | 13 January 2022 |
| | | | | EP | 3890246 | A1 | 06 October 2021 |
| | | | | WO | 2020107346 | A1 | 04 June 2020 |
| WO | 2021062832 | A1 | 08 April 2021 | CN | 114041321 | A | 11 February 2022 |
| CN | 111132204 | A | 08 May 2020 | WO | 2020088565 | A1 | 07 May 2020 |
| CN | 112118037 | A | 22 December 2020 | WO | 2020253880 | A1 | 24 December 2020 |
| | | | | CN | 115473557 | A | 13 December 2022 |
| WO | 2019141011 | A1 | 25 July 2019 | CN | 108260214 | A | 06 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210836784

- CN 202211340675